# EUROPEAN PATENT SPECIFICATION

(11) **EP 0 457 187 B1**
(45) Date of publication and mention of the grant of the patent: **22.03.2000**
(21) Application number: 91107517.4
(22) Date of filing: 08.05.1991
(51) Int. Cl.: B29C 65/08, B23K 20/10, B06B 3/00

(54) **Ultrasonic rotary horn and application of same**
Drehende Ultraschalltrichteranordnung und ihre Anwendung
Trompe à ultrasons rotatif et son application

(30) Priority: 18.05.1990 US 525523; 18.05.1990 US 525507
(43) Date of publication of application: 21.11.1991
(60) Divisional application: 98121219.4
(73) Proprietor: KIMBERLY-CLARK WORLDWIDE, INC., Neenah, Wisconsin 54956 (US)
(72) Inventor: Neuwirth, Joseph George, Cumming, GA 30130 (US); Ehlert, Thomas David, Neenah, WI 54956 (US); Stegelmann, Norman Rudolf, Appleton, WI 54915 (US)
(74) Representative: DIEHL GLAESER HILTL & PARTNER

(56) References cited:
- CH-A- 671 529
- DE-A- 1 704 178
- FR-A- 2 082 090
- US-A- 3 017 792
- US-A- 3 217 957
- US-A- 3 955 740

## Description

The present invention relates to an ultrasonic rotary horn.

The use of ultrasonic energy to bond and/or cut thermoplastic materials on a continuous basis is well established, with one of the earliest references being British Patent No. 1,018,971 to Bull which issued in 1966. Applications include the continuous seaming or point bonding of roll goods (Canadian Patent No. 1,092,052 to USS Engineers and Consultants, Inc.), the ultrasonic bonding of materials to form a pattern in a multilayer web which subsequently is cut out of the web (U.S. Patent No. 3,562,041 to Robertson), the sealing of the ends of individual absorbent products (U.S. Patent No. 3,677,861 to Knauf), the patterned lamination of webs of nonwoven fabric, fiberfill, and woven shell fabric to produce mattress pads and bedspreads (U.S. Patent No. 3,733,238 to Long et al.), and the simultaneous bonding and cutting of two webs to form gloves (U.S. Patent No. 3,939,033 to Grgach et al.).

Many applications of ultrasonic energy for the bonding and/or cutting of thermoplastic materials involve ultrasonic horns or tools which are stationary (i.e., nonrotating), in which the direction of application of the horn working surface is coincident with the direction of the applied mechanical vibrations. Such horns most commonly are stepped cylinders or stepped blades. Thus, the working surface of the horn is moved axially against a rigid anvil of suitable design, with the materials to be bonded or cut being positioned between the horn and the anvil.

In an interesting variation of the rigid horn configuration, one reference is known which discloses a horn which does not come in contact with the materials to be bonded. See U.S. Patent No. 4,668,316 to Sager.

Another configuration, which is more conducive to continuous high-speed bonding operations, is that of a stationary horn and a rotating anvil; see, by way of illustration, U.S. Patent Nos. 3,562,041, 3,733,238, and 3,939,033, infra, U.S. Patent Nos. 3,844,869 to Rust, Jr. (apparatus for ultrasonic welding of sheet materials), 3,993,532 to McDonald et al. (ultrasonic sealing pattern roll, i.e., patterned rotating anvil), and 4,659,614 to Vitale (ultrasonically bonded nonwoven fabric through the use of a patterned rotating anvil), and German Published Patent Application No. 2,259,203 to J. H. Benecke GmbH (improvement of physical properties of nonwoven materials by ultrasonic bonding). In this configuration, the materials to be bonded are passed continuously between the horn and the rotating anvil. The linear velocity of the materials typically is equal to the tangential velocity of the working surface of the rotating anvil. See, also, U.S. Patent No. 3,575,752 to Carpenter in which a rigid anvil is employed immediately before a drive drum.

Although the use of a rotating anvil was a significant improvement in continuous bonding processes involving the application of ultrasonic energy, such use has some inherent limitations which adversely affect line speed and bonding quality. It is, of course, necessary to continuously pass the materials to be bonded between the narrow gap formed by the rotating anvil and the rigid, stationary horn. This often leads to a damming effect at the leading edge of the horn, as well as to possible compression variations due to nonuniformities in material thickness. Hence, there is created a stick-slip condition which strongly influences the efficiency of acoustic energy transfer. This greatly affects the resulting bond quality which in turn limits line speeds. This phenomenon also limits the compressible bulk or thickness of the materials to be bonded.

One approach to diminish the extent of these limitations has been the development of the arcuate profiled horn which gives a progressive convergent-divergent gap. See, for example, U.S. Patent No. 4,404,052 to Persson et al. Another approach has been to orient a modified stepped-blade horn parallel with and between the sheets to be bonded as shown in U.S. Patent No. Re. 33,063 to Obeda. It is apparent, however, that as long as a stationary horn is used, the problems associated with movement of the materials to be bonded past the horn cannot be eliminated entirely in view of the fact that intimate contact is necessary for efficient acoustic energy transfer.

The approach which appears to have received the most attention is the use of a rotating (rotary) horn in conjunction with a rotating anvil. Such a configuration is best described as two or more cylindrical surfaces which are in close proximity to each other and rotating in opposite directions with equal tangential velocities. The materials to be bonded pass between the cylindrical surfaces at a linear velocity which is equal to the tangential velocities of such surfaces. Thus, the opportunity for damming and stick-slip is virtually eliminated.

The concept of an ultrasonic rotary horn, typically used in conjunction with a rotating anvil for the bonding of a variety of materials, is, of course, well known. See, by way of illustration, U.S. Patent Nos. 3,017,792 to Elmore et al. (vibratory device), 3,217,957 to Jarvie et al. (welding apparatus), 3,224,915 to Balamuth et al. (method of joining thermoplastic sheet material by ultrasonic vibrations), 3,272,682 to Balamuth et al. (apparatus for joining thermoplastic sheet material), 3,455,015 to Daniels et al. (ultrasonic welding method and apparatus), 3,623,926 to Sager (method and apparatus for the assembly of thermoplastic members), 3,955,740 to Shoh (vibratory seam welding apparatus), 4,252,586 to Scott (method and apparatus for the manufacture of slide fastener stringer with folded and bonded continuous molded coupling elements), 4,333,791 to Onishi (ultrasonic seam welding apparatus), and 4,473,432 Leader et al. (dot heat stapling); Russian Patent Nos. 178,656 (ultrasonic seam welder), 272,020 (ultrasonic seam welding unit), 277,524 (ultrasonic metal welder), 524,699 (ultrasonic seam welder for plastics), 670,406 (apparatus for ultrasonic seam welding), and 785,051 (equipment for seam welding polymeric materials); Japanese Published Patent Application Nos. 51-69578 (oscillator system for continuous ultrasonic welding of plastic) and 58-42049 (continuous ultrasonic jointing device for photographic papers); French Patent No. 1,459,687 (ultrasonic welding of an aluminum foil onto a glass sheet - see also Japanese Patent No. 42-22222); German Published Patent Application No. 3,147,255 to Licentia Patent-Verwaltungs-GmbH (apparatus for welding solar cell contacts and connectors); and Australian Patent No. 260,888 to Knudsen et al. (ultrasonic welding rollers for use in making a metal container).

Nonbonding applications involving rotary horns also are known, some examples of which are included here for completeness: U.S. Patent Nos. 3,096,672 to Jones (vibrating roll and method), 3,292,838 to Farley (rotating sonic welder), 3,550,419 to Fox et al. (methods and apparatus for metal rolling), 3,620,061 to Cunningham et al. (design of ultrasonic transducers for use with rolling mill rolls), 3,678,720 to Dickey et al. (roller leveler and method of leveling), and 3,908,808 to Busker (ultrasonic calendaring of paper webs).

One commercially available bonding system employing an ultrasonic rotary horn is known. This system, manufactured by Mecasonic, a French firm (available from Mecasonic-KLN, Inc., Fullerton, California), exploits the so-called Poisson coupling effect. Maximum radial displacement is achieved at a region of minimal longitudinal displacement which is one-quarter wavelength from the free end of a one-wavelength circular shaft that is ultrasonically excited longitudinally, i.e., along its axis, by a piezoelectric crystal assembly. An ultrasonic rotary horn which appears to be essentially the same as the Mecasonic horn is described in Japanese Published Patent Application No. 51-69578, mentioned earlier. See also European Patent Application No. 88402437.3, Publication No. 0 313 425 A1 to Société Mecasonic, which describes the use of the Mecasonic horn in conjunction with a rotating anvil or support to smooth freshly stitched seams in flexible materials.

Other ultrasonic horns showing characteristics similar to those of the Mecasonic horn are described in FR-A-2 082 090 and DE-A-1 704 178. Both horns transform a longitudinal vibration into a radial vibration. The horns have a geometrical size such that the length thereof is greater than the maximum diameter of the horns. A similar ultrasonic horn is also disclosed in US-A-3,955,740, showing the features according to preamble of claim 1. Said horn comprises a radial mode resonating disc contacting a workpiece at a nodal region of the horn. The workpiece engaging surface of the horn undergoes vibratory motion normal to the workpiece surface.

The larger diameter or disk portion of the horn is situated at a longitudinal node where the radial displacement of the disk portion is maximum, i.e., at the radial antinode. The entire length of the horn is equal to one wavelength and the shorter distance from the center of the disk portion to the free or nondriven end of the horn is one-quarter wavelength. Upon subjecting the horn to ultrasonic excitation at the driven end, when the source of excitation moves toward the driven end of the horn, the entire horn moves longitudinally away from the source of excitation while the radial surface moves inwardly. When the source of excitation moves away from the driven end, the entire horn moves toward it while the radial surface moves outwardly. While the radial motion is at a maximum at the center of the disk portion, it diminishes rapidly in either direction across the surface of the disk portion with increasing distance from the longitudinal node (radial antinode). In cases where bond strength is at least in part a function of amplitude, this variation in amplitude must result in a variation in bond strength. Hence, the useful width of the disk portion may be reduced to something less than the actual width of 30 mm if a uniform bond strength is desired across the width of the bond zone. Such nonuniformity clearly is undesirable unless the minimum bond strength achieved will withstand the stresses placed upon the bond zone.

Thus, there is a need for an improved ultrasonic rotary horn which can be operated at an excitation frequency of from about 18 to about 60 kHz and which will provide a relatively wide bonding or other processing span with relatively constant amplitude characteristics across the width of the radial surface, and improved performance, as well as other beneficial characteristics. The invention, in order to meet with these needs, provides an ultrasonic rotary horn according to independent claims 1 and 2. Further advantageous features and advantages of the horn are evident from the dependent claims, description, examples and drawings. The invention also provides special types of use of the horn according to independent claim 18. Further applications of the horn are evident from the dependent claims and the description. The invention further provides an apparatus for ultrasonical bonding according to independent claim 20. Further features and details of this apparatus are evident from the dependent claims, the description, examples and drawings.

The invention also provides an ultrasonic rotary horn having unique characteristics when operated at a frequency in the range of from about 18 to about 60 kHz. The present invention also relates to an improvement in such horn, which improvement relates to the configuration of the ends of the horn.

It therefore is an aspect of the present invention to provide an improved ultrasonic rotary horn which can be operated at an excitation frequency of from about 18 to about 60 kHz.

Another aspect of the present invention is to provide an improved ultrasonic rotary horn having the capability of having an effective radial surface wider than about 2.5 cm.

Yet another aspect of the present invention is to provide an improved ultrasonic rotary horn having the capability of having an effective radial surface wider than about 2.5 cm, which surface has a relatively constant radial amplitude profile.

Another aspect of the present invention is to provide an improved ultrasonic rotary horn having an effective radial surface width of up to about 13 cm, which surface has a relatively constant radial amplitude profile.

A further aspect of the present invention is to provide an improved ultrasonic rotary horn having the capability of having an effective radial surface wider than about 2.5 cm, with the ratio of the radial amplitude at the radial surface to the longitudinal amplitude applied to the horn having the capability of being at least about one across the width of the radial surface of the horn.

Yet a further aspect of the present invention is to provide an improved ultrasonic rotary horn having an effective radial surface width of about 13 cm, with the ratio of the average radial amplitude at the radial surface to the longitudinal amplitude applied to the horn being at least about one across the width of the radial surface of the horn.

Still another aspect of the present invention is to provide an improved ultrasonic rotary horn which, upon being excited by ultrasonic energy which is input at, and substantially perpendicular to, one or both ends along the rotational axis of said horn, is adapted to resonate in a manner such that the movement of the excited end and the movement of the opposing end, whether or not it is actively excited, are out of phase; the radial surface of the horn moves out of phase with the movement of the excited end; and the horn exhibits a single nodal point at its geometric center.

These and other aspects will be apparent to one having ordinary skill in the art from a consideration of the specification and claims which follow.

Accordingly, the present invention provides an ultrasonic rotary horn intended to be excited at a frequency of from about 18 to about 60 kHz, which horn comprises a shaped, solid metal object having a radial surface terminated by a first end and a second end, and a rotational axis, in which each of said ends is defined by a surface and said object is axially symmetrical, whereby diameter, width, and thickness are selected for a desired frequency so that said horn, upon being excited by ultrasonic energy at such frequency which is input at the rotational axis at, and substantially perpendicular to, one or both ends, is adapted to resonate in a manner such that:
(1) the excited end moves substantially in phase with the movement of the source of excitation;
(2) the opposing end, whether or not it is actively excited, moves substantially out of phase with the movement of the excited end;
(3) said radial work-contacting surface also moves substantially out of phase with the movement of the excited end; and
(4) said horn exhibits a single nodal point at its geometric center,
the rotary horn having a diameter that is greater than the width of the horn, characterized by:
(A) the diameter of said horn being in the range of from about 4 cm to about 19 cm;
(B) the width of said horn at said radial surface being from about 0.6 cm to about 13 cm;
(C) the thickness of said horn at the rotational axis thereof being from about 0.6 cm to about 15 cm and being independent of the width of said horn at said radial surface;
(D) said horn having a mass in the range of from about 0.06 kg to about 30 kg;
(E) said horn having a shape of a right circular cylindrical section;
(F) the diameter, width and thickness being selected so that the horn has a substantial disk-like shape; and
(G) the width of said horn at the radial surface and the thickness of said horn being such that the amplitude profile is essentially flat over the width of said radial surface;
whereby a horn having a thickness greater than or the same as the diameter of said horn is excluded.

In another preferred embodiment, an ultrasonic rotary horn is provided having a shape of a frustum with a curvilinear surface intended to be excited at a frequency of from about 18 to about 60 kHz, which horn comprises a shaped, solid metal object having a radial surface terminated by a first end and a second end, and a rotational axis, in which each of said ends is defined by a surface and said object is axially symmetrical, whereby diameter, width, and thickness are selected for a desired frequency so that said horn, upon being excited by ultrasonic energy at such frequency which is input at the rotational axis at, and substantially perpendicular to, one or both ends, is adapted to resonate in a manner such that:
(1) the excited end moves substantially in phase with the movement of the source of excitation;
(2) the opposing end, whether or not it is actively excited, moves substantially out of phase with the movement of the excited end;
(3) said radial work-contacting surface also moves substantially out of phase with the movement of the excited end; and
(4) said horn exhibits a single nodal point at its geometric center,
the rotary horn having a diameter that is greater than the width of the horn, characterized by:
(A) the diameter of said horn being in the range of from about 4 cm to about 19 cm;
(B) the width of said horn at said radial surface being from about 0.6 cm to about 13 cm;
(C) the thickness of said horn at the rotational axis thereof being from about 0.6 cm to about 15 cm and being independent of the width of said horn at said radial surface;
(D) said horn having a mass in the range of from about 0.06 kg to about 30 kg;
(E) the diameter, width and thickness being selected so that the horn has a substantial disk-like shape; and
(F) the width of said horn at the radial surface and the thickness of said horn being such that the amplitude profile is essentially flat over the width of said radial surface,
whereby a horn having a thickness greater than or the same as the diameter of said horn is excluded.

The present invention further provides, in an apparatus for ultrasonically bonding two or more materials together, or otherwise ultrasonically processing a material, which apparatus comprises an ultrasonic rotary horn intended to be excited at a frequency of from about 18 to about 60 kHz, a vibrator means for providing a source of longitudinal mechanical vibration coupled to one or both ends of said horn, optionally through an elongated waveguide, support means for said ultrasonic rotary horn, drive means for rotating said ultrasonic rotary horn, and a rotatable anvil in close proximity to said ultrasonic rotary horn, the improvement which comprises employing as said ultrasonic rotary horn a horn according to the present invention.

In certain preferred embodiments, said radial surface has a profile as defined hereinafter which is substantially linear, in which case the horn may be described as a right circular cylindrical section. In other preferred embodiments, said radial surface has a profile which is nonlinear, in which case the horn may be described as a frustrum with a curvilinear surface.

In still other preferred embodiments, the ultrasonic rotary horn of the present invention includes hubs on each of the two ends. In other preferred embodiments, the hubs are integral parts of the horn. In other preferred embodiments, the horn includes threaded studs which protrude from the ends or from the hubs, if present. In yet other preferred embodiments, the studs are integral parts of the horn. In still other preferred embodiments, an elongated waveguide is employed which is an integral part of the horn. In further preferred embodiments, the ends of the horn are substantially concave or substantially convex.

In yet other preferred emobodiments, the first end and the second end of the horn have a substantially concave configuration which comprises a central, circular, flat portion which is concentric with said rotational axis and a generally convex portion from said flat portion to said radial surface, in which:
(a) the diameter of said flat portion is at least about 20 percent of the diameter of the horn;
(b) said generally convex portion is a curved surface having axial symmetry and a curvilinear profile in cross-section through said rotational axis which lies in the triangular area defined by (i) a straight line leading from the outer boundary of said flat portion to the edge of said radial surface; (ii) a straight line which is parallel with the rotational axis and which begins at the outer boundary of said flat portion; and (iii) a straight line which is perpendicular to the rotational axis and which extends from the edge of said radial surface to said straight line parallel with the rotational axis;
(c) the horn has a variance of no more than about 20 percent across said radial surface; and
(d) the ratio of the average radial amplitude to the longitudinal amplitude is at least 1.

The ultrasonic rotary horn of the present invention is particularly useful in continuous bonding and/or cutting processes, such as bonding together two or more layers of thermoplastic materials, e.g., woven and nonwoven fabrics and films; ultrasonically perforating a material; and the like.
FIGS. 1-14, inclusive, are diagrammatic representations of various embodiments of the ultrasonic rotary horn of the present invention.
FIG. 15 is a diagrammatic end view representation of one embodiment of the ultrasonic rotary horn of the present invention illustrating the variables of three different equations which can be used to determine the curvature of the substantially concave ends.
FIG. 16 is a diagrammatic representation of an ultrasonic rotary horn similar to that of FIG. 7 and illustrates the dimensional parameters of the horn.
FIG. 17 is a diagrammatic representation of a commercially available ultrasonic rotary horn which identifies the dimensional parameters of the horn.
FIG. 18 is a diagrammatic representation of the experimental set-up and equipment required to measure the acoustical and mechanical properties of ultrasonic rotary horns, e.g., a horn of the present invention, represented by FIG. 16, and a commercially available horn, represented by FIG. 17.
FIGS. 19 and 20 illustrate the points at which measurements were taken to determine the acoustical and mechanical properties of the horns represented by FIGS. 16 and 17, respectively.
FIGS. 21 and 22 illustrate the definitions for "in phase" and "out of phase" for the horns represented by FIGS. 16 and 17, respectively, which definitions are employed in the descriptions of the acoustical and mechanical properties of the two horns.
FIG. 23 consists of the plots of the radial amplitude profiles of the work-contacting surfaces of the ultrasonic rotary horns represented by FIGS. 16 and 17.
FIG. 24 is a plot of the gravest mode resonant frequency of a 20 kHz ultrasonic rotary horn of the present invention versus the diameter of the horn and illustrates the parametric dependence of frequency upon horn diameter.
FIG. 25 is a plot similar to that of FIG. 24, except that the variables are resonant frequency and horn mass; the figure illustrates the relative effect on frequency when varying mass by changing either horn diameter or horn width.
FIG. 26 is a diagrammatic representation of the experimental set-up and equipment required to determine the mode shapes of the horns of FIGS. 16 and 17.
FIGS. 27 and 28 illustrate the points at which measurements were taken to determine the mode shapes of the horns represented by FIGS. 16 and 17, respectively.
FIG. 29 is a two-dimensional, diagrammatic representation of the mode shape of a horn of the present invention, i.e., the horn represented by FIG. 16.
FIG. 30 is a two-dimensional, diagrammatic representation of the mode shape of a commercially available horn, i.e., the horn represented by FIG. 17.
FIG. 31 is a plot of the average gain versus horn width for a series of horns similar to that of FIG. 16, i.e., horns of the present invention.
FIG. 32 is a diagrammatic representation of an ultrasonic rotary horn similar to that of FIG. 10 and illustrates the dimensional parameters of the horn.
FIG. 33 illustrates the points at which measurements were taken to determine the acoustical and mechanical properties of the horn represented by FIG. 32.
FIG. 34 consists of the plots of the radial amplitude profile of the work-contacting surface of the ultrasonic rotary horn represented by FIG. 32 at each of three separate booster combinations.
FIG. 35 is a diagrammatic representation of an ultrasonic rotary horn similar to that of FIG. 11 and illustrates the dimensional parameters of the horn. FIG. 36 illustrates the points at which measurements were taken to determine the acoustical and mechanical properties of the horn represented by FIG. 35.
FIG. 37 is a plot of the gravest mode resonant frequency of a 40 kHz ultrasonic rotary horn of the present invention versus the diameter of the horn and illustrates the parametric dependence of frequency upon horn diameter.
FIG. 38 is a diagrammatic representation of an ultrasonic rotary horn similar to that of FIG. 6 and illustrates the dimensional parameters of the horn.
FIG. 39 illustrates the points at which measurements were taken to determine the acoustical and mechanical properties of the horn represented by FIG. 38.
FIG. 40 is an end-view diagrammatic representation illustrating the dimensional parameters of a preferred embodiment of the ultrasonic rotary horn of the present invention, which embodiment relates to the configuration of the ends of the horn.
FIG. 41 is an end-view diagrammatic representation of the upper right one-fourth of the horn of FIG. 40 and indicates the profile of the end in cross-section through the rotational axis of the horn.
FIG. 42 is a plot of the percent of maximum amplitude across the radial surface of the horn of FIG. 40 versus distance from the driven end.

As used herein, the terms "bonding" and "welding" are synonymous and simply refer to the substantially permanent joining of at least one layer of a material with another layer of a like or different material. The nature of the materials to be bonded is not known to be critical. However, the present invention is particularly useful in the bonding of two or more layers of materials selected from the group consisting of woven fabrics, nonwoven fabrics, and films which preferably are made at least in part from thermoplastic polymers. As noted earlier, the present invention also is useful in processes involving the ultrasonic perforation of a material.

It should be apparent that adequate bonding can be achieved by a variety of mechanisms. For example, the bond can result from the partial or complete melting in the bonding zone of all of the materials to be bonded. In this case, there is partial or complete fusion in the bonding area of such materials. Alternatively, the bond can result from the partial or complete melting of one of the materials to be bonded, with the partially or completely melted material flowing into or onto adjacent materials which in turn results in a mechanical interlocking of one material with another.

As used herein, the term "fabric" is used broadly herein to mean a sheet or web of a woven or nonwoven material which may be continuous, as in a roll, or discontinuous.

The term "gravest mode" is used herein to mean the most fundamental resonant mode of vibration for a particular geometry under a given set of conditions.

The term "amplitude" is used herein to mean the distance of maximum displacement of a surface upon excitation, or total peak-to-peak excursion. Such displacement or excursion is reported throughout this specification in microns. The term "efficiency" is used herein to mean amplitude per watt of input or excitation power and thus has the units, microns per watt.

The terms "amplitude ratio" and "horn gain" are used interchangeably herein to mean the ratio of the radial amplitude to the longitudinal amplitude. As applied to the ultrasonic rotary horn of the present invention, the radial amplitude is the amplitude of the radial surface of the horn and the longitudinal amplitude is the amplitude of an end. Unless specified otherwise, the longitudinal amplitude refers to the movement of the driven end. Because horn gain is a ratio of values having the same units, it is unitless.

The term "gain" or "booster gain" is used herein to mean the ratio of output longitudinal amplitude to input longitudinal amplitude of a booster. The term "total gain" refers to the combined gain of two boosters employed in combination. All three of these gain terms are, of course, unitless.

"Variance" is a convenient way of mathematically expressing an amplitude profile. It is a calculated value for the radial surface of the horn. Variance is calculated as the difference between the highest amplitude value and the lowest amplitude value divided by the highest value, times 100. Thus, variance is a percentage.

As used herein, the term "width" generally refers to the width of the radial surface or the thickness of the horn at the radial surface. The term "thickness" is used preferentially to refer to the width or thickness of the horn at the center or rotational axis of the horn. However, the terms occasionally are used more generally, but, if so used, the meanings will be clear from the context. Stated differently, unless another, broader meaning is clear from the context, each term will have the meaning specified above.

The term "substantially concave" is used in relation to a surface of an end of a preferred embodiment relating to the configuation of the ends to mean that no portion of such a surface extends outwardly beyond the plane defined by the radial surface edge closest to such surface, such plane being perpendicular to the longitudinal axis of the horn.

Turning now to the ultrasonic rotary horn of the present invention, the shaped, solid metal object which comprises the ultrasonic rotary horn of the present invention often is referred to herein as the horn of the present invention or, when permitted by the context, simply as "the horn" or "said horn" or variations thereof. A driven end is an end at which the cyclic mechanical excitation is applied at the rotational axis, either directly or through a stud, axle, and/or waveguide or booster. The term "other end" means only the remaining end, whether or not that end also is a driven end. Either end may be supported, either by a suitable support means or by a waveguide or booster. Moreover, both ends may be driven ends, in which case the relationships of the ends to each other and to other surfaces still hold true, and the claims are meant to be so interpreted.

It should be apparent that the terms "first end" and "second end" are synonymous with the terms "driven end" and "other end". The first pair of terms refer to the horn structurally, while the second pair refers to the horn functionally. Thus, the horn clearly has but two ends, i.e., a "first end" and a "second end", either or both of which may be a "driven end". If only one end is a driven end, then the second end is an "other end". If both ends are driven ends, the "other end" also is a "driven end".

Upon subjecting the horn of the present invention to ultrasonic mechanical excitation, assuming that there is but a single driven end, when the source of excitation moves toward the driven end of the horn, the driven end moves away from the source of excitation. Thus, the driven end moves inwardly toward the interior of the horn (or toward the other end). The other end, however, also moves inwardly toward the interior of the horn (or toward the driven end or the source of excitation). Although both ends are moving inwardly toward the interior of the horn, they are moving in opposite directions. Thus, the movements of the ends relative to each other are said to be out of phase. The movements of the ends would be in phase if they moved in the same direction, i.e., away from the source of excitation, as the source of excitation moves toward the horn. Consistent with the foregoing definition of "out of phase", the movements of the ends would be in phase if the ends moved in the same direction, e.g., away from the source of excitation as the source of excitation moves toward the horn. In this case, the driven end would move inwardly or toward the interior of the horn as the other end moves outwardly or away from the horn. The movement of the driven end, of course, always will be in phase with the movement of the source of excitation. Consequently, the movement of the other end always will be out of phase with the source of excitation.

When both ends are driven ends, it should be apparent to those having ordinary skill in the art that the movements of the ends with respect to each other must be synchronized with the movements just described in order to avoid imposing additional stresses within the horn.

As the source of excitation moves toward the horn with the concomitant motion of the driven end inwardly toward the interior of the horn, the movement of the radial surface of the horn of the present invention is outward or away from the rotational axis. This movement of the radial surface relative to the movement of the driven end is defined as out of phase. On the other hand, if the radial surface moved inwardly toward the rotational axis, that movement relative to the inward movement of the driven end would be defined as in phase.

It should be apparent to one having ordinary skill in the art that the above definitions of "out of phase" and "in phase" are arbitrary or subjective. What is important, however, is not the definitions selected, but how the definitions apply to different horns. This will be more evident from the examples where the movements of the radial surfaces and the driven ends are described in more detail.

Because of the movements of the ends and the radial surface of the horn of the present invention as just described, there is, when the horn is excited, a single nodal point where no motion of any kind takes place. This point lies on the rotational axis and is located at the geometric center of the horn. It is a significant distinguishing feature of the horn of the present invention.

The configuration of the radial surface of the ultrasonic rotary horn of the present invention typically is described herein as having a given profile. As so used, the term "profile" has reference to the line describing the radial surface when viewed in cross-section through the rotational axis of the horn. Thus, when the radial surface is flat, e.g., every point on the radial surface is equidistant from the rotational axis of the horn, the profile of the radial surface is said to be linear. Similarly, if the radial surface has been roughened, such as by grit blasting, plasma spraying, or textured chromium coating, but is otherwise substantially flat, the profile of the radial surface is substantially linear. If the radial surface is not flat, e.g., the surface has one or more raised areas (lands) or depressions (grooves or valleys), the profile is nonlinear. The term "nonlinear" is intended to be broad in scope and not limited to specific embodiments mentioned herein by way of illustration. Thus, if the profile is nonlinear, the radial surface can have distinct features, such as one or more lands or groves, or a smoothly or gradually changing curved surface, or some combination of distinct features and a gradually changing curved surface.

As already indicated, the ultrasonic rotary horn of the present invention comprises a shaped, solid metal object. In general, any metal having suitable acoustical and mechanical properties can be used. As a practical matter, however, the most suitable metals are aluminum, monel, titanium, and some alloy steels. If desired, the horn can be coated or plated with another metal to reduce abrasive wear. For applications requiring high amplitude and higher stress, titanium is preferred. In general, such variables as the diameter, mass, width, and thickness of the horn, and the configuration of the ends of the horn, are not critical, provided that such variables come within the ranges specified herein. Such variables are critical, however, if a horn is desired which will resonate in the gravest mode at a particular frequency and with a given amplitude. Stated differently, any horn coming within the specifications provided herein will vibrate in the gravest mode at a given frequency, but that given frequency may be lower or higher than the frequency desired or considered optimum for a particular application. Vibration in the gravest mode at the desired frequency is achieved by adjusting the diameter of the horn. The amplitude ratio or gain primarily is dependent upon the thickness:width ratio.

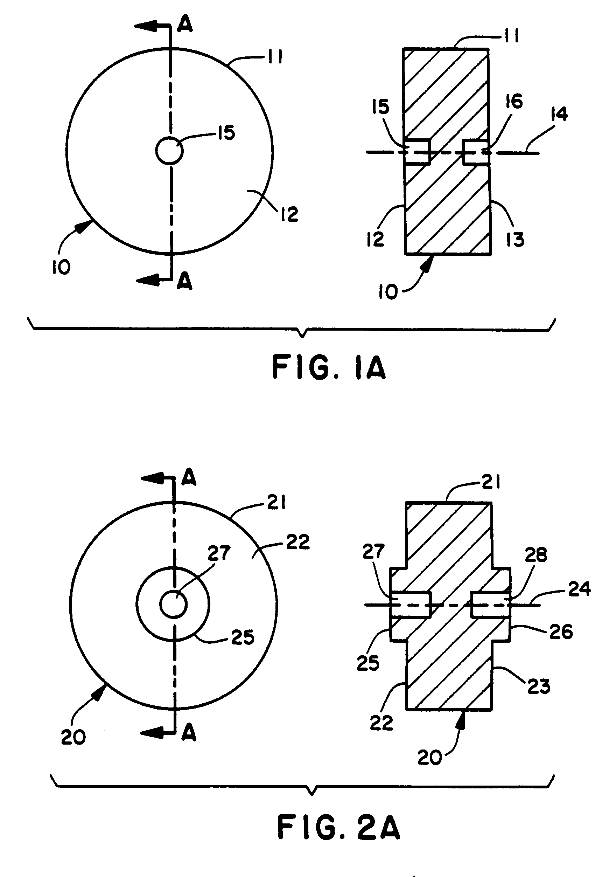

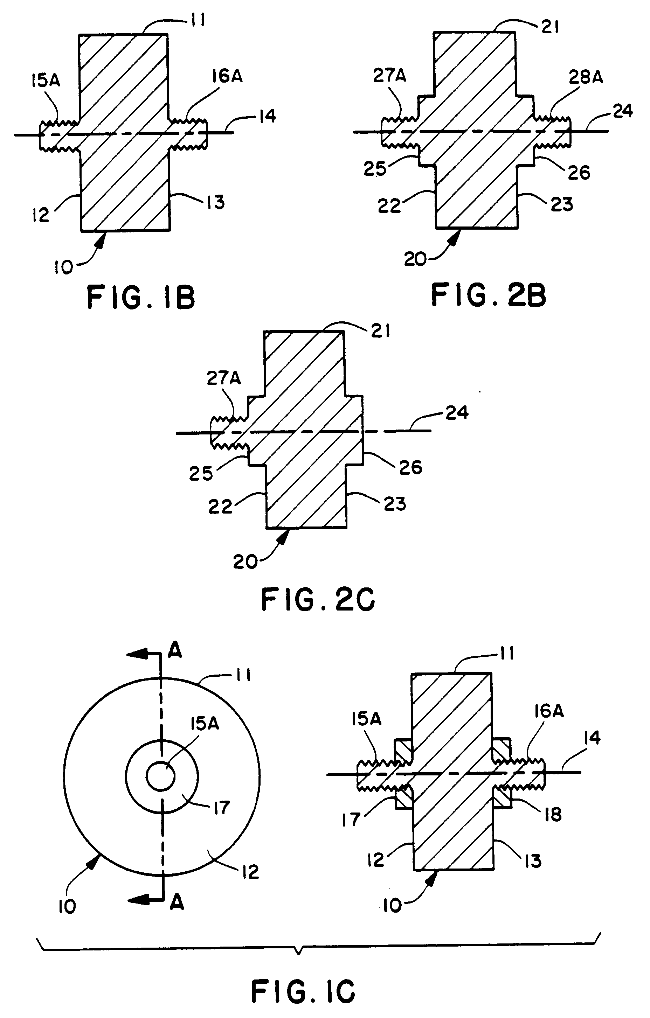

In its simplest form, the ultrasonic rotary horn of the present invention is represented diagrammatically by FIG. 1A which shows a plan view and a cross-sectional view along line A-A, as does each of Figures 1-15, inclusive. In FIG. 1A, horn 10 has a radial surface 11, first end 12, second end 13, and a circular cross-section as represented by end 12. Ends 12 and 13 are flat, parallel, and normal to the rotational axis 14 of horn 10. End 12 has cylindrical hole 15 and end 13 has cylindrical hole 16, each of which holes 15 and 16 is centered about rotational axis 14. Thus, holes 15 and 16 and ends 12 and 13 are concentric.

If desired, holes 15 and 16 can be threaded to accept studs or axles or studs can be welded or otherwise attached to horn 10. Alternatively, and preferably, protruding threaded studs are machined in place during the process of machining horn 10. If studs for mounting or attaching axles are not machined as an integral part of the horn, the life of the horn during use is significantly reduced.

The use of the term "integral part" with respect to any feature or component of the ultrasonic rotary horn of the present invention means that such feature or component is formed from the same piece of material as the horn so that there are no structural discontinuities between such feature or component and the horn. Thus, any feature or component which subsequently must be attached to the horn by any means is not an integral part of the horn.

Such preferred embodiment is illustrated by FIG. 1B which is a cross-sectional view along line A-A of FIG. 1A. Horn 10 is identical with the horn of FIG. 1A, except that in place of holes 15 and 16, threaded studs 15A and 16A, respectively, are present as integral parts of horn 10. Such studs are concentric with ends 12 and 13.

A variation of the horn shown in FIG. 1B is that illustrated by FIG. 1C which shows a plan view and a cross-sectional view along line A-A. Conceptually, horn 10 of FIG. 1C is horn 10 of FIG. 1B to which hubs 17 and 18 having a threaded hole through the thickness thereof are screwed onto studs 15A and 16A, respectively, to fit snugly against ends 12 and 13. Horn 10 and hubs 17 and 18 can be made from the same metal or different metals, although the use of the same metal is preferred.

It should be noted at this point that, although studs are preferred, they are shown only in FIGS. 1B, 1C, 2B, 2C, 7, and 8 in order to illustrate the variations which are possible with respect to the ultrasonic rotary horn of the present invention. The absence of studs in the other Figures, however, is not to be construed as in any way limiting the spirit or scope of the present invention.

If a hub is included on each end as an integral part of horn 10 of FIG. 1A, the ultrasonic rotary horn of FIG. 2A results. Thus, horn 20 has a radial surface 21, first end 22, second end 23, and a circular cross-section as represented by end 22. Ends 22 and 23 are flat, parallel, and normal to the rotational axis 24 of horn 20. End 22 has hub 25 and end 23 has hub 26. Each hub is circular and concentric with ends 22 and 23. Cylindrical holes 27 and 28 are located in hubs 25 and 26, respectively, centered about rotational axis 24. Hence, holes 27 and 28 and hubs 25 and 26 are concentric with ends 22 and 23. Although hubs 25 and 26 can be machined separately from horn 20 and welded or otherwise attached to ends 22 and 23, respectively, it is preferred that the hubs are machined as an integral part of horn 20, as shown in FIG. 2A.

It should be noted at this point that the horn thickness includes the thicknesses of the hubs, if present, but does not include the distance studs, if present, protrude from the surfaces of either the ends of the horn or the external surfaces of the hubs.

As with the horn of FIG. 1A, holes 27 and 28 can be threaded to accept studs or axles or studs can be welded or otherwise attached to hubs 25 and 26, respectively, of horn 20. Alternatively, and preferably, axles or studs are machined in place during the process of machining horn 20, an embodiment illustrated by FIG. 2B which is a cross-sectional view along line A-A of FIG. 2A. Horn 20 is identical with the horn of FIG. 2A, except that in place of holes 27 and 28, threaded studs 27A and 28A, respectively, are present as integral parts of horn 20. Such studs are concentric with ends 22 and 23. If neither hole 28 nor threaded stud 28A is present on end 23, the horn of FIG. 2C, shown in cross-section only, results.

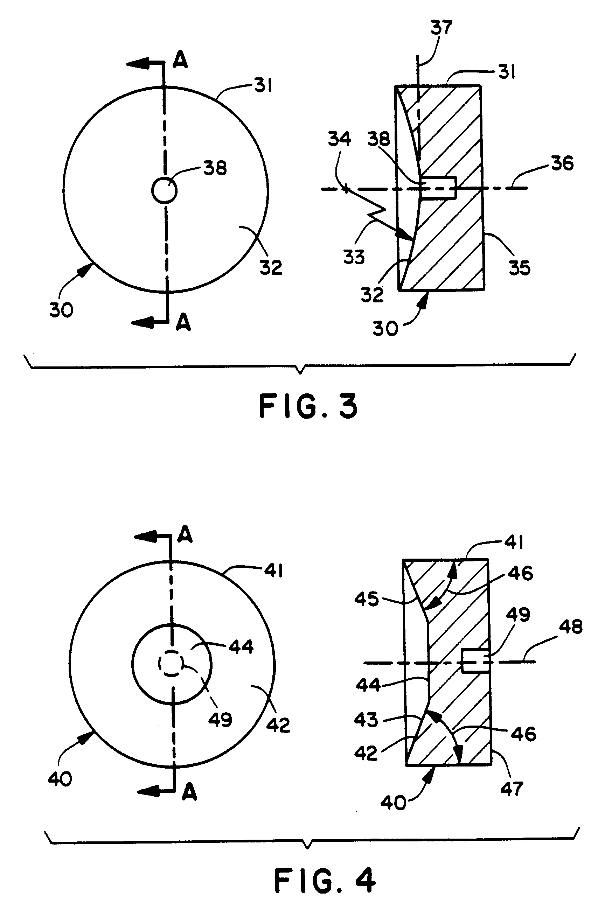

FIG. 3 illustrates an ultrasonic rotary horn in which one end of the horn of FIG. 1A is replaced with a concave end and the hole in the other end is eliminated. Hence, horn 30 has a radial surface 31, first end 32, second end 35, and a circular cross-section as represented by end 32. End 32 is concave, the surface of which is that of a segment of a sphere having radius 33 and center 34 located on rotational axis 36 of horn 30. The tangent 37 to end 32 at the point where end 32 meets rotational axis 36 of horn 30 is normal to rotational axis 36. End 35 is flat and normal to rotational axis 36 of horn 30 and parallel with tangent 37. End 32 has cylindrical hole 38 which is centered about rotational axis 36. Thus, hole 38 and ends 32 and 35 are concentric.

Of course, hole 38 can be located in end 35 rather than in end 32. Hubs and studs or axles also can be present, if desired, as described for horns 10 and 20 of Figures 1A and 2A, respectively.

Horn 40 of FIG. 4 is a variation of the ultrasonic rotary horn of Figure 3. Horn 40 has a radial surface 41, first end 42, second end 47, and a circular cross-section as represented by end 42. End 42 is concave, the surface of which in cross-section consists of planar segments 43, 44, and 45. Planar segments 43 and 45 are equal in width and are at angle 46 from radial surface 41 which is substantially parallel with rotational axis 48. Planar segment 44 is normal to rotational axis 48 and concentric with end 42. End 47 is flat and normal to rotational axis 48 of horn 40 and parallel with planar segment 44. End 47 has cylindrical hole 49 which is centered about rotational axis 48. Thus, hole 49, ends 42 and 47, and planar segment 44 are concentric.

Hole 49 can be located in end 42 rather than in end 47, and hubs or axles also can be present, if desired, as described for horns 10 and 20 of FIGS. 1A and 2A, respectively.

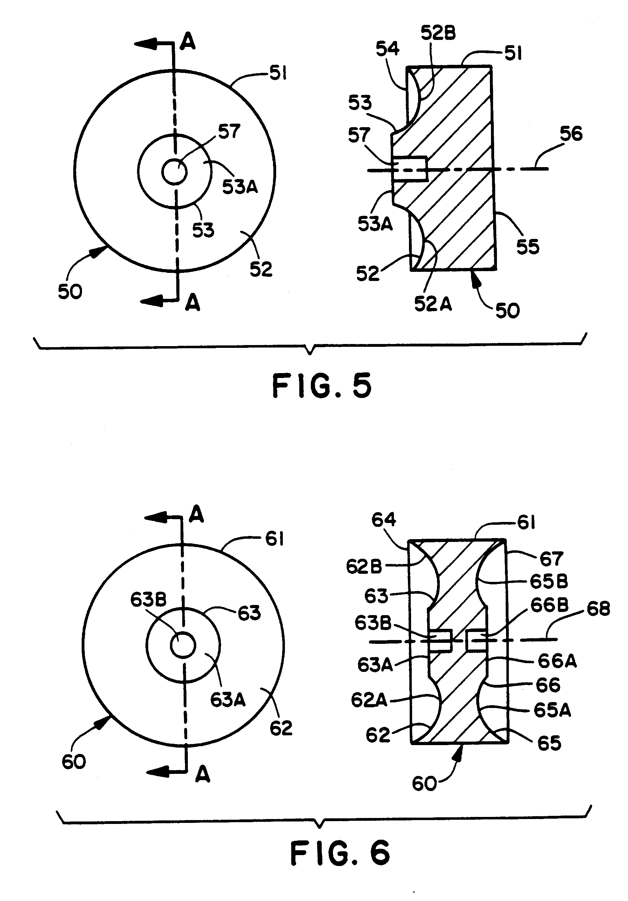

FIG. 5 illustrates an ultrasonic rotary horn which also is a variation of that of FIG. 3. In FIG. 5, horn 50 has a radial surface 51, first end 52, second end 55, and a circular cross-section as represented by end 52. End 52 is substantially concave, but has hub 53 which extends beyond edge 54 of radial surface 51. Hub 53 has face 53A which is flat and normal to rotational axis 56 of horn 50. In addition to hub 53, end 52 is defined in cross-section by curved lines 52A and 52B which are identical (i.e., mirror images of each other), such that end 52 is radially symmetrical. End 55 is flat and normal to rotational axis 56 of horn 50 and parallel with face 53A of hub 53. End 52 has cylindrical hole 57 which is centered about rotational axis 56. Thus, hole 57, hub 53, and ends 52 and 55 are concentric.

Variations such as those described in relation to the preceding figures are possible with the horn of FIG. 5, as well.

FIG. 6 illustrates an ultrasonic rotary horn of the present invention in which both ends are substantially concave and both ends have hubs. Hence, horn 60 has a radial surface 61, first end 62, second end 65, and a circular cross-section as represented by end 62. End 62 is substantially concave and has hub 63 which extends outwardly from end 62 but is recessed with respect to edge 64 of radial surface 61. Hub 63 has face 63A which is flat and normal to rotational axis 68 of horn 60. In addition to hub 63, end 62 is defined in cross-section by curved lines 62A and 62B which are identical, such that end 62 is radially symmetrical. End 62 has cylindrical hole 63B which is centered in face 63A of hub 63 about rotational axis 58. Similarly, end 65 is substantially concave and has hub 66 which extends outwardly from end 65 but is recessed with respect to edge 67 of radial surface 61. Hub 66 has face 66A which is flat and normal to rotational axis 68 of horn 60. In addition to hub 66, end 65 is defined in cross-section by curved lines 65A and 65B which are identical, such that end 65 is radially symmetrical. End 65 has cylindrical hole 66B which is centered in face 66A of hub 66 about rotational axis 68. Thus, holes 63B and 66B, hubs 63 and 66, and ends 62 and 65 are concentric.

To the extent not already described, variations such as those described in relation to the preceding figures are possible with the horn of FIG. 6.

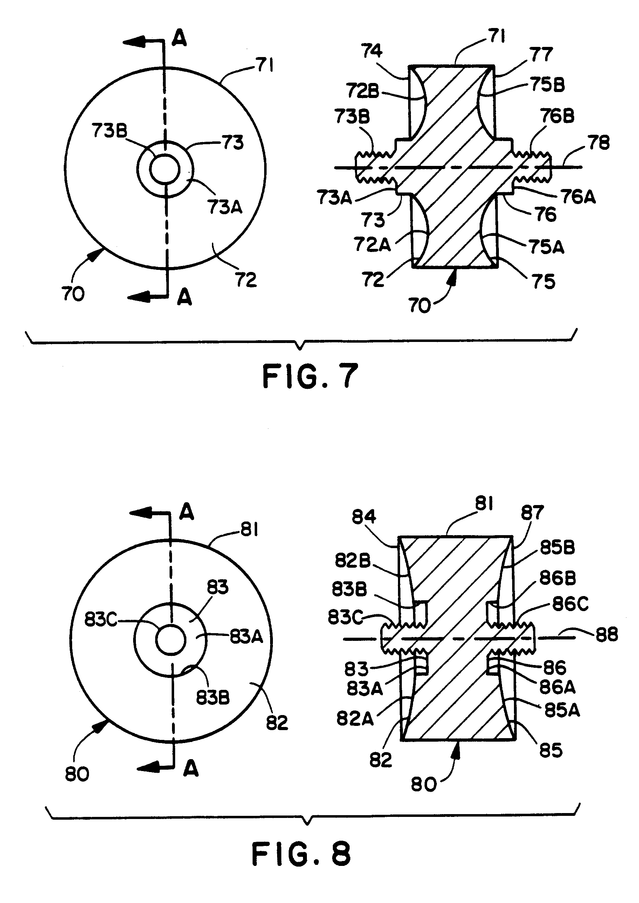

If the horn of FIG. 6 is made thicker in the central portion such that the hubs extend beyond the edges of the radial surface, the ultrasonic rotary horn of FIG. 7 results. In FIG. 7, horn 70 has a radial surface 71, first end 72, second end 75, and a circular cross-section as represented by end 72. End 72 is substantially concave and has hub 73 which extends outwardly from end 72 and extends beyond edge 74 of radial surface 71. Hub 73 has face 73A which is flat and normal to rotational axis 78 of horn 70. In addition to hub 73, end 72 is defined in cross-section by curved lines 72A and 72B which are identical, such that end 72 is radially symmetrical. End 72 has protruding threaded stud 73B which is centered in face 73A of hub 73 about rotational axis 78. Similarly, end 75 is substantially concave and has hub 76 which extends outwardly from end 75 and extends beyond edge 77 of radial surface 71. Hub 76 has face 76A which is flat and normal to rotational axis 78 of horn 70. In addition to hub 76, end 75 is defined in cross-section by curved lines 75A and 75B which are identical, such that end 75 is radially symmetrical. End 75 has protruding threaded stud 76B which is centered in face 76A of hub 76 about rotational axis 78. Thus, studs 73B and 76B, hubs 73 and 76, and ends 72 and 75 are concentric. Moreover, end 75 is a mirror image of end 72. Finally, it may be noted that hubs 73 and 76 and studs 73B and 76B are integral parts of horn 70.

To the extent not already described, variations such as those described in relation to the preceding figures also are possible with the horn of FIG. 7.

In the figures described thus far, hubs, when present, have extended outwardly from the ends of the horn. Hubs, however, may be inverted, as shown in FIG. 8.

In FIG. 8, horn 80 has a radial surface 81, first end 82, second end 85, and a circular cross-section as represented by end 82. Radial surface 81 terminates at edges 84 and 87. End 82 is substantially concave and has hub 83 which extends inwardly from end 82. Hub 83 has face 83A which is flat and normal to rotational axis 88 of horn 80 and side wall 83B which is substantially equidistant from and concentric with rotational axis 88. In addition to hub 83, end 82 is defined in cross-section by curved lines 82A and 82B which are identical, such that end 82 is radially symmetrical. End 82 has protruding threaded stud 83C which is centered in face 83A of hub 83 about rotational axis 88. Similarly, end 85 is substantially concave and has hub 86 which extends inwardly from end 85. Hub 86 has face 86A which is flat and normal to rotational axis 88 of horn 80 and side wall 86B which is substantially equidistant from and concentric with rotational axis 88. In addition to hub 86, end 85 is defined in cross-section by curved lines 85A and 85B which are identical, such that end 85 is radially symmetrical. End 85 has protruding threaded stud 86C which is centered in face 86A of hub 86 about rotational axis 88. Thus, studs 83C and 86C, hubs 83 and 86, and ends 82 and 85 are concentric, and studs 83C and 86C protrude beyond edges 84 and 87 of radial surface 81. Moreover, end 85 is a mirror image of end 82. Finally, it may be noted that hubs 83 and 86 and studs 83C and 86C are integral parts of horn 80.

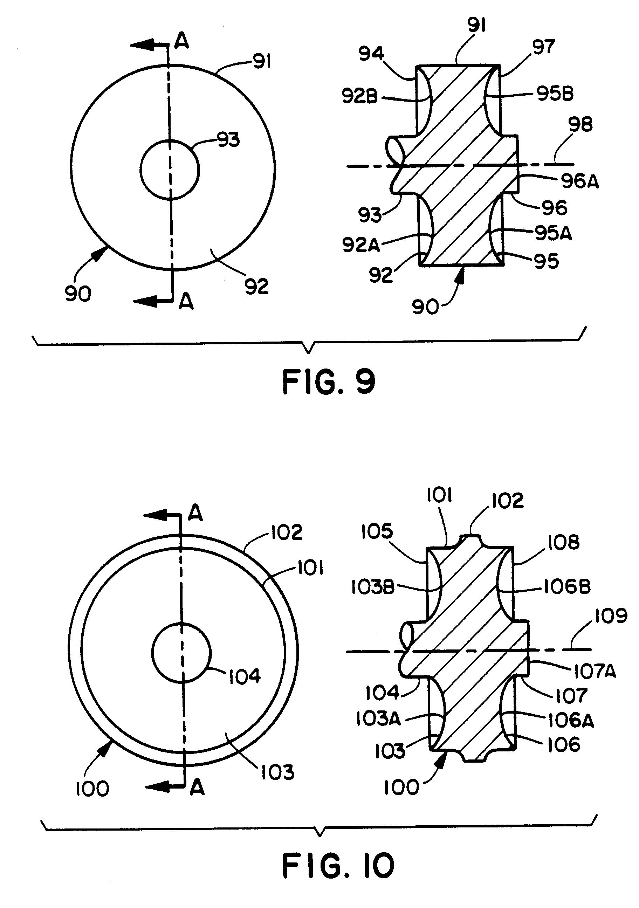

A preferred embodiment of the ultrasonic rotary horn of FIG. 7 is shown in FIG. 9. In FIG. 9, horn 90 has a radial surface 91, first end 92, second end 95, and a circular cross-section as represented by end 92. End 92 is substantially concave and has hub 93 which extends outwardly from end 92 and extends beyond edge 94 of radial surface 91. Hub 93 becomes an elongated waveguide of standard design (not shown) which is an integral part of the horn. In addition to hub 93, end 92 is defined in cross-section by curved lines 92A and 92B which are identical, such that end 92 is radially symmetrical. Similarly, end 95 is substantially concave and has hub 96 which extends outwardly from end 95 and extends beyond edge 97 of radial surface 91. Hub 96 has face 96A which is flat and normal to rotational axis 98 of horn 90. In addition to hub 96, end 95 is defined in cross-section by curved lines 95A and 95B which are identical, such that end 95 is radially symmetrical. Hub 93 and the integral elongated waveguide, hub 96, and ends 92 and 95 are concentric. Moreover, except for the absence of an elongated waveguide, end 95 is a mirror image of end 92. Finally, it may be noted that hubs 93 and 96 are integral parts of horn 90.

FIG. 10 illustrates a preferred embodiment of an ultrasonic rotary horn having a centrally located raised land. In FIG. 10, horn 100 has radial surface 101 having raised land 102, first end 103, second end 106, and a circular cross-section as represented by end 103. End 103 is substantially concave and has hub 104 which extends outwardly from end 103 and extends beyond edge 105 of horn 100. Hub 104 becomes an elongated waveguide of standard design (not shown) which is an integral part of the horn. In addition to hub 104, end 103 is defined in cross-section by curved lines 103A and 103B which are identical, such that end 103 is radially symmetrical. Similarly, end 106 is substantially concave and has hub 107 which extends outwardly from end 106 and extends beyond edge 108 of horn 100. Hub 107 has face 107A which is flat and normal to rotational axis 109 of horn 100. In addition to hub 107, end 106 is defined in cross-section by curved lines 106A and 106B which are identical, such that end 106 is radially symmetrical. Hub 104 and the integral elongated waveguide, hub 107, and ends 103 and 106 are concentric. Moreover, except for the absence of an elongated waveguide, end 106 is a mirror image of end 103. Finally, it may be noted that hubs 104 and 107 are integral parts of horn 100.

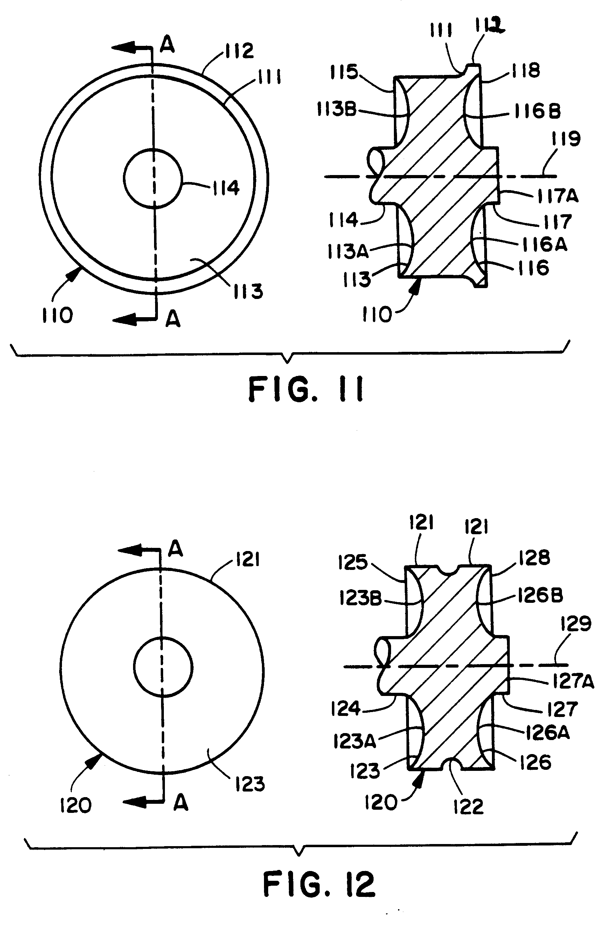

FIG. 11 illustrates a preferred embodiment of an ultrasonic rotary horn having a raised land at the nonexcited end. In FIG. 11, horn 110 has raised land 111 having radial surface 112, first end 113, second end 116, and a circular cross-section as represented by end 113. End 113 is substantially concave and has hub 114 which extends outwardly from end 113 and extends beyond edge 115 of horn 110. Hub 114 becomes an elongated waveguide of standard design (not shown) which is an integral part of the horn. In addition to hub 114, end 113 is defined in cross-section by curved lines 113A and 113B which are identical, such that end 113 is radially symmetrical. Similarly, end 116 is substantially concave and has hub 117 which extends outwardly from end 116 and extends beyond edge 118 of horn 110. Hub 117 has face 117A which is flat and normal to rotational axis 119 of horn 110. In addition to hub 117, end 116 is defined in cross-section by curved lines 116A and 116B which are identical, such that end 116 is radially symmetrical. Hub 114 and the integral elongated waveguide, hub 117, and ends 113 and 116 are concentric. Moreover, except for the absence of an elongated waveguide and the presence of the raised land, end 116 is a mirror image of end 113. Finally, it may be noted that hubs 114 and 117 are integral parts of horn 110.

FIG. 12 illustrates a preferred embodiment of an ultrasonic rotary horn having a centrally located grove in the radial surface. In FIG. 12, horn 120 has radial surface 121 having centrally located grove 122, first end 123, second end 126, and a circular cross-section as represented by end 123. End 123 is substantially concave and has hub 124 which extends outwardly from end 123 and extends beyond edge 125 of radial surface 121. Hub 124 becomes an elongated waveguide of standard design (not shown) which is an integral part of the horn. In addition to hub 124, end 123 is defined in cross-section by curved lines 123A and 123B which are identical, such that end 123 is radially symmetrical. Similarly, end 126 is substantially concave and has hub 127 which extends outwardly from end 126 and extends beyond edge 128 of horn 120. Hub 127 has face 127A which is flat and normal to rotational axis 129 of horn 120. In addition to hub 127, end 126 is defined in cross-section by curved lines 126A and 126B which are identical, such that end 126 is radially symmetrical. Hub 124 and the integral elongated waveguide, hub 127, and ends 123 and 126 are concentric. Moreover, except for the absence of an elongated waveguide, end 126 is a mirror image of end 123. Finally, it may be noted that hubs 124 and 127 are integral parts of horn 120.

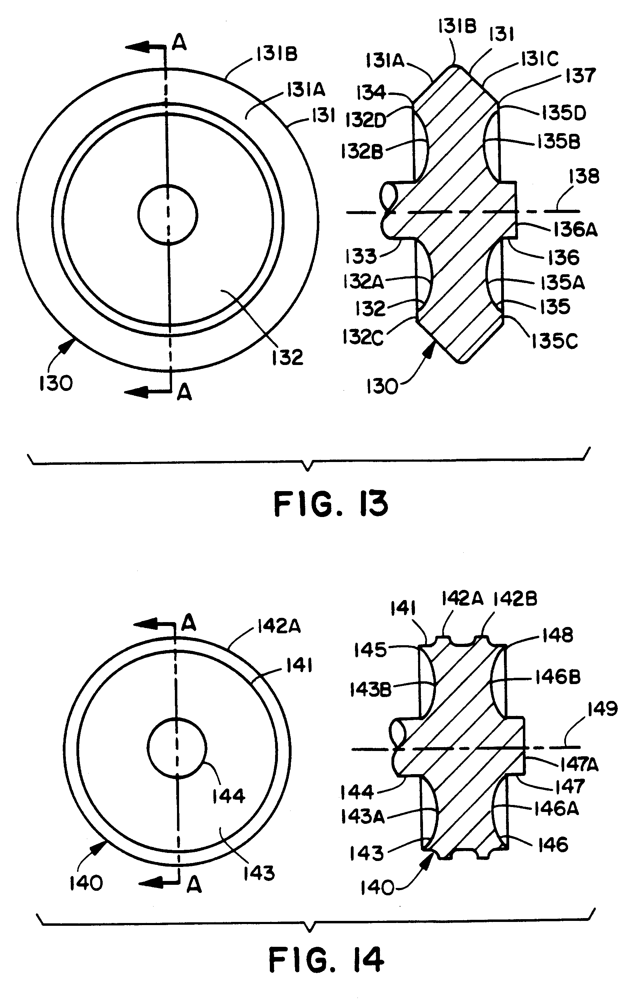

The ultrasonic rotary horns represented by FIGS. 10-12, inclusive, have nonlinear radial surface profiles with distinct components, i.e., a raised land or a groove. An example of a horn in which the radial surface profile is defined by a smoothly changing nonlinear line is illustrated by FIG. 13.

In FIG. 13, horn 130 has radial surface 131, first end 132, second end 135, and a circular cross-section as represented by end 132. Radial surface 131 has a nonlinear profile which has two relatively flat portions 131A and 131C on each side of centrally located rounded or curved portion 131B. End 132 is substantially concave and has hub 133 which extends outwardly from end 132 and extends beyond edge 134 of radial surface 131. Hub 133 becomes an elongated waveguide of standard design (not shown) which is an integral part of the horn. In addition to hub 133, end 132 is defined in cross-section by curved lines 132A and 132B which are identical, and flat surfaces 132C and 132D which are identical, such that end 132 is radially symmetrical. Similarly, end 135 is substantially concave and has hub 136 which extends outwardly from end 135 and extends beyond edge 137 of horn 130. Hub 136 has face 136A which is flat and normal to rotational axis 138 of horn 130. In addition to hub 136, end 135 is defined in cross-section by curved lines 135A and 135B which are identical, and flat surfaces 135C and 135D which are identical, such that end 135 is radially symmetrical. Hub 133 and the integral elongated waveguide, hub 136, and ends 132 and 135 are concentric. Moreover, except for the absence of an elongated waveguide, end 135 is a mirror image of end 132. Finally, it may be noted that hubs 133 and 136 are integral parts of horn 130.

Finally, FIG. 14 illustrates a variation of the ultrasonic rotary horn of FIG. 10, i.e., a horn having two raised lands, neither of which is located at an edge of the horn. In FIG. 14, horn 140 has radial surface 141 having two inwardly located raised lands 142A and 142B, first end 143, second end 146, and a circular cross-section as represented by end 143. End 143 is substantially concave and has hub 144 which extends outwardly from end 143 and extends beyond edge 145 of horn 140. Hub 144 becomes an elongated waveguide of standard design (not shown) which is an integral part of the horn. In addition to hub 144, end 143 is defined in cross-section by curved lines 143A and 143B which are identical, such that end 143 is radially symmetrical. Similarly, end 146 is substantially concave and has hub 147 which extends outwardly from end 146 and extends beyond edge 148 of horn 140. Hub 147 has face 147A which is flat and normal to rotational axis 149 of horn 140. In addition to hub 147, end 146 is defined in cross-section by curved lines 146A and 146B which are identical, such that end 146 is radially symmetrical. Hub 144 and the integral elongated waveguide, hub 147, and ends 143 and 146 are concentric. Moreover, except for the absence of an elongated waveguide, end 146 is a mirror image of end 143. Finally, it may be noted that hubs 144 and 147 are integral parts of horn 140.

It should be apparent from the description thus far that the presence or absence of hubs is optional and depends upon the desired performance characteristics of the horn. While the presence of hubs affects the performance of the horn and must be taken into account when designing the horn, the dimensions of the hubs are not known to be critical. Typically, hubs will have a diameter of the order of 5 cm and a shoulder height of up to about 1.8 cm.

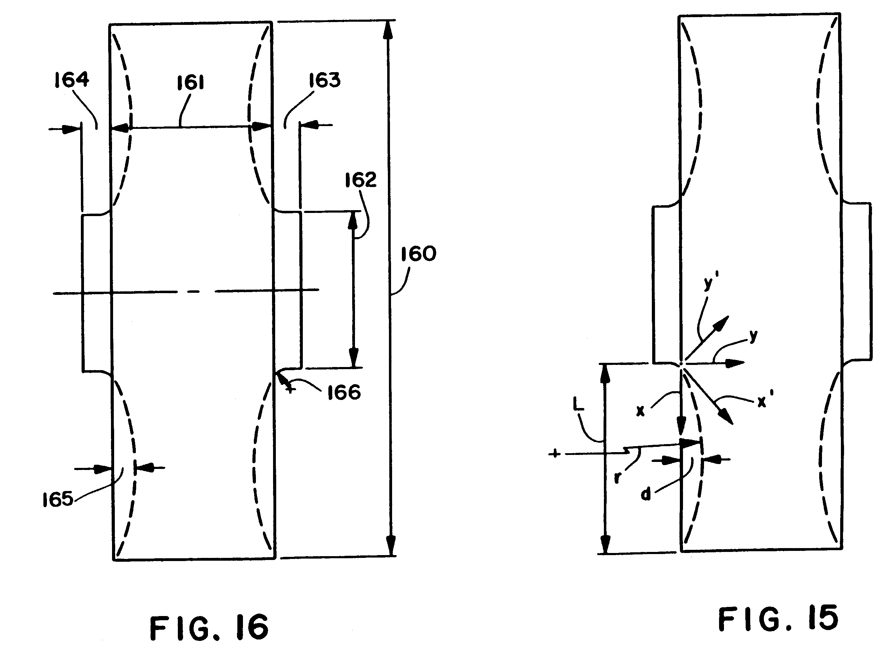

When a horn having ends which are substantially concave is desired, the profile of the substantially concave surface of each end is described by various methods known to those having ordinary skill in the art of the geometry of surfaces. For example, the profile can be circular, second order, inverse second order, exponential, inverse exponential, catenary, inverse catenary, gaussian, inverse gaussian, combinations thereof, and the like. Formulas useful for the more common profiles, i.e., circular, second order, and exponential, are given below, with reference to FIG. 15. In each case, x and y or x' and y' are the Cartesian values of the points defining the concave surface.

### Circular profile

${\text{y = {[(L/2)}}^{\text{2}} {\text{+ (r-d)}}^{\text{2}} {\text{)/2(r-d)]}}^{\text{2}} {\text{- (x - L/2)}}^{\text{2}} {\text{}}}^{\text{1/2}} {\text{-{[(L/2)}}^{\text{2}} {\text{+ (r-d)}}^{\text{2}} {\text{)/2(r-d)] - (L/2)}}^{\text{2}} {\text{}}}^{\text{1/2}}$ in which L is the length of the profile, r is the radius of the circle defining the concave surface, and d is the depth of the concave surface relative to the edge of the work-contacting surface. Typical values for L and r-d are 5.8 cm and 6.4 cm, respectively.

### Second order profile

${\text{y' = a(x')}}^{\text{2}} \text{- b(x')}$

Typical values for a and b are 0.5356 and - 0. 1289, respectively.

### Exponential profile

${\text{y' = ae}}^{\text{bx'}} \text{- a}$

Typical values for a and b are 1.1535 and 0.5408, respectively.
In general, L and r, or the coefficients a and b, are chosen to yield a desired value for d which typically will be in the range from about 0.1 cm to about 4.5 cm, depending upon the width of the work-contacting surface and the characteristics desired for the horn.

The axes x, x', y, and y' and the dimensions r, d, and L from the foregoing equations are shown in FIG. 15 which is a diagrammatic end view representation of the ultrasonic rotary horn of the present invention used to make measurements of acoustical and mechanical properties as described hereinafter. As a practical matter, second order profiles are preferred since they seem to give the best performance of the three. For a concave end having a second order profile, the appropriate values for a and b are placed in the equation which is solved graphically. However, for machining the horn, the resulting plot of the equation must be rotated 45° in order to make the x'-axis contiguous with the edge of the horn or the x-axis. In order to do this, each point on the in order to make the x'-axis contiguous with the edge of the horn or the x-axis. In order to do this, each point on the graph is converted to a vector which is rotated the required 45° and then reconverted to a point.

Finally, it should be noted that the ends of the ultrasonic rotary horn of the present invention can be flat. That is, excluding hubs and studs, if present, the two ends can be parallel to each other and perpendicular to the rotational axis of the horn. However, horns having flat ends, while easier and less expensive to machine, typically do not provide the performance characteristics of horns having either concave or convex ends. Thus, horns having flat ends are less preferred than the other permitted configurations.

The present invention is further described by the examples which follow. Such examples, however, are not to be construed as limiting in any way either the spirit or scope of the present invention.

### Example 1

### Evaluation of a 20 kHz Horn of the Present Invention and its Comparison with a Commercially Available Horn

In order to measure the acoustical and mechanical properties of an ultrasonic rotary horn of the present invention, a horn similar to that shown in FIG. 7, including the hubs and studs, was machined from a solid piece of titanium. The horn was intended to be excited at a frequency of about 20 kHz. The radial surface was about 5.1 cm wide and the horn had a diameter of about 17.1 cm. The ends of the horn were identical (i.e., they were mirror images of each other). Each end had a cylindrical hub, the face of which was about 5.1 cm in diameter. The hub had a shoulder which was parallel with both the radial surface and the rotational axis of the horn; the shoulder had a length of about 7 mm. Protruding from each hub concentric with the rotational axis of the horn was a threaded stud having a diameter of about 13 mm.

The actual dimensions in mm of the horn are shown in Table 1 with reference to FIG. 16 which is an end view representation of the horn, except for the studs which are not shown. In addition, the concave portions of the ends of the horn of FIG. 16 actually had a second order profile which is not shown, the coefficients a and b having the values 0.5356 and -0.1289, respectively (for convenience, the concave portions of the ends in the drawings have circular profiles). The horn had a mass of 4.640 kg (all mass measurements were made with a Mettler Model PE16 electronic balance, Mettler Instrument Corp., Hightstown, New Jersey).

**Table 1**

| Dimensions of the 20 kHz Horn of FIG. 16 | |
|---|---|
| Dimension | Value (mm) |
| 160 | 170.69 |
| 161 | 50.80 |
| 162 | 50.80 |
| 163 | 8.89 |
| 164 | 8.89 |
| 165 | 6^{a} |
| 166 | 2.54 |

| | |
|---|---|
| ^{a}Approximate value. | |

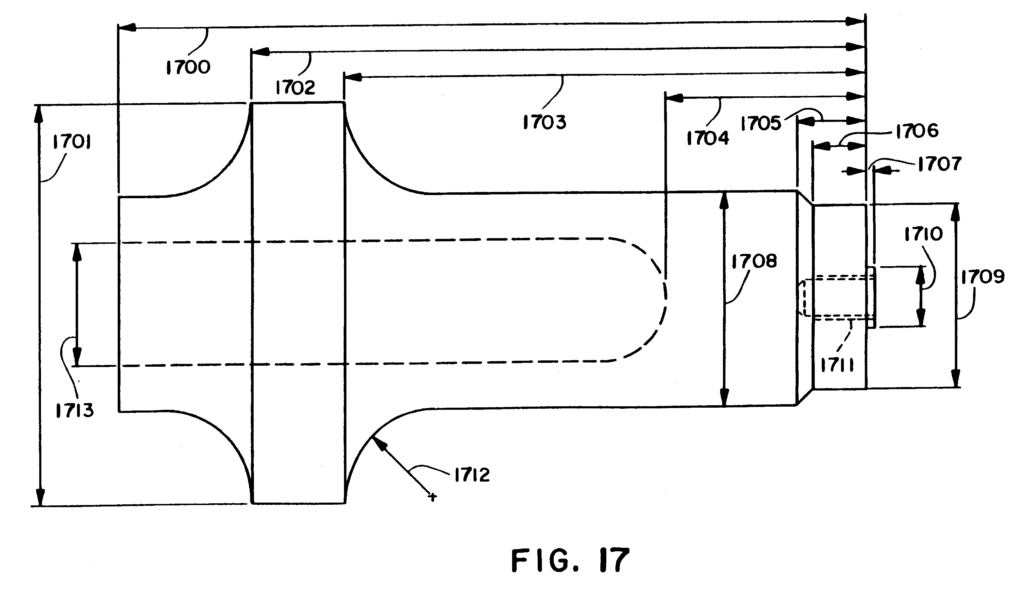

Because similar measurements were desired for the Mecasonic horn, the horn employed (Model No. 2994) is represented by FIG. 17 which is a side view representation of the Mecasonic horn illustrating the dimensional parameters. The actual dimensions in mm are shown in Table 2. The horn had a mass of 4.668 kg.

**Table 2**

| Dimensions of the Mecasonic Horn of FIG. 17 | |
|---|---|
| Dimension | Value (mm) |
| 1700 | 242.14 |
| 1701 | 130.18 |
| 1702 | 199.87 |
| 1703 | 170.03 |
| 1704 | 63.58 |
| 1705 | 22.71 |
| 1706 | 17.30 |
| 1707 | 2.01 |
| 1708 | 69.95 |
| 1709 | 59.84 |
| 1710 | 21.95 |
| 1711 | -^{a} |
| 1712 | 30.07 |
| 1713 | 41.99 |

| | |
|---|---|
| ^{a}M16 x 2 tap, 22.73 mm deep. | |

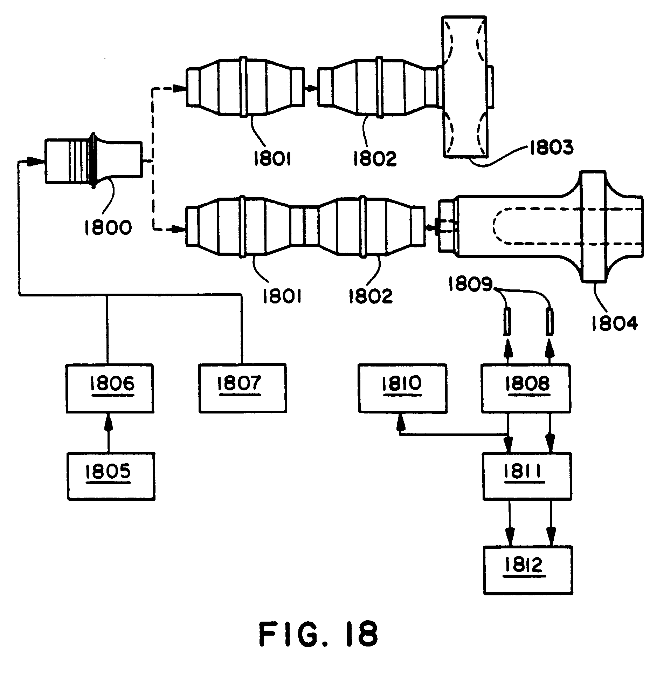

The experimental set-up for such measurements is shown in FIG. 18 which includes a diagrammatic representation of the arrangement of the driver assembly, boosters, and horns. In each case, rotational displacement of a horn was accomplished by means of a piezoelectric transducer consisting of barium titanate ceramic in the conventional form of a half-wave resonator, i.e., Dukane driver assembly 1800 (Part No. 110-3123, Dukane Corporation, St. Charles, Illinois). Driver assembly 1800 was attached to a 1:1 booster 1801, such as the Dukane booster (Part No. 2177T) or its equivalent. Booster 1801 in turn was attached to a 2:1 booster 1802, such as the Dukane booster (Part No. 2181T) or its equivalent. Booster 1802 was attached to either the rotary horn of the present invention 1803 or the Mecasonic horn 1804.

In addition, FIG. 18 also shows schematically the auxiliary equipment required by the test procedure. Generator 1805 (a Dukane 1800-watt, 20-KHz generator, Part No. 20A1800) was connected to power meter 1806 (Sonic Systems Model M1/SC3 Wattmeter, Sonic Systems, Inc., Newtown, Pennsylvania). Power meter 1806 was connected to driver assembly 1800. Also connected to driver assembly 1800 was horn analyzer 1807 (Dukane Horn Analyzer, Part No. 40A350). Displacement measuring system 1808 having probes 1809 (Kaman Model KD4200-1S1/1S2 SPL Displacement Measuring System, Kaman Instrumentation Corp., Colorado Springs, Colorado) was used to measure displacements at various points on each horn as described hereinafter. System 1808 was connected to frequency counter 1810 (B & K Precision Model 1822 Universal Counter, B & K Dynascan Corp., Chicago, Illinois) and to analog filter 1811 (Wavetek Model 452 Dual Channel Hi/Lo Analog Filter, Wavetek San Diego, Inc., San Diego, California). Filter 1811 in turn was connected to oscilloscope 1812 (Tektronix Model 5223 Digitizing Oscilloscope, Tektronix, Inc., Beaverton, Oregon).

In some of the later experiments, some of the components shown in FIG. 18 were replaced with equivalent equipment from Branson Sonic Power Company (Danbury, Connecticut), i.e., DuKane driver assembly 1800, generator 1805, and either or both of boosters 1801 and 1802. Such replacements, however, did not significantly affect either the method or the results obtained.

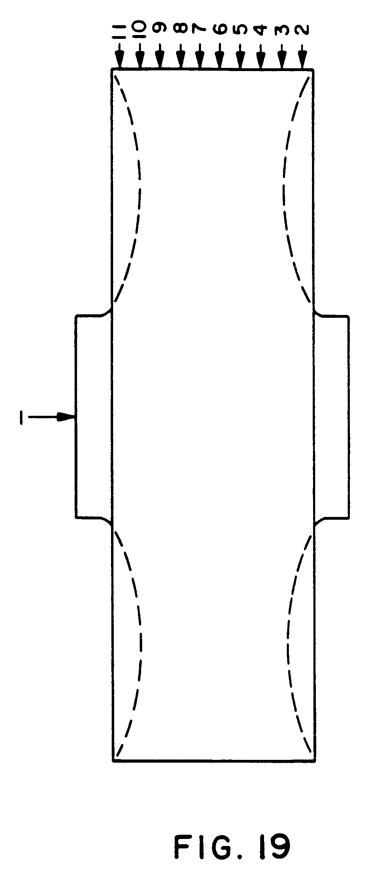

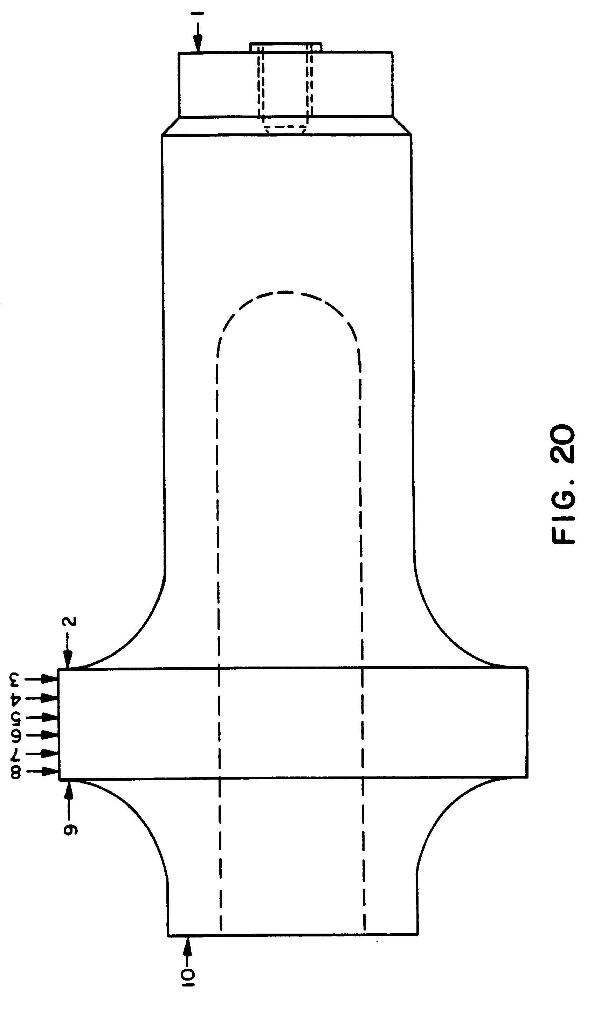

The driver assembly, boosters, and horn under test were configured as shown in FIG. 18. The system was excited by means of the horn analyzer to determine the resonant frequency of the system. The generator then was activated and the system excited for one minute to allow the system to stabilize. After the stabilization period, one displacement measuring probe was placed at the excitation input to the horn and the other probe was placed at appropriate consecutive points, primarily along the radial surface of the horn. The locations of the displacement measuring probes are shown diagrammatically in FIGS. 19 and 20 for the 20 kHz horn of the present invention and the Mecasonic horn, respectively. In each case, point 1 represents the point of excitation input. With the generator on, the amplitude level, amplitude phase relative to point 1, power consumption, and frequency were recorded at each of points 2-11, inclusive, with the 20 kHz horn of the present invention (FIG. 19) and points 2-10, inclusive, with the Mecasonic horn (FIG. 20). Each of points 2 and 11 with the horn of the present invention and points 3 and 8 of the Mecasonic horn were located approximately 2.5 mm from the nearest edge of the radial surface, i.e., the edge nearest the excitation source. In addition, each point on the radial surface of each horn was about 5 mm from adjacent points. The data obtained with the 20 kHz horn of the present invention are summarized in Table 3 and the data for the Mecasonic horn are summarized in Table 4. The resonant or horn analyzer frequencies for the two horns were 20,003 and 19,928 Hz, respectively.

**Table 3**

| Summary of data for the 20 kHz Horn of the Present Invention at an Excitation Power of 150 Watts | | | | | |
|---|---|---|---|---|---|
| Point | Phase ^{a} | Amplitude (µm) | Horn Gain ^{b} | Effic. ^{c} | Frequency (Hz) |
| 1 | - | 34.0 | - | 0.23 | 20,003 |
| 2 | Out | 40.6 | 1.19 | 0.27 | 20,003 |
| 3 | Out | 40.6 | 1.19 | 0.27 | 20,002 |
| 4 | Out | 40.6 | 1.19 | 0.27 | 20,001 |
| 5 | Out | 40.6 | 1.19 | 0.27 | 20,001 |
| 6 | Out | 40.6 | 1.19 | 0.27 | 20,001 |
| 7 | Out | 40.6 | 1.19 | 0.27 | 20,000 |
| 8 | Out | 40.6 | 1.19 | 0.27 | 20,000 |
| 9 | Out | 40.4 | 1.19 | 0.27 | 19,999 |
| 10 | Out | 39.9 | 1.17 | 0.27 | 19,999 |
| 11 | Out | 39.6 | 1.16 | 0.26 | 19,998 |

| | | | | | |
|---|---|---|---|---|---|
| ^{a}Phase, relative to point 1. | | | | | |
| ^{b}The ratio of radial amplitude to longitudinal amplitude, the latter being represented by the amplitude value of point 1. | | | | | |
| ^{c}Efficiency, in µm per watt. | | | | | |

**Table 4**

| Summary of data for the Mecasonic Horn at an Excitation Power of 220 Watts | | | | | |
|---|---|---|---|---|---|
| Point | Phase ^{a} | Amplitude (µm) | Horn Gain ^{b} | Effic. ^{c} | Frequency (Hz) |
| 1 | - | 31.2 | - | 0.14 | 19,907 |
| 2 | In | 3.8 | 0.12 | 0.02 | 19,907 |
| 3 | In | 36.8 | 1.18 | 0.17 | 19,902 |
| 4 | In | 38.6 | 1.24 | 0.18 | 19,901 |
| 5 | In | 39.6 | 1.27 | 0.18 | 19,901 |
| 6 | In | 40.1 | 1.29 | 0.18 | 19,899 |
| 7 | In | 38.1 | 1.22 | 0.17 | 19,898 |
| 8 | In | 37.1 | 1.19 | 0.17 | 19,898 |
| 9 | -^{d} | -^{d} | - | - | 19,906 |
| 10 | In | 47.2 | 1.51 | 0.21 | 19,901 |

| | | | | | |
|---|---|---|---|---|---|
| ^{a}Phase, relative to point 1. | | | | | |
| ^{b}The ratio of radial amplitude to longitudinal amplitude, the latter being represented by the amplitude value of point 1. | | | | | |
| ^{c}Efficiency, in µm per watt. | | | | | |
| ^{d}Measurements were below instrument sensitivity. | | | | | |

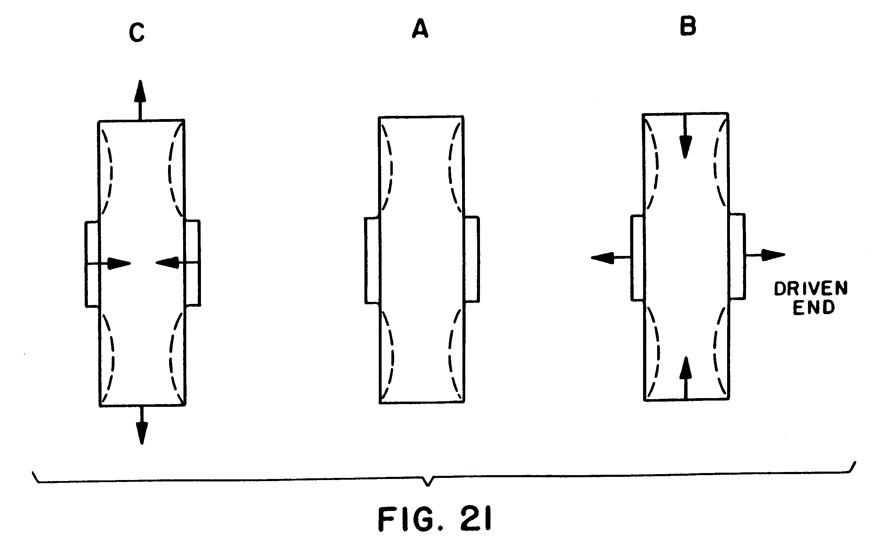

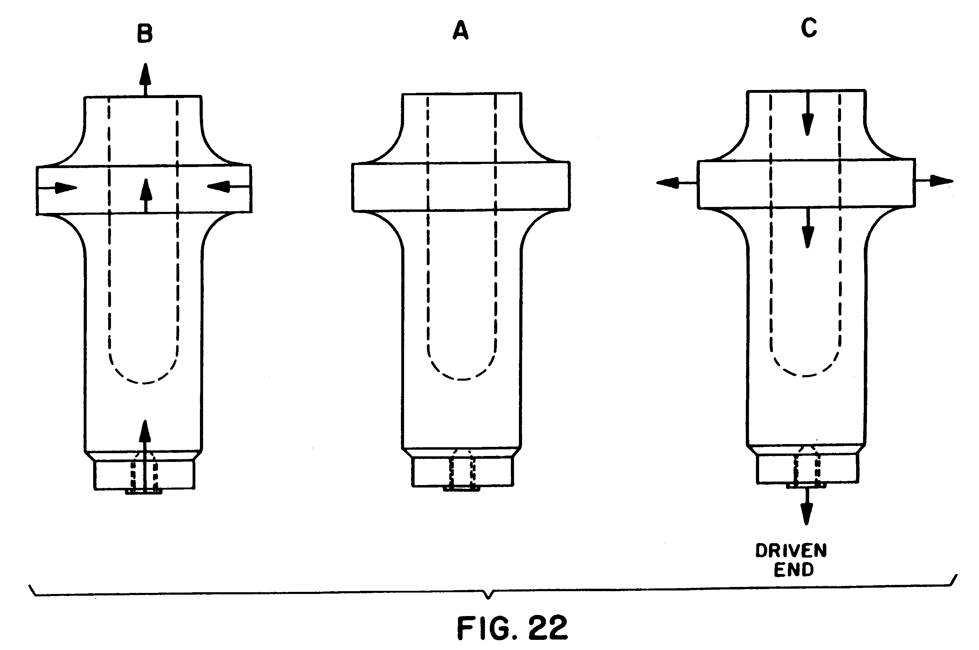

It should be noted that the "Phase" column in Tables 3 and 4 indicates the direction of the radial motion with respect to the longitudinal motion at the driven end, particularly with reference to FIGS. 21 and 22.

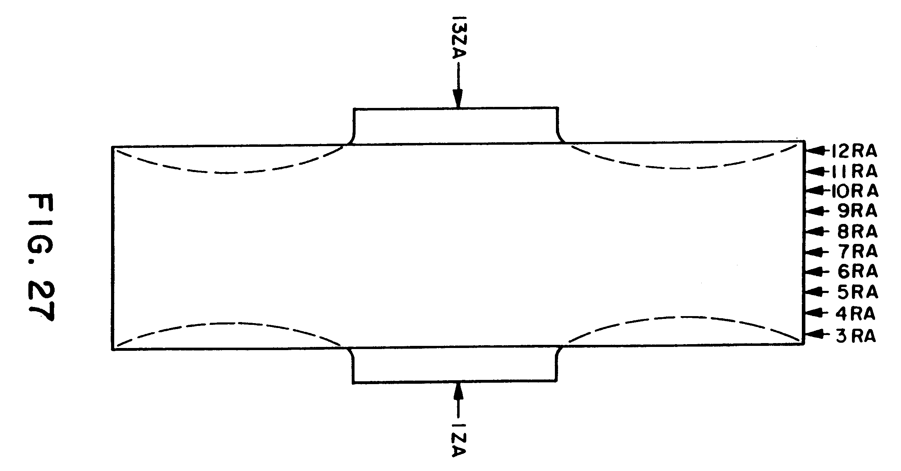

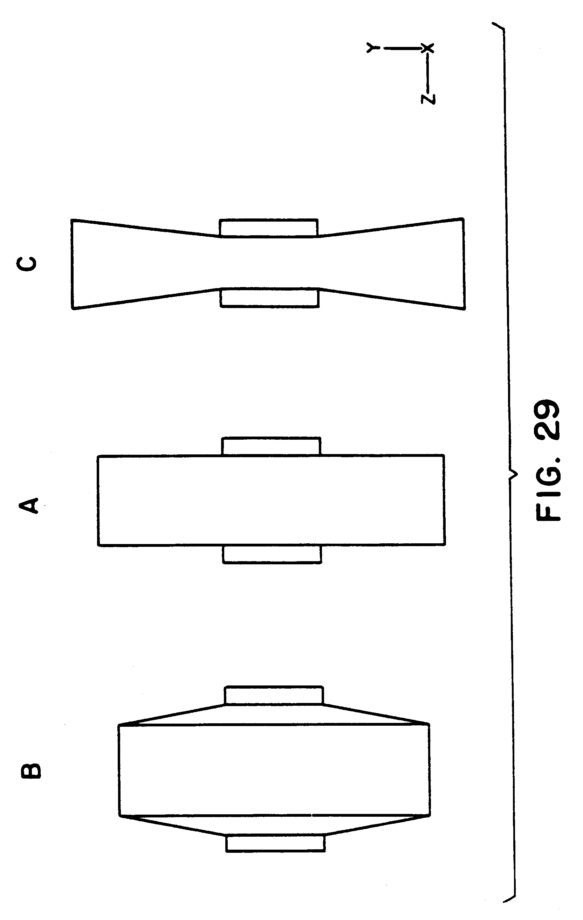

The terms "in phase" and "out of phase", already defined, will be more readily understood by referring to FIGS. 21 and 22. FIG. 21 consists of three separate views of a horn of the present invention. When the horn in an unexcited state (view A) is excited and the surface of the driven end moves away from the horn, as shown in view B, the other end also moves away from the horn and the radial surface moves inwardly toward the rotational axis or the interior of the horn. When the driven end moves inwardly toward the interior of the horn, as shown in view C, the radial surface moves outwardly away from the rotational axis. These movements will be described again in relation to FIGS. 27 and 29.

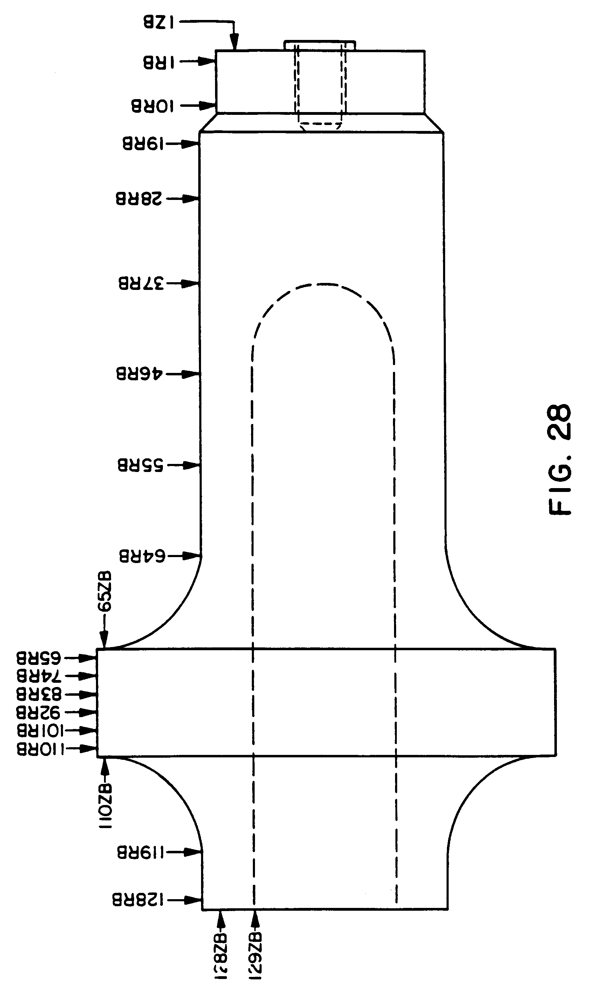

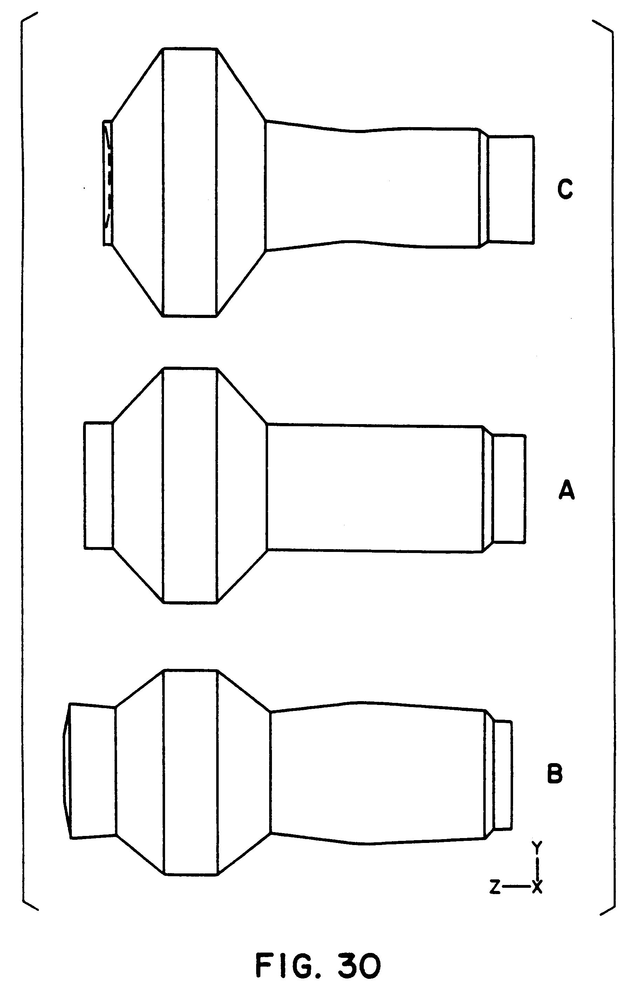

Similarly, FIG. 22 consists of three separate views of the Mecasonic horn. As with FIG. 21, views B and C show the movements of the end and radial surfaces relative to each other when the horn is excited. When the horn in an unexcited state (view A) is excited and the surface of the driven end moves away from the horn, as shown in view C, the radial surface moves away from the rotational axis. When the driven radial surface also moves inwardly toward the interior of the horn, or towards the rotational axis (view B). The arrow at one edge of the radial surface in views B and C shows that the radial surface also moves longitudinally in the same direction as the driven end. In fact, the entire horn moves longitudinally in the same direction as the driven end. These movements will be described again in relation to FIGS. 28 and 30. In view of Tables 3 and 4, the following points may be noted, of which the first is by far the most significant:
(1) when subjected to longitudinal mechanical excitation at the resonant frequency, the 20 kHz horn of the present invention displayed radial displacement which acted symmetrically about the median plane of the horn, while that of the Mecasonic horn decreased significantly on either side of the radial antinode plane, and the radial displacement along the entire width of the radial surface of the horn of the present invention was out of phase with the longitudinal displacement, whereas the radial displacement along the width of the radial surface of the Mecasonic horn was in phase with the longitudinal displacement;
(2) the power requirement for the 20 kHz horn of the present invention was lower than that for the Mecasonic horn; and
(3) the amplitude profile across the width of the radial surface of the 20 kHz horn of the present invention was more constant than that of the Mecasonic horn.

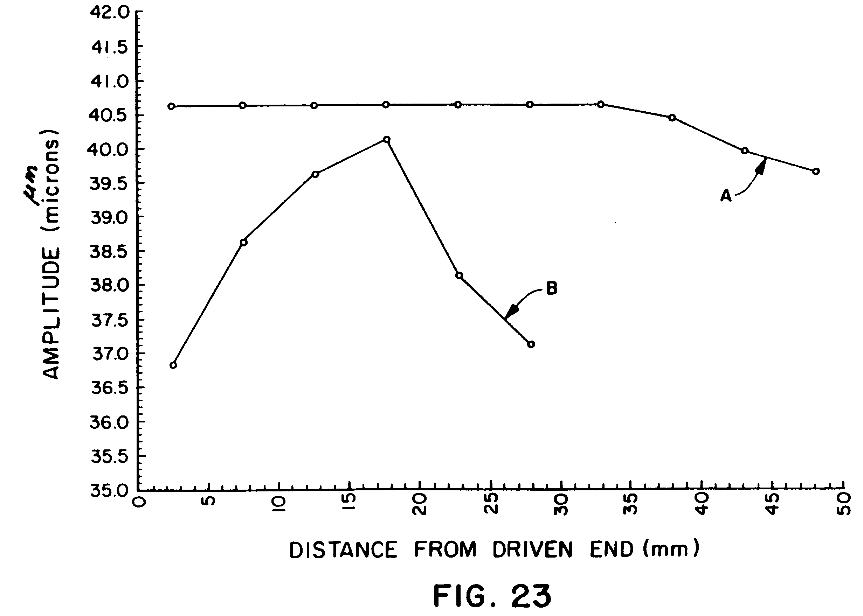

To more easily visualize point 3 above, the amplitude values obtained (see Tables 3 and 4) were plotted versus the distance of each point from the driven end of the horn, i.e., the end to which the boosters and driver assembly were attached. These plots are shown in FIG. 23, in which curve A is for the 20 kHz horn of the present invention (the horn of FIG. 16) and curve B is for the Mecasonic horn (the horn of FIG. 17).

FIG. 23 dramatically demonstrates the difference in amplitude profile across the face of the radial surface between the two horns. The amplitude profile of the 20 kHz horn of the present invention is relatively flat across the width of the radial surface. That is, the lowest amplitude measured across the radial surface was never less than about 97 percent of the maximum amplitude measurement. The amplitude profile of the Mecasonic horn, on the other hand, shows a peak at about 28 mm from the driven end, with the amplitude decreasing significantly on either side of the peak, especially on the side farthest from the driven end. Based on the data in Tables 3 and 4, the percent variance values for the horn of the present invention of Example 1 and the Mecasonic horn are 2.5 and 8.2, respectively.

It may noted from Tables 3 and 4 that the amplitude values for the Mecasonic horn generally were not significantly different from those for the 20 kHz horn of the present invention. However, the amplitudes observed with the Mecasonic horn were the result of a higher excitation power. The excitation power used with the Mecasonic horn actually was 1.49 times that used with the horn of the present invention. If the Mecasonic horn performed as well as the 20 kHz horn of the present invention, the amplitude values for the Mecasonic horn should have been 1.49 times the amplitude values for the horn of the present invention, i.e., around 1.75. Because the excitation power plays such a significant role in the amplitude values measured, efficiency values are more significant than amplitude values because the former are a function of both radial amplitude and excitation power.

In order to simplify the comparison of horns run at different power levels, a power-related gain term is used throughout this specification. The term, designated PRG, is equal to horn gain divided by excitation power. In order to avoid small decimal numbers, the quotient is multiplied by 10³. Thus,${\text{PRG = (Horn Gain/Power) watts}}^{\text{-1}} {\text{x 10}}^{\text{3}}$ To illustrate the use of the term, PRG values have been calculated for both the 20 kHz horn of the present invention and the Mecasonic horn and are summarized in Table 5.

**Table 5**

| Summary of PRG Values | | | | | |
|---|---|---|---|---|---|
| Horn of Present Invention | | | Mecasonic Horn | | |
| Point | Gain | PRG^{a} | Point | Gain | PRG^{b} |
| 1 | - | - | 1 | - | - |
| 2 | 1.19 | 7.9 | 2 | 0.12 | 0.5 |
| 3 | 1.19 | 7.9 | 3 | 1.18 | 5.4 |
| 4 | 1.19 | 7.9 | 4 | 1.24 | 5.6 |
| 5 | 1.19 | 7.9 | 5 | 1.27 | 5.8 |
| 6 | 1.19 | 7.9 | 6 | 1.29 | 5.9 |
| 7 | 1.19 | 7.9 | 7 | 1.22 | 5.5 |
| 8 | 1.19 | 7.9 | 8 | 1.19 | 5.4 |
| 9 | 1.19 | 7.9 | 9 | - | - |
| 10 | 1.17 | 7.8 | 10 | 1.51 | 6.7 |
| 11 | 1.16 | 7.7 | | | |

| | | | | | |
|---|---|---|---|---|---|
| ^{a}Power-related gain, in watts⁻¹ x 10³, at 150 watts excitation power. | | | | | |
| ^{b}Power-related gain, in watts⁻¹ x 10³, at 220 watts excitation power. | | | | | |

From an inspection of Table 5 and the respective PRG values, it is more clearly evident that the 20 kHz horn of the present invention performs significantly better than the Mecasonic horn. Note that a horn gain of 1.19 with the 20 kHz horn of the present invention gives a PRG of 7.9 watts⁻¹ x 10³, whereas the same gain value for the Mecasonic horn gives a PRG of only 5.4 watts⁻¹ x 10³.

Further comparison of the performances of the two horns requires the compilation of some average values, as well as some additional information. In each case, the amplitude value at point 1 was taken as the input amplitude. An average radial amplitude, i.e., the average amplitude across the radial surface, was calculated from the amplitude values at points 2-11, inclusive, for the 20 kHz horn of the present invention and points 3-8, inclusive, for the Mecasonic horn. That is, the average radial amplitude was the quotient of the sum of amplitude values for each point across the radial surface divided by the number of points. The average horn gain in each case was the ratio of the average radial amplitude to the input amplitude. These average values, along with the average power and the width of the radial surface, average PRG value, and a calculated "performance factor" (PF) for each horn, are summarized in Table 6. The PF, a summary index of performance, is a convenient means for comparing the efficiency of rotary bonding horns. The PF, as employed herein, is defined as the average radial amplitude divided by the average electrical power consumed per unit radial surface width. Thus, the PF is the average radial amplitude divided by the power per unit radial surface width and will have the units, microns watts⁻¹ mm. It is equivalent to efficiency per unit radial surface width. It should be apparent that the larger the value of the PF, the greater the potential for a horn to bond greater thicknesses of materials over a larger area for the power consumed.

**Table 6**

| Summary of Average Values and Other Information | | |
|---|---|---|
| Item | Horn of the Present Invention | Mecasonic Horn |
| Input amplitude (µm) | 34.0 | 31.2 |
| Average radial amplitude (µm) | 40.4 | 38.4 |
| Average horn gain | 1.19 | 1.23 |
| Average power (watts) | 150 | 220 |
| Average PRG (watts⁻¹ x 10³) | 7.9 | 5.6 |
| Radial surface width (mm) | 50.8 | 29.8 |
| Performance factor (µm watts⁻¹ mm) | 13.7 | 5.2 |

As shown by Table 6, the 20 kHz rotary horn of the present invention had a PF of 13.7 microns watts⁻¹ mm, whereas the Mecasonic horn exhibited a PF of 5.2 µm watts⁻¹ mm. This represents a significant improvement in performance by the horn of the present invention over the Mecasonic horn, even though both horns had approximately equivalent horn gains. Such improvement also is shown by the average PRG values of 7.9 watts⁻¹ x 10³ and 5.6 watts⁻¹ x 10³ for the horn of the present invention and the Mecasonic horn, respectively.

### Example 2

### Variation of Acoustical Performance with Chances in Horn Dimensions and Mass for Horns Similar to the Horn of Example 1

In order to determine how the acoustical performance of an ultrasonic rotary horn of the present invention varies with changes in horn dimensions and mass, seven horns patterned after the horn of FIG. 1, having different diameters and masses, but similar end configurations and constant widths at the radial surface and constant thicknesses at the center of the horn, were machined from aluminum; each horn had 50.80-mm diameter hubs having a height of 2.54 mm, each hub having a 12.7-mm diameter tapped hole in the center thereof. Two additional horns were made which had diameters the same as one of the seven horns, but different widths and thicknesses. The widths, diameters, and masses of these horns are given in Table 7.

**Table 7**

| Horn Dimensions and Masses | | | |
|---|---|---|---|
| Horn | Horn Width (mm) | Horn Diameter (mm) | Horn Mass (kg) |
| A | 50.80 | 187.96 | 3.970 |
| B | 50.80 | 182.88 | 3.770 |
| C | 50.80 | 177.80 | 3.564 |
| D | 50.80 | 172.72 | 3.369 |
| E | 50.80 | 165.10 | 3.073 |
| F | 50.80 | 158.75 | 2.836 |
| G | 50.80 | 152.40 | 2.629 |
| H | 44.45 | 177.80 | 3.118 |
| J | 38.10 | 177.80 | 2.680 |

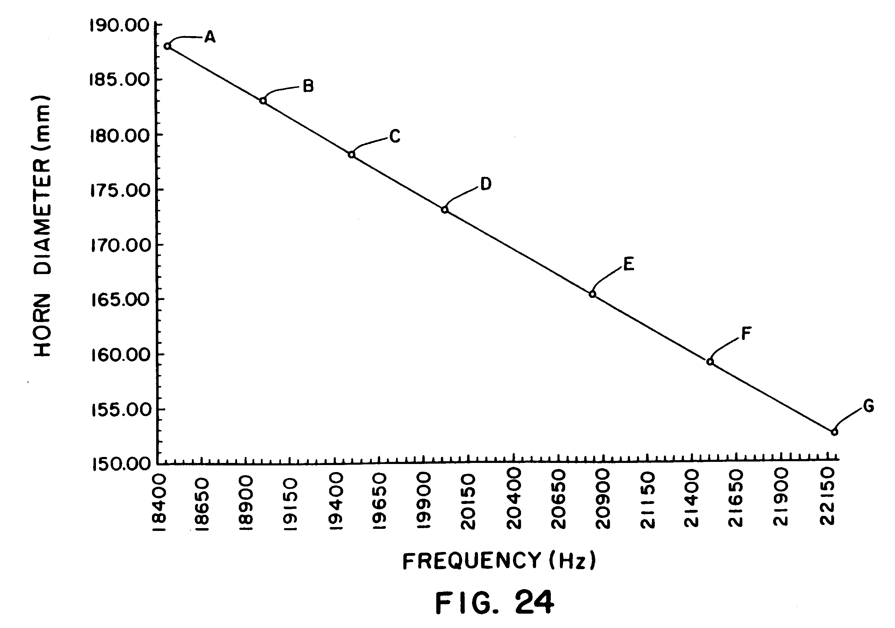

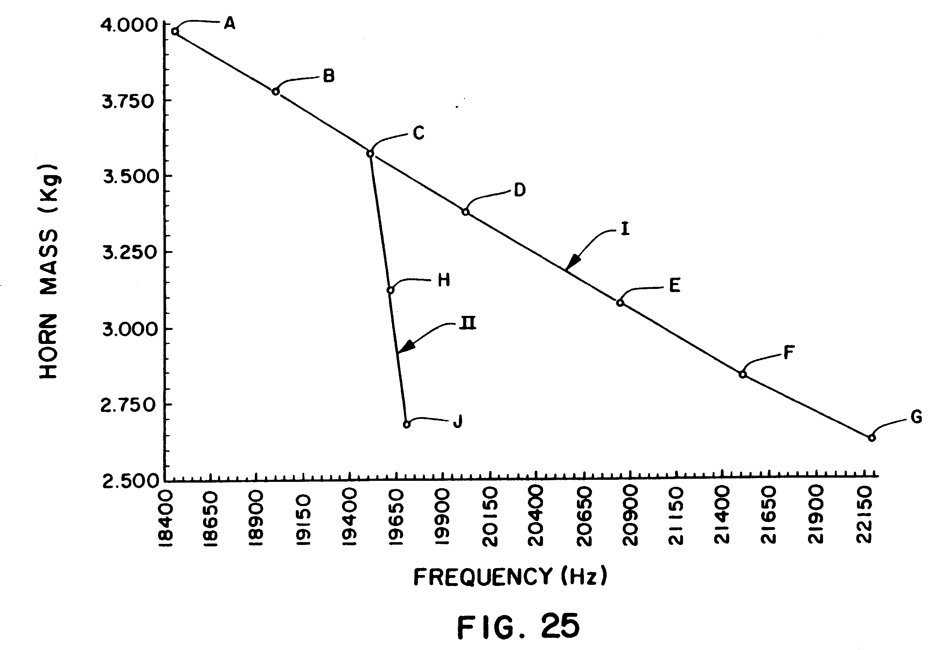

The acoustical properties of the horns were measured as already described. The results of these measurements are shown as FIGS. 24 and 25.

FIG. 24 is a plot of resonant frequency versus horn diameter in mm for seven horns having a constant width at the radial surface of 50.80 mm and varying diameters.

FIG. 25 consists of two plots. The first, curve I, is a plot of resonant frequency versus horn mass in kg for seven horns having a constant width at the radial surface of 50.80 mm and varying diameters. These seven horns are the same horns which were used to obtain the data for FIG. 24; in this case, it was only necessary to determine the mass of each horn and plot the resonant frequency values versus mass instead of horn diameter. The second curve of FIG. 25 (curve II) is a plot of resonant frequency versus horn mass at a constant horn diameter and varying widths at the radial surface.

From FIG. 24, it is seen that the resonant frequency is inversely proportional to horn diameter. Such frequency also is inversely proportional to horn mass, as shown by FIG. 25. However, the frequency is much more sensitive to changes in horn diameter than to changes in either horn mass, which were accomplished at a constant diameter by varying horn thicknesses, or in horn width.

### Example 3

### Determination of the Mode Shapes of the Horns of Example 1

From the discussion thus far, it is evident that the horn of the present invention functions in a manner which is different from that of the Mecasonic horn. In order to more fully understand the operating characteristics of the two horns, their mode shapes were determined experimentally.

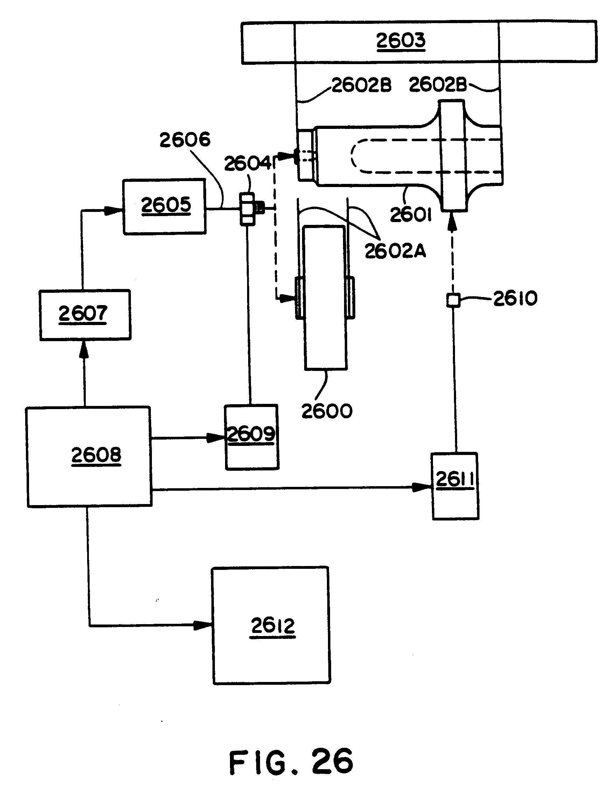

In order to carry out the modal analysis, the experimental set-up illustrated by FIG. 26 was employed. Depending upon the horn to be tested, the 20 kHz horn of the present invention 2600, or the Mecasonic horn 2601, was suspended by wires 2602A or wires 2602B, respectively, from support 2603. The equipment consisted of a Bruel and Kjaer Modal Analysis System (Bruel and Kjaer Instruments, Inc., Hoffman Estates, Illinois) in conjunction with a Hewlett-Packard HP9000-217 computer (Hewlett-Packard Company, Ft. Collins, Colorado). Specifically, Bruel and Kjaer Type 8200 Force Transducer 2604 was bolted to the horn under test at the input face. Force Transducer 2604 was connected to Bruel and Kjaer Type 4809 Vibration Exciter 2605 by means of 7.6-cm long, 3.2-mm diameter nylon rod 2606. Vibration Exciter 2605 was driven by Bruel and Kjaer Type 2606 Power Amplifier 2607 which in turn received its signal from Bruel and Kjaer Type 2032 Dual Channel Signal Analyzer 2608. Force Transducer 2604 also was connected to a first Bruel and Kjaer Type 2635 Charge Amplifier 2609 which in turn was connected to Signal Analyzer 2608. Just as the Force Transducer 2604 measured the frequency and force amplitude of the excitation energy being applied to the horn, the output acceleration amplitude and frequency at the radial surface of the horn were measured by Bruel and Kjaer Type 4374 Accelerometer 2610 which was connected to a second Bruel and Kjaer Type 2635 Charge Amplifier 2611. Finally, Signal Analyzer 2608 was connected to the Hewlett-Packard computer 2612.

Referring now to FIGS. 27 and 28, the Accelerometer 2610 was placed on the horn at the input. The input is represented by point 1ZA in FIG. 27 for the 20 kHz horn of the present invention and point 1ZB in FIG. 28 for the Mecasonic horn. A measurement was taken at that point for each horn while exciting the horn with random noise. Subsequent measurements then were taken at the other points indicated in FIGS. 27 and 28 for the horn of the present invention and the Mecasonic horn, respectively. As measurements were taken, the data obtained were transferred to Hewlett-Packard computer 2612 which, upon completion of the measurement process, was used to calculate and illustrate the mode shapes of the two horns.

The mode shapes of the 20 kHz horn of the present invention and the Mecasonic horn are illustrated by FIGS. 29 and 30, respectively. In each FIG., view A represents the undeformed or unexcited horn. Views B and C represent the deformed horn where the radial amplitude at the radial surface is at a minimum and a maximum, respectively. Under the influence of longitudinal excitation, the horn of the present invention expands and contracts in concertina or accordion fashion, with the ends moving away from and toward each other along the longitudinal or rotational axis. As the ends move away from each other, the diameter of the horn at the radial surface contracts. As the ends move toward each other, the diameter of the horn at the radial surface expands. Recalling FIG. 21, it will be noted that the motions of both the other end and the radial surface are out of phase with respect to the motion of the driven end. The practical consequence of such motions is a more uniform amplitude across the radial surface.

The Mecasonic horn, however, behaves very differently under the influence of longitudinal excitation. From FIGS. 22 and 30, it is seen that the motions of both the other end and the radial surface are in phase with respect to the motion of the driven end. As already noted, the radial amplitude decreases significantly on either side of the antinodal plane.

In viewing FIGS. 29 and 30, however, it should be kept in mind that the representations are not exact because of the limited number of points at which measurements were made. In addition, a straight-line relationship was assumed to exist between adjacent points, an assumption which may or may not be correct. While the figures are of value, no attempt should be made to interpret them as being precise representations of complete horn geometry.

### Example 4

### Relationship Between Horn Thickness and Gain for Horns Similar to the Horn of Example 2

Experiments then were carried out to determine the relationship between horn thickness and gain with 20 kHz horns of the present invention patterned after the horn of Example 2. Such experiments utilized the set-up and equipment depicted by FIG. 18 for the horn of the present invention, except that horn analyzer 1107 was not required. Nine horns similar to those already described were prepared from solid aluminum (these horns had dimensions and masses different from the horns used in conjunction with FIGS. 24 and 25, i.e., the horns of Example 2). The horns had thicknesses which varied from 38.10 to 95.25 mm. The horns were excited essentially as described above, except that the second probe 1109 was placed approximately in the center of the radial surface. The diameter of each horn was selected so that the horn would vibrate at about 20 kHz. Horn dimensions are summarized in Table 8, while the data obtained are summarized in Tables 9 and 10. With respect to both Tables 7 and 8, it should be noted that horn width is the width of the horn at the radial surface and horn diameter is the diameter of the radial surface.

**Table 8**

| Summary of Dimensions of 20 kHz Horns of the Present Invention for Gain Experiments | | | |
|---|---|---|---|
| Horn | Horn Width (mm) | Horn Diameter (mm) | Horn Mass (kg) |
| A | 38.12 | 175.36 | 2.606 |
| B | 44.45 | 174.40 | 2.998 |
| C | 45.67 | 173.94 | 3.063 |
| D | 50.77 | 173.25 | 3.376 |
| E | 63.47 | 169.54 | 4.041 |
| F | 76.20 | 164.06 | 4.530 |
| G | 82.55 | 159.97 | 4.666 |
| H | 88.87 | 154.33 | 4.677 |
| J | 95.25 | 148.34 | 4.630 |

**Table 9**

| Summary of Amplitude Data from Gain Experiments with 20 kHz Horns of the Present Invention ^{a} | | | | |
|---|---|---|---|---|
| Horn | Radial Amplitude | Long. Amplitude | Ave. Horn Gain ^{b} | Ave. PRG ^{c} |
| A | 35 | 14 | 2.5 | 10 |
| B | 30 | 15 | 2.0 | 10 |
| C | 30 | 15 | 2.0 | 10 |
| D | 30 | 18 | 1.7 | 10 |
| E | 22 | 17 | 1.3 | 14 |
| F | 18 | 18 | 1.0 | 13 |
| G | 16 | 18 | 0.9 | 13 |
| H | 14 | 17 | 0.8 | 14 |
| J | 14 | 19 | 0.7 | 12 |

| | | | | |
|---|---|---|---|---|
| ^{a}Amplitude values are given in µm, while the gain values are dimensionless. | | | | |
| ^{b}The ratio of radial amplitude to longitudinal amplitude. | | | | |
| ^{c}Power-related gain, in watts⁻¹ x 10³. | | | | |

**Table 10**

| Summary of Remaining Data from Gain Experiments with 20 kHz Horns of the Present Invention | | | |
|---|---|---|---|
| Horn | Power (watts) | Frequency (Hz) | Efficiency ^{a} |
| A | 240 | 20,033 | 0.14 |
| B | 200 | 20,060 | 0.15 |
| C | 195 | 20,048 | 0.16 |
| D | 170 | 20,021 | 0.18 |
| E | 95 | 20,063 | 0.23 |
| F | 75 | 20,044 | 0.24 |
| G | 70 | 20,052 | 0.23 |
| H | 60 | 20,072 | 0.24 |
| J | 60 | 20,024 | 0.24 |

| | | | |
|---|---|---|---|
| ^{a}In µm of radial amplitude per watt. | | | |

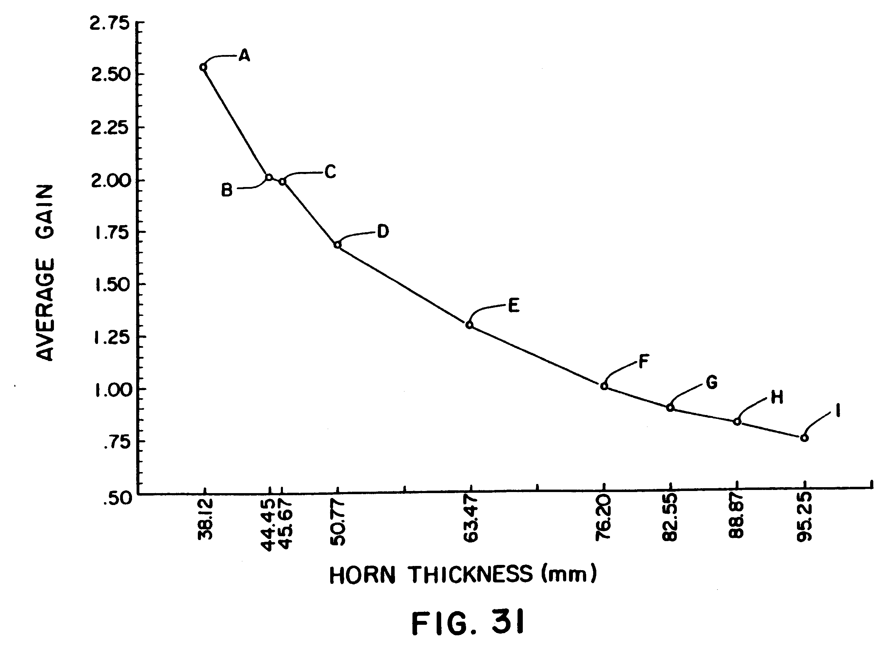

The horn gain values from Table 9 were plotted versus the horn width values from Table 8 as shown in FIG. 31. From FIG. 31 and the data in Tables 9 and 10, it is evident that horn gain varies inversely with horn width. Additionally, until horn width exceeds about 76 mm, the horn gain is equal to or greater than unity for horns of this configuration. On the other hand, horn efficiency, defined as radial amplitude microns per watt, increases with increasing horn width.

### Example 5

### Evaluation of a 20 kHz Horn Having a Centrally Located Raised Land

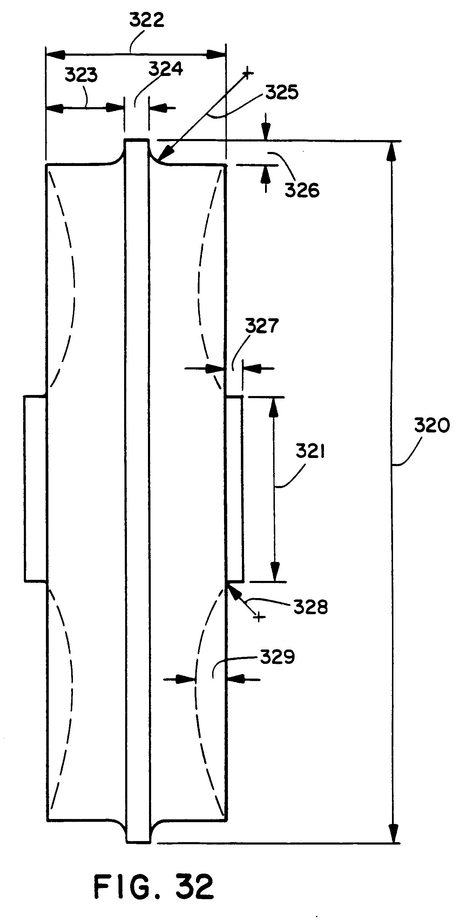

Performance data also were obtained for a 20 kHz ultrasonic rotary horn of the type illustrated by FIG. 10, i.e., a horn having a centrally located raised land on the work-contacting radial surface, except that the horn did not have an integral elongated waveguide. Again, the horn was machined from a solid piece of titanium. The actual horn dimensions are given in Table 15 with reference to FIG. 32 which is an end view representation of the horn. The curved portions of the ends had a second order profile; the second order equation employed was the same as was used for the ends of the horn of FIG. 16. The mass of the horn was 4.574 kg, including a threaded integral stud (not shown in FIG. 32) having a diameter of 0.75 inch (19.05 mm), a length of 0.5 inch (12.70 mm), and 20 threads per inch (25.4 mm), National Extra Fine.

**Table 15**

| Dimensions of the 20 kHz Horn of FIG. 34 | |
|---|---|
| Dimension | Value (mm) |
| 340 | 187.96 |
| 341 | 50.80 |
| 342 | 50.80 |
| 343 | 22.22 |
| 344 | 6.35 |
| 345 | 6.35 |
| 346 | 7.62 |
| 347 | 5.08 |
| 348 | 2.54 |
| 349 | 6.35 |

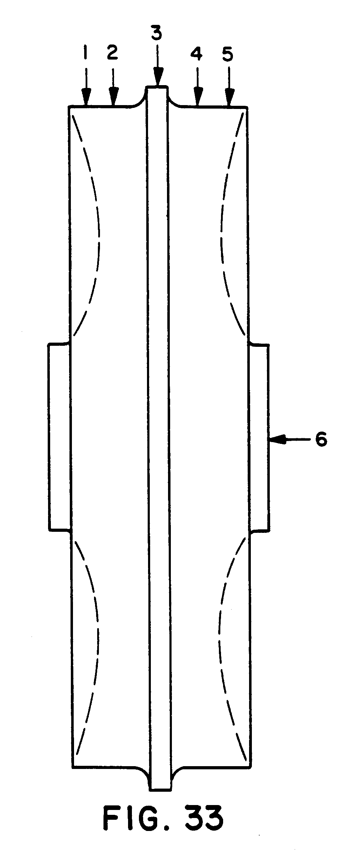

The measurements described in relation to FIG. 18 were repeated with the horn of FIG. 32. Briefly, the driver assembly, boosters, and horn were configured as shown in FIG. 18. The system was excited by means of the horn analyzer to determine the resonant frequency of the system. The generator then was activated and the system excited for one minute to allow the system to stabilize. After the stabilization period, one displacement measuring probe was placed at the excitation input to the horn and the other probe was placed at appropriate consecutive points, primarily along the radial surface of the horn. The locations of the displacement measuring probes are shown diagrammatically in FIG. 33. Point 6 represents the point of excitation input. With the generator on, the amplitude level, power consumption, and frequency were recorded at each of points 1-5, inclusive (FIG. 33). Each of points 1 and 5 was located approximately 4 mm from the nearest edge of the radial surface. In addition, each point on the radial surface of the horn was about 7-8 mm from adjacent points. Point 3 was in the center of the raised land. Data were obtained with three different combinations of first and second boosters in order to give three different total booster gain values, as shown in Table 16. The data for the three combinations of boosters are summarized in Tables 17-19, respectively.

**Table 16**

| Summary of Booster Combinations with the 20kHz Horn of FIG. 32 | | | |
|---|---|---|---|
| Combination | Total Gain | Power (watts) | Frequency (Hz) |
| 1 | 2.0 | 160 | 19,974 |
| 2 | 2.5 | 215 | 19,969 |
| 3 | 3.0 | 260 | 19,965 |

**Table 17**

| Summary of Data for the First Booster Combination with the 20 kHz Horn of FIG. 32 | | | | |
|---|---|---|---|---|
| Point | Amplitude (µm) | Horn Gain ^{a} | PRG ^{b} | Effic. ^{c} |
| 1 | 47.0 | 1.48 | 9.2 | 0.29 |
| 2 | 48.3 | 1.52 | 9.5 | 0.30 |
| 3 | 48.3 | 1.52 | 9.5 | 0.30 |
| 4 | 48.3 | 1.52 | 9.5 | 0.30 |
| 5 | 47.0 | 1.48 | 9.2 | 0.29 |
| 6 | 31.8 | - | - | - |

| | | | | |
|---|---|---|---|---|
| ^{a}The ratio of radial amplitude to longitudinal amplitude, the latter being represented by the amplitude value of point 6. | | | | |
| ^{b}Power-related gain, in watts⁻¹ x 10³. | | | | |
| ^{c}In µm per watt. | | | | |

**Table 18**

| Summary of Data for the Second Booster Combination with the 20 kHz Horn of FIG. 32 | | | | |
|---|---|---|---|---|
| Point | Amplitude (µm) | Horn Gain^{a} | PRG^{b} | Effic.^{c} |
| 1 | 61.0 | 1.50 | 7.0 | 0.28 |
| 2 | 63.5 | 1.56 | 7.3 | 0.30 |
| 3 | 64.8 | 1.60 | 7.4 | 0.30 |
| 4 | 63.5 | 1.56 | 7.3 | 0.30 |
| 5 | 62.2 | 1.53 | 7.1 | 0.29 |
| 6 | 40.6 | - | - | - |

| | | | | |
|---|---|---|---|---|
| ^{a}The ratio of radial amplitude to longitudinal amplitude, the latter being represented by the amplitude value of point 6. | | | | |
| ^{b}Power-related gain, in watts⁻¹ x 10³. | | | | |
| ^{c}In µm per watt. | | | | |

**Table 19**

| Summary of Data for the Third Booster Combination with the 20 kHz Horn of FIG. 32 | | | | |
|---|---|---|---|---|
| Point | Amplitude (µm) | Horn Gain ^{a} | PRG ^{b} | Effic.^{c} |
| 1 | 66.0 | 1.53 | 5.9 | 0.25 |
| 2 | 68.6 | 1.59 | 6.1 | 0.26 |
| 3 | 69.8 | 1.60 | 6.2 | 0.27 |
| 4 | 68.6 | 1.59 | 6.1 | 0.26 |
| 5 | 66.0 | 1.53 | 5.9 | 0.25 |
| 6 | 43.2 | - | - | - |

| | | | | |
|---|---|---|---|---|
| ^{a}The ratio of radial amplitude to longitudinal amplitude, the latter being represented by the amplitude value of point 6. | | | | |
| ^{b}Power-related gain, in watts⁻¹ x 10³. | | | | |
| ^{c}In µm per watt. | | | | |

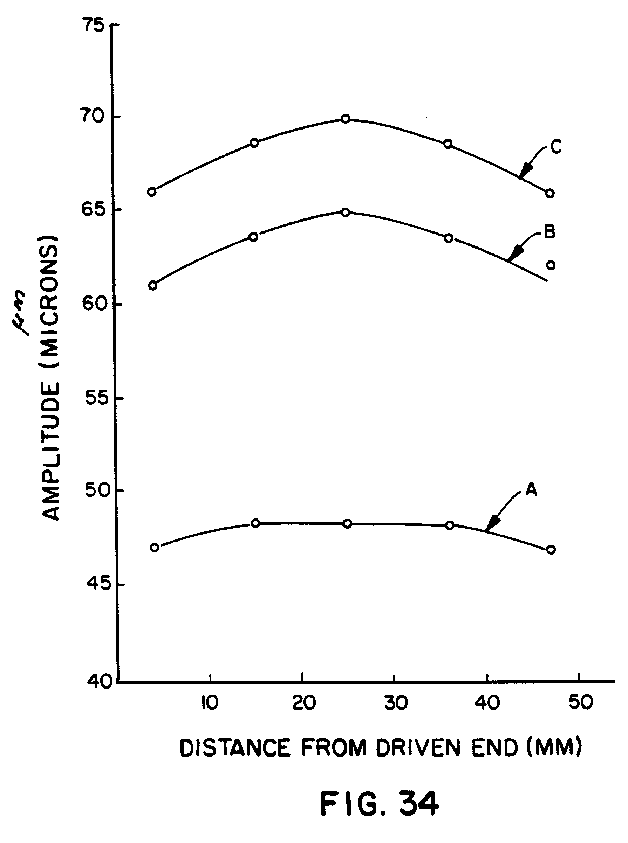

As the data in Tables 17-19, inclusive, demonstrate, the amplitude profile across the face of the radial surface is not flat. The amplitude profile plateaus in the central portion of the radial surface at the lowest power rating, but peaks at the center of the radial surface at the two highest power ratings. For convenience, the amplitude values obtained at each power rating were plotted versus the distance of each point from the driven end of the horn. These plots are shown in FIG. 34, in which curves A, B, and C represent the amplitude profiles at power ratings of 160, 215, and 260 watts, respectively (i.e., booster combinations 1-3).

### Example 6

### Evaluation of a 20 kHz Horn Having a Raised Land at the Opposing End

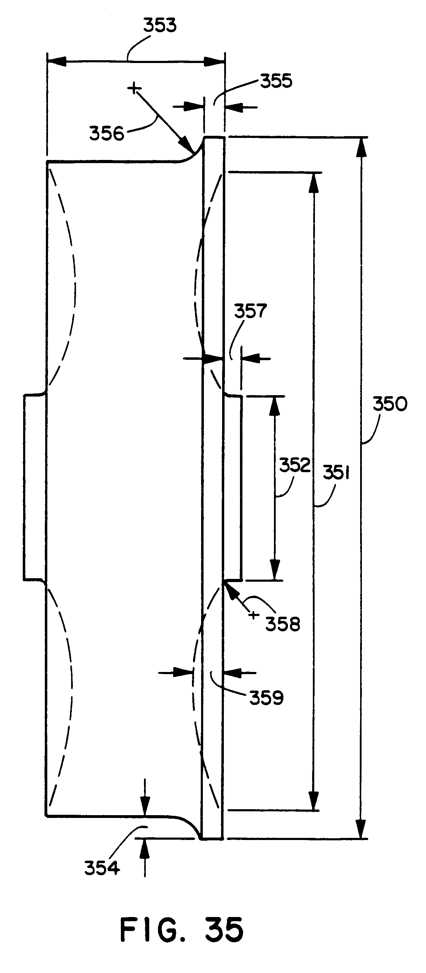

The measurements just described were repeated with a 20 kHz ultrasonic rotary horn of the type illustrated by FIG. 11, i.e., a horn having a raised land at the opposing end. The horn and the integral elongated waveguide were machined from a solid piece of titanium. The actual horn dimensions are given in Table 20 with reference to FIG. 35 which is an end view representation of the horn (the integral waveguide is not shown). The curved portions of the ends had a second order profile; the second order equation employed was the same as was used for the ends of the horn of FIG. 16 (again, for convenience, the concave portions of the ends in the drawings have circular profiles).

**Table 20**

| Dimensions of the 20 kHz Horn of FIG. 35 | |
|---|---|
| Dimension | Value (mm) |
| 370 | 189.23 |
| 371 | 172.72 |
| 372 | 50.80 |
| 373 | 50.80 |
| 374 | 7.62 |
| 375 | 6.35 |
| 376 | 6.35 |
| 377 | 5.08 |
| 378 | 2.54 |
| 379 | 6.35 |

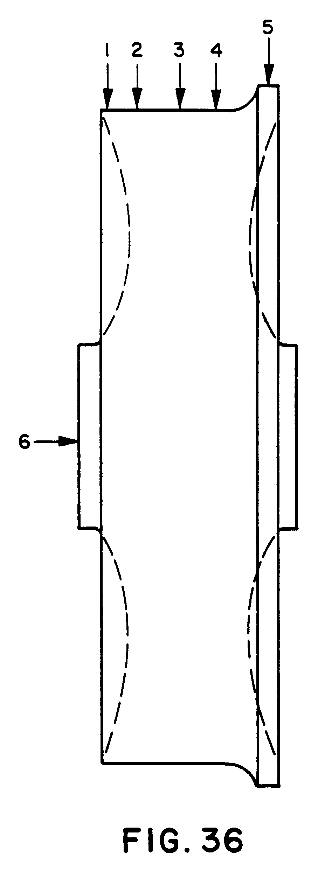

The measurements described in relation to FIG. 18 were repeated with the 20 kHz horn of FIG. 35, following the procedure just described for the horn of FIG. 32. In the present case, the horn had an integral elongated waveguide having a gain of 2.5:1, equivalent to the booster represented by 1802 of FIG. 18, and only one booster combination was employed. The drive booster (1801 of FIG. 18) was a DuKane 1.5:1 booster. Thus, the total gain of the system was 3.75. The locations of the measurement points are shown diagrammatically in FIG. 36; actual locations of the points are given in Table 21. Point 6 represents the point of excitation input. With the generator on, the amplitude level, power consumption, and frequency were recorded at each of points 1-5, inclusive (FIG. 36). The data obtained are summarized in Tables 22 and 23.

**Table 21**

| Distances of Measurement Points from the Driven End | |
|---|---|
| Point | (Distance from Driven End (mm) |
| 1 | 4 |
| 2 | 14 |
| 3 | 24 |
| 4 | 34 |
| 5 | 48 |

**Table 22**

| Summary of Data for the 20 kHz Horn of FIG. 35 | | |
|---|---|---|
| Point | Power (watts) | Frequency (Hz) |
| 1 | 855 | 19,980 |
| 2 | 855 | 19,963 |
| 3 | 855 | 19,964 |
| 4 | 855 | 19,965 |
| 5 | 855 | 19,959 |

**Table 23**

| Summary of Data for the 20 kHz Horn of FIG. 35 (Cont'd.) | | | | |
|---|---|---|---|---|
| Point | Amplitude (µm) | Horn Gain^{a} | PRG^{b} | Effic.^{c} |
| 1 | 119 | 1.17 | 1.4 | 0.14 |
| 2 | 122 | 1.20 | 1.4 | 0.14 |
| 3 | 124 | 1.22 | 1.4 | 0.15 |
| 4 | 127 | 1.25 | 1.5 | 0.15 |
| 5 | 152 | 1.49 | 1.7 | 0.18 |
| 6 | 102 | - | - | - |

| | | | | |
|---|---|---|---|---|
| ^{a}The ratio of radial amplitude to longitudinal amplitude, the latter being represented by the amplitude value of point 6. | | | | |
| ^{b}Power-related gain, in watts⁻¹x 10³. | | | | |
| ^{c}In µm per watt. | | | | |

### Example 7

### Evaluation of a 40 kHz Horn Similar to the Horn of Example 1

As noted from the foregoing description, all of the horns described thus far were designed to operate at a nominal frequency of 20 kHz. Accordingly, a smaller version of the horn of FIG. 16 was designed which would operate at a frequency of about 40 kHz; the horn was machined from titanium. The dimensions in mm of this horn are shown in Table 24 with reference to FIG. 16. In addition, the concave portions of the ends of the 40 kHz horn had a second order profile which is not shown in FIG. 16, the coefficients a and b having the values 0.2678 and -0.0644, respectively (for convenience, as already noted, the concave portions of the ends in the drawings have circular profiles). The estimated mass of the horn was 0.590 kg.

**Table 24**

| Dimensions of the 40 kHz Horn of FIG. 16 | |
|---|---|
| Dimension | Value (mm) |
| 170 | 87.10 |
| 171 | 25.40 |
| 172 | 25.40 |
| 173 | 2.54 |
| 174 | 2.54 |
| 175 | 3^{a} |
| 176 | 1.27 |

| | |
|---|---|
| ^{a}Approximate value. | |

The acoustical and mechanical properties of the 40 kHz horn were measured as already described. It was not possible to measure actual power consumption because the wattmeter was designed to operate at a frequency of about 20 kHz. However, power consumption was estimated to be about 160 watts at a total gain of 3.75. The integral (second) booster had a gain of 2.5:1, and four different drive (first) boosters were employed to give four different booster combinations as summarized in Table 25. The measurement data are summarized in Table 26.

**Table 25**

| Summary of Booster Combinations for the 40 kHz Horn of FIG. 16 | | | |
|---|---|---|---|
| | Booster Gain | | |
| Combin. | First Booster | Second Booster | Total |
| 1 | 1.0 | 2.5 | 2.5 |
| 2 | 1.5 | 2.5 | 3.75 |
| 3 | 2.0 | 2.5 | 5.0 |
| 4 | 2.5 | 2.5 | 6.25 |

**Table 26**

| Summary of Displacement Data for the 40 kHz Horn of FIG. 16 | | | |
|---|---|---|---|
| | Amplitude (µm) | | |
| Combin. | Radial | Longitudinal | Horn Gain^{a} |
| 1 | 10.2 | 6.6 | 1.5 |
| 2 | 14.5 | 9.7 | 1.5 |
| 3 | 18.3 | 12.4 | 1.5 |
| 4 | 20.3 | 14.2 | 1.4 |

| | | | |
|---|---|---|---|
| ^{a}The ratio of radial amplitude to longitudinal amplitude. | | | |

### Example 8

### Variation of Acoustical Performance with Changes in Horn Dimensions and Mass for Horns Similar to the Horn of Example 7

In order to determine how the acoustical performance of the 40 kHz horn varies with changes in horn dimensions and mass, eight horns having different diameters and masses, but similar end configurations and constant widths at the radial surface and constant thicknesses at the center of the horn, were made. Because the horns all had integral boosters, mass measurements were not made. The widths and diameters of these horns are given in Table 27.

**Table 27**

| 40 kHz Horn Dimensions | | |
|---|---|---|
| Horn | Horn Width (mm) | Horn Diameter (mm) |
| K | 25.40 | 96.52 |
| L | 25.40 | 95.55 |
| M | 25.40 | 94.54 |
| N | 25.40 | 92.58 |
| P | 25.40 | 89.74 |
| Q | 25.40 | 87.93 |
| R | 25.40 | 87.68 |
| S | 25.40 | 87.10 |

The acoustical properties of the horns were measured as already described. The horn frequency at each diameter is given in Table 28.

**Table 28**

| Frequency Values for 40 kHz Horns Having Varying Diameters | | |
|---|---|---|
| Horn | Horn Diameter (mm) | Horn Frequency (Hz) |
| K | 96.52 | 35,485 |
| L | 95.55 | 35,866 |
| M | 94.54 | 36,285 |
| N | 92.58 | 37,123 |
| P | 89.74 | 38,454 |
| Q | 87.93 | 39,354 |
| R | 87.68 | 39,485 |
| S | 87.10 | 39,767 |

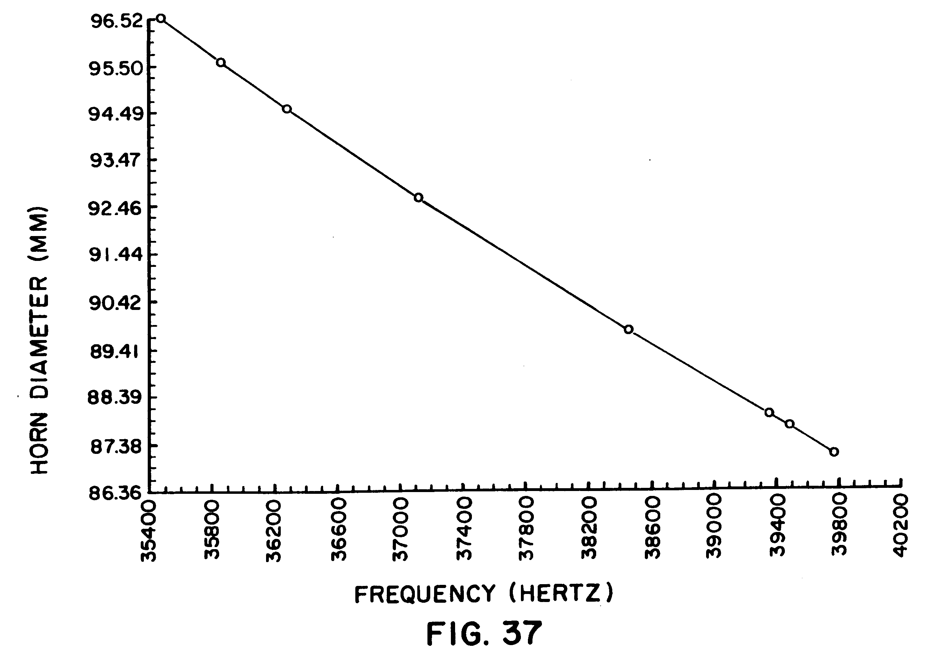

The data in Table 28 were plotted as diameter (y-axis) versus frequency (x-axis); the plot is shown in FIG. 37. By extrapolation from the plot, it is seen that to have a resonant frequency of exactly 40,000 Hz, the horn diameter should be 86.74 mm.
* 1 inch = 2.54 cm

### Example 9

### Evaluation of a Four-Inch* Wide 20 kHz Horn of the Present Invention

All of the horns studied in the preceding examples had widths at the radial work-contacting surfaces of no more than 50.80 mm. Accordingly, a horn similar to the horn of Example 1 and intended to be run at about 20 kHz was machined from titanium; the horn had a width of 101.60 mm at the work-contacting surface before being tuned to operate at about 20 kHz. The thickness of the horn at the longitudinal axis was less than the width. The ends of the horn were identical, except that the end to be excited was drilled and tapped with a 5/8-18NF tap 0.63-inch (about 16 mm) deep in the center to accept a threaded stud. The horn had a mass of 4.640 kg.

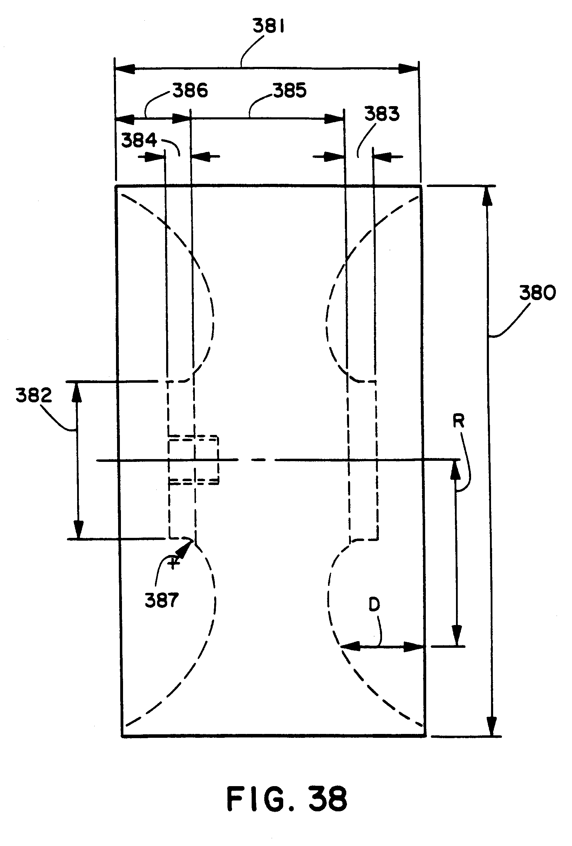

The dimensions in mm of the horn are given in Table 29 with reference to FIG. 38 which is an end view representation of the horn, except for the threaded stud which is not shown. The concave portions of the ends were identical and had a second order profile. It may be noted that the tuning process resulted in a reduction of the horn width from the original 101.60 mm (4 inches) to 79.38 mm (3.125 inches). For convenience, however, the horn will be referred to herein as a four-inch horn.

**Table 29**

| Dimensions of the Four-Inch Wide 20 kHz Horn of FIG. 38 | |
|---|---|
| Dimension | Value (mm) |
| 380 | 158.00 |
| 381 | 79.38 |
| 382 | 50.80 |
| 383 | 8.89 |
| 384 | 8.89 |
| 385 | 50.80 |
| 386 | 25.40 |
| 387 | 2.54 |

The values "R" and "D" in FIG. 38 are variable and define the concave portion of the ends. Thus, the value of D depends on the value of R. These profile dimensions are given in Table 30.

**Table 30**

| Concave End Profile Dimensions for the Four-Inch Wide 20 kHz Horn of FIG. 38 | |
|---|---|
| Value (mm) of R | Value (mm) of D |
| 27.94 | 14.60 |
| 30.48 | 16.25 |
| 33.02 | 17.67 |
| 35.56 | 18.84 |
| 38.10 | 19.73 |
| 40.64 | 20.39 |
| 43.18 | 20.80 |
| 45.72 | 20.95 |
| 48.26 | 20.85 |
| 50.80 | 20.49 |
| 53.34 | 19.91 |
| 55.88 | 19.04 |
| 58.42 | 17.95 |
| 60.96 | 16.58 |
| 63.50 | 14.98 |
| 66.04 | 13.13 |
| 68.58 | 11.02 |
| 71.12 | 8.66 |
| 73.66 | 5.28 |
| 76.20 | 3.17 |
| 78.74 | 0.05 |
| 79.00 | 0.00 |

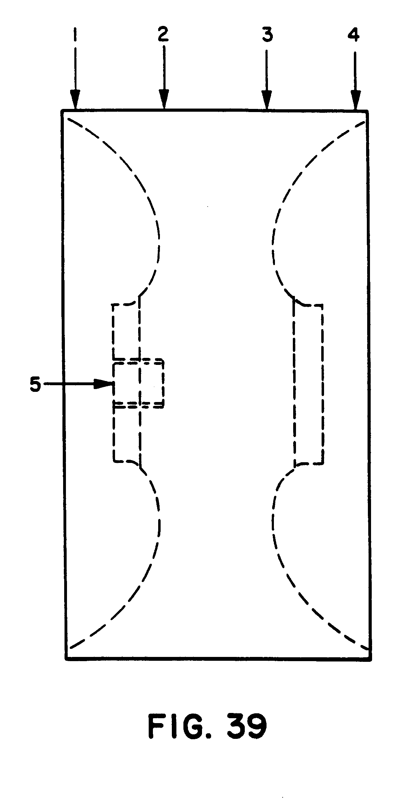

The measurements described in relation to FIG. 18 (Example 1) were repeated with the horn of FIG. 38. Briefly, the driver assembly, boosters, and horn were configured as shown in FIG. 18. The system was excited by means of the horn analyzer to determine the resonant frequency of the system. The generator then was activated and the system excited for one minute to allow the system to stabilize. After the stabilization period, one displacement measuring probe was placed at the excitation input to the horn and the other probe was placed at appropriate consecutive points along the radial surface of the horn. The locations of the displacement measuring probes are shown diagrammatically in FIG. 39. Point 5 represents the point of excitation input. With the generator on, the amplitude level, power consumption, and frequency were recorded at each of points 1-4, inclusive (FIG. 39). Each of points 1 and 4 was located approximately 6 mm from the nearest edge of the radial surface. In addition, each measurement point on the radial surface of the horn was about 22-23 mm from adjacent points. Data were obtained with three different combinations of first and second boosters in order to give three different total booster gain values. Each combination differed only in the gain of the second booster, identified in FIG. 18 as 1802. The gain of the second booster was 1:1, 1.5:1, and 2:1, respectively, for combinations 1, 2, and 3. In each case, the gain of the first booster, equivalent to 1801 in FIG. 18, was 1:1. Thus, the total gain from both boosters in each of combinations 1, 2, and 3 was 1, 1.5, and 2, respectively. The data for the three combinations of boosters are summarized in Tables 32 and 33.

**Table 31**

| Summary of Booster Combinations with the Four-Inch Wide 20 kHz Horn of FIG. 38 | | | |
|---|---|---|---|
| Combination | Total Gain | Power (watts) | Frequency (Hz) |
| 1 | 1.0 | 190 | 20,036 |
| 2 | 1.5 | 295 | 20,020 |
| 3 | 2.0 | 470 | 20,013 |

**Table 32**

| Summary of Data for the First Booster Combination with the Four-Inch Wide 20 kHz Horn of FIG. 38 | | | | |
|---|---|---|---|---|
| Point | Amplitude (µm) | Horn Gain^{a} | PRG^{b} | Effic.^{c} |
| 1 | 38.6 | 1.83 | 9.6 | 0.20 |
| 2 | 25.4 | 1.20 | 6.3 | 0.13 |
| 3 | 25.4 | 1.20 | 6.3 | 0.13 |
| 4 | 36.8 | 1.74 | 9.2 | 0.19 |
| 5 | 21.1 | - | - | - |

| | | | | |
|---|---|---|---|---|
| ^{a}The ratio of radial amplitude to longitudinal amplitude, the latter being represented by the amplitude value of point 5. | | | | |
| ^{b}Power-related gain, in watts⁻¹ x 10³. | | | | |
| ^{c}In µm per watt. | | | | |

**Table 33**

| Summary of Data for the Second Booster Combination with the Four-Inch Wide 20 kHz Horn of FIG. 38 | | | | |
|---|---|---|---|---|
| Point | Amplitude (µm) | Horn Gain^{a} | PRG^{b} | Effic.^{c} |
| 1 | 51.8 | 1.82 | 6.2 | 0.18 |
| 2 | 33.5 | 1.18 | 4.0 | 0.11 |
| 3 | 33.5 | 1.18 | 4.0 | 0.11 |
| 4 | 48.8 | 1.72 | 5.8 | 0.17 |
| 5 | 28.4 | - | - | - |

| | | | | |
|---|---|---|---|---|
| ^{a}The ratio of radial amplitude to longitudinal amplitude, the latter being represented by the amplitude value of point 5. | | | | |
| ^{b}Power-related gain, in watts⁻¹ x 10³. | | | | |
| ^{c}In µm per watt. | | | | |

**Table 34**

| Summary of Data for the Third Booster Combination with the Four-Inch Wide 20 kHz Horn of FIG. 38 | | | | |
|---|---|---|---|---|
| Point | Amplitude (µm) | Horn Gain^{a} | PRG^{b} | Effic.^{c} |
| 1 | 63.0 | 1.75 | 3.7 | 0.13 |
| 2 | 42.7 | 1.18 | 2.5 | 0.09 |
| 3 | 42.7 | 1.18 | 2.5 | 0.09 |
| 4 | 67.3 | 1.86 | 4.0 | 0.14 |
| 5 | 36.1 | - | - | - |

| | | | | |
|---|---|---|---|---|
| ^{a}The ratio of radial amplitude to longitudinal amplitude, the latter being represented by the amplitude value of point 6. | | | | |
| ^{b}Power-related gain, in watts⁻¹ x 10³. | | | | |
| ^{c}In µm per watt. | | | | |

### Example 10

### Evaluation of a Two-Inch Wide 20 kHz Aluminum Horn of the Present Invention

Another two-inch wide horn was machined from a solid piece of aluminum. The horn was essentially the same as the horn of Example 1, except that it was machined with an integral elongated waveguide having a gain of 2.5:1 and the tuned horn diameter was 174.68 mm instead of 170.6 mm. The horn was intended to operate at a frequency of about 20 kHz.

Two different drive or first boosters were employed to give two different booster combinations. In the first combination, the first booster had a gain of 1:1, and in the second the first booster had a gain of 1.5:1. The booster combinations are summarized in Table 35. Horn performance was measured for each combination as already described and is summarized in Tables 36 and 37.

**Table 35**

| Summary of Booster Combinations with the Two-Inch Wide 20 kHz Aluminum Horn | | | |
|---|---|---|---|
| Combination | Total Gain | Power (watts) | Frequency (Hz) |
| 1 | 2.5 | 100 | 19,987 |
| 2 | 3.75 | 260 | 19,931 |

**Table 36**

| Summary of Displacement Data for the Two-Inch Wide 20 kHz Aluminum Horn | | | | | |
|---|---|---|---|---|---|
| | Amplitude (µm) | | | | |
| Combin. | Radial | Longitudinal | Horn Gain^{a} | PRG^{b} | Effic.^{c} |
| 1 | 48.3 | 36.8 | 1.3 | 13.0 | 0.48 |
| 2 | 66.0 | 50.8 | 1.3 | 5.0 | 0.25 |

| | | | | | |
|---|---|---|---|---|---|
| ^{a}The ratio of radial amplitude to longitudinal amplitude. | | | | | |
| ^{b}Power-related gain, in watts⁻¹ x 10³. | | | | | |
| ^{c}Efficiency, in µm of radial amplitude per watt. | | | | | |

When the width of a horn of the present invention was of the order of 5 cm, the amplitude across the radial or work-contacting surface (i.e., the radial amplitude) was remarkably constant. As the width of the horn increased to about 10 cm, however, it was found that the radial amplitude varied significantly across the radial surface. By configuring the ends of such a wider horn in accordance with the preferred embodiment described below, the variance of the radial surface in general will be no more than about 20 percent.

Of course, the ends of a horn having a width at the radial surface which is significantly less than about 10 cm still can be configured in accordance with such preferred embodiment. In such a case, the radial amplitude will have the constancy already noted. Thus, such preferred embodiment will have its greatest utility with respect to horns having a width at the radial surface of from about 5 to about 13 cm.

In accordance with such preferred embodiment, each end of the horn will have a substantially concave configuration which comprises a central, circular, flat portion which is concentric with the rotational axis and a generally convex portion from the flat portion to the radial surface. The diameter of the flat portion is at least about 20 percent of the diameter of the horn.

The generally convex portion is a curved surface having axial symmetry and a curvilinear profile in cross-section through the rotational axis which lies in the triangular area defined by (i) a straight line leading from the outer boundary of the flat portion to the edge of the radial surface; (ii) a straight line parallel with the rotational axis which begins at the outer boundary of the flat portion and extends outwardly away from the horn; and (iii) a straight line which is perpendicular to the rotational axis and which extends from the edge of the radial surface to the straight line parallel with the rotational axis.

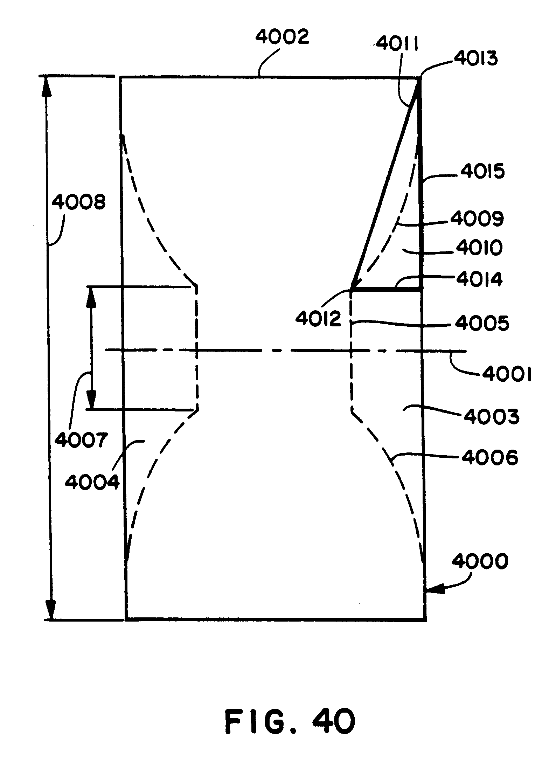

These conditions for the configuration of the ends being met, the horn will have a variance of no more than about 20 percent across the radial surface and the ratio of the average radial amplitude to the longitudinal amplitude will be at least 1. The foregoing dimensional parameters for the ends are better understood by reference to FIG. 40 which is an end-view diagrammatic representation of an ultrasonic rotary horn of the present invention having a preferred configuration of the ends; the figure illustrates the dimensional parameters of the horn. In the figure, horn 4000 has rotational axis 4001, radial surface 4002, and substantially concave ends 4003 and 4004. The broken lines show the profile of the ends in cross-section through the rotational axis. The ends are radially symmetrical and are mirror images of each other. An end consists of central, circular, flat portion 4005 and generally convex portion 4006. Flat portion 4005 is concentric with the rotational axis and has diameter 4007 which is at least about 20 percent of diameter 4008 of horn 4000. Generally convex portion 4006 is a curved surface having axial symmetry and curvilinear profile 4009 in cross-section through rotational axis 4001 which lies in the triangular area 4010 defined by (i) straight line 4011 leading from outer boundary 4012 of flat portion 4005 to edge 4013 of radial surface 4002; (ii) straight line 4014 which is parallel with rotational axis 4001 and which begins at outer boundary 4012 of flat portion 4005 and extends outwardly from the horn; and (iii) straight line 4015 which is perpendicular to rotational axis 4001 and which extends from edge 4013 of radial surface 4002 to straight line 4014. Straight line 4015 lies in the plane of edge 4013.

In common with other embodiments, the profile of the generally convex portion of the ends of the horn can be expressed mathematically, or not, as desired. When capable of mathematical expression, such profile can be circular, second order, inverse second order, exponential, inverse exponential, catenary, inverse catenary, gaussian, inverse gaussian, combinations thereof, and the like.

The following example demonstrates the improvement in variance for wide horns having the preferred configuration of the ends described hereinabove. The example utilized a titanium horn similar to that shown in FIG. 40; although not shown in FIG. 40, the horn had a threaded stud which was an integral part of the horn.

### Example 11

### A Horn of the Present Invention Having a Preferred End Configuration

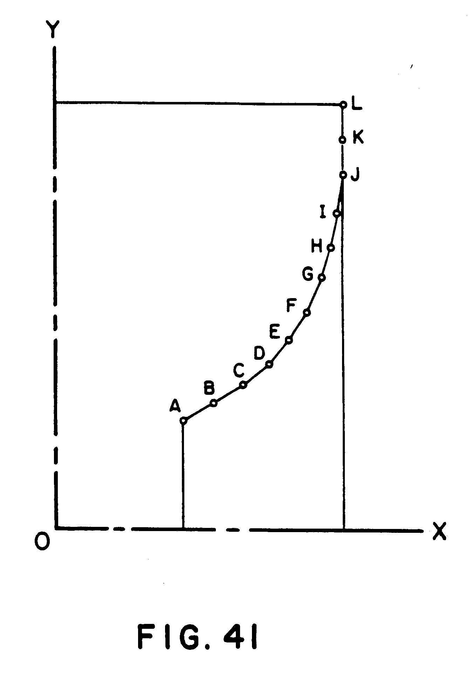

The horn had a width at the radial surface of 101.60 mm (4.000 inches) and a thickness in the region of the central, flat portion of 44.45 mm. The horn diameter was 152.40 mm. The circular flat portion of the ends had a diameter of 38.10 mm. The profile of the generally convex portion of the ends is given in Table 37 with reference to FIG. 41. FIG. 41 is an end-view diagrammatic representation of the upper right one-fourth of the horn. The broken line indicates the profile of the end in cross-section through the rotational axis which is represented by X. Each of points A-L is located a distance x from a line Y which bisects the horn in a plane which is perpendicular to the radial surface. Similarly, each of points A-L is located a distance y from the rotational axis. The values of x and y are given in Table 37.

**Table 37**

| Generally Convex Portion Profile Dimensions for the Horn of Example 11 | | |
|---|---|---|
| Point | x (mm) | y (mm) |
| A | 22.22 | 19.05 |
| B | 27.43 | 22.28 |
| C | 32.51 | 25.65 |
| D | 37.34 | 29.46 |
| E | 41.66 | 34.04 |
| F | 45.21 | 39.37 |
| G | 47.50 | 44.96 |
| H | 49.02 | 51.05 |
| I | 50.80 | 63.50 |
| J | - | - |
| K | 50.80 | 76.20 |

Measurements of the acoustical properties of the horn were carried out as already described, except that only one 2:1 booster was utilized. The first measurement on the radial surface was made about 5 mm from the edge nearest the driven end. Additional measurements across the radial surface were made at about 5-mm intervals, for a total of 19 measurements. The 20th measurement (point 20) was at the point of excitation to determine the longitudinal amplitude. The results are summarized in Table 38.

**Table 38**

| Summary of Data for the Horn of Example 11 | | | |
|---|---|---|---|
| Point | Amplitude (µm) | Horn Gain^{a} | Frequency (Hz) |
| 1 | 16.76 | 2.87 | 18,988 |
| 2 | 17.02 | 2.91 | 18,989 |
| 3 | 16.51 | 2.83 | 18,988 |
| 4 | 16.26 | 2.78 | 18,987 |
| 5 | 15.75 | 2.70 | 18,987 |
| 6 | 15.24 | 2.61 | 18,986 |
| 7 | 15.24 | 2.61 | 18,986 |
| 8 | 14.73 | 2.52 | 18,985 |
| 9 | 14.48 | 2.48 | 18,985 |
| 10 | 14.22 | 2.43 | 18,984 |
| 11 | 14.48 | 2.48 | 18,983 |
| 12 | 14.73 | 2.52 | 18,983 |
| 13 | 14.99 | 2.57 | 18,983 |
| 14 | 15.49 | 2.65 | 18,983 |
| 15 | 16.00 | 2.74 | 18,982 |
| 16 | 16.26 | 2.78 | 18,982 |
| 17 | 16.76 | 2.87 | 18,982 |
| 18 | 17.02 | 2.91 | 18,982 |
| 19 | 17.02 | 2.91 | 18,981 |
| 20 | 5.84 | - | 18,979 |

| | | | |
|---|---|---|---|
| ^{a}The ratio of radial amplitude to longitudinal amplitude, the latter being represented by the amplitude value of point 20. | | | |

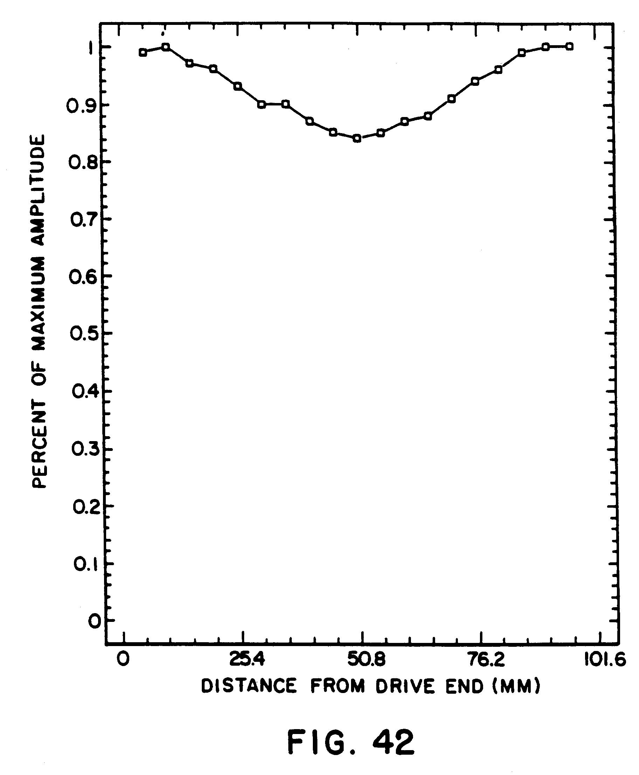

The radial amplitude values in Table 38 were converted to percent of maximum amplitude values as shown in Table 39 and plotted as percent of maximum amplitude versus distance from driven end as shown in FIG. 42.

**Table 39**

| Percent of Maximum Amplitude Values for the Horn of Example 11 | |
|---|---|
| Point | Percent of Maximum Amplitude |
| 1 | 99 |
| 2 | 100 |
| 3 | 97 |
| 4 | 96 |
| 5 | 93 |
| 6 | 90 |
| 7 | 90 |
| 8 | 87 |
| 9 | 85 |
| 10 | 84 |
| 11 | 85 |
| 12 | 87 |
| 13 | 88 |
| 14 | 91 |
| 15 | 94 |
| 16 | 96 |
| 17 | 99 |
| 18 | 100 |
| 19 | 100 |

From the data in Table 38, the variance was determined to be 16 percent. The average radial amplitude was 15.73. Thus, the ratio of the average radial amplitude to the longitudinal amplitude was 2.69.

The foregoing results should be compared with the results obtained in Example 9. The horn of Example 9 is similar to that of Example 11, except that the horn of Example 9 does not have the preferred end configuration for wider horns as described herein. The variance values for each of the three booster combinations for the horn of Example 9 are 34, 35, and 37 percent, respectively, although the amplitude or gain across the radial surface for each combination always was greater than 1. More specifically, the average radial amplitude for each booster combination was 31.6, 41.9, and 53.9, respectively. Thus, the ratio of the average radial amplitude to the longitudinal amplitude for each booster combination was 1.50, 1.48, and 1.49, respectively.

## Claims

1. An ultrasonic rotary horn (10; 20; 30; 40; 50; 60; 70; 80; 90; 100; 110; 120; 130; 140; 4000) intended to be excited at a frequency of from about 18 to about 60 kHz, which horn (10; 20; 30; 40; 50; 60; 70; 80; 90; 100; 110; 120; 130; 140; 4000) comprises a shaped, solid metal object having a radial surface (11; 21; 31; 41; 51; 61; 71; 81; 91; 101; 112; 121; 131; 141; 4002) terminated by a first end (12; 22; 32; 42; 52; 62; 72; 82; 92; 103; 113; 123; 132; 143; 4003) and a second end (13; 23; 35; 47; 55; 65; 75; 85; 95; 106; 116; 126; 135; 146; 4004), and a rotational axis (14; 24; 36; 48; 56; 68; 78; 88; 98; 109; 119; 129; 138; 149; 4001), in which each of said ends is defined by a surface and said object is axially symmetrical, whereby diameter, width, and thickness are selected for a desired frequency so that said horn (10; 20; 30; 40; 50; 60; 70; 80; 90; 100; 110; 120; 130; 140; 4000), upon being excited by ultrasonic energy at such frequency which is input at the rotational axis (14; 24; 36; 48; 56; 68; 78; 88; 98; 109; 119; 129; 138; 149; 4001) at, and substantially perpendicular to, one or both ends, is adapted to resonate in a manner such that:
(1) the excited end moves substantially in phase with the movement of the source of excitation;
(2) the opposing end, whether or not it is actively excited, moves substantially out of phase with the movement of the excited end;
(3) said radial work-contacting surface also moves substantially out of phase with the movement of the excited end; and
(4) said horn (10; 20; 30; 40; 50; 60; 70; 80; 90; 100; 110; 120; 130; 140; 4000) exhibits a single nodal point at its geometric center,
the rotary horn (10; 20; 30; 40; 50; 60; 70; 80; 90; 100; 110; 120; 130; 140; 4000) having a diameter that is greater than the width of the horn (10; 20; 30; 40; 50; 60; 70; 80; 90; 100; 110; 120; 130; 140; 4000), characterized by:
(A) the diameter of said horn (10; 20; 30; 40; 50; 60; 70; 80; 90; 100; 110; 120; 130; 140; 4000) being in the range of from about 4 cm to about 19 cm;
(B) the width of said horn (10; 20; 30; 40; 50; 60; 70; 80; 90; 100; 110; 120; 130; 140; 4000) at said radial surface (11; 21; 31; 41; 51; 61; 71; 81; 91; 101; 112; 121; 131; 141; 4002) being from about 0.6 cm to about 13 cm;
(C) the thickness of said horn (10; 20; 30; 40; 50; 60; 70; 80; 90; 100; 110; 120; 130; 140; 4000) at the rotational axis (14; 24; 36; 48; 56; 68; 78; 88; 98; 109; 119; 129; 138; 149; 4001) thereof being from about 0.6 cm to about 15 cm and being independent of the width of said horn (10; 20; 30; 40; 50; 60; 70; 80; 90; 100; 110; 120; 130; 140; 4000) at said radial surface (11; 21; 31; 41; 51; 61; 71; 81; 91; 101; 112; 121; 131; 141; 4002);
(D) said horn (10; 20; 30; 40; 50; 60; 70; 80; 90; 100; 110; 120; 130; 140; 4000) having a mass in the range of from about 0.06 kg to about 30 kg;
(E) said horn (10; 20; 30; 40; 50; 60; 70; 80; 90; 100; 110; 120; 130; 140; 4000) having a shape of a right circular cylindrical section;
(F) the diameter, width and thickness being selected so that the horn (10; 20; 30; 40; 50; 60; 70; 80; 90; 100; 110; 120; 130; 140; 4000) has a substantial disk-like shape; and
(G) the width of said horn (10; 20; 30; 40; 50; 60; 70; 80; 90; 100; 110; 120; 130; 140; 4000) at the radial surface (11; 21; 31; 41; 51; 61; 71; 81; 91; 101; 112; 121; 131; 141; 4002) and the thickness of said horn (10; 20; 30; 40; 50; 60; 70; 80; 90; 100; 110; 120; 130; 140; 4000) being such that the amplitude profile is essentially flat over the width of said radial surface (11; 21; 31; 41; 51; 61; 71; 81; 91; 101; 112; 121; 131; 141; 4002);
whereby a horn having a thickness greater than or the same as the diameter of said horn is excluded.

2. An ultrasonic rotary horn (10; 20; 30; 40; 50; 60; 70; 80; 90; 100; 110; 120; 130; 140; 4000) having a shape of a frustum with a curvilinear surface intended to be excited at a frequency of from about 18 to about 60 kHz, which horn (10; 20; 30; 40; 50; 60; 70; 80; 90; 100; 110; 120; 130; 140; 4000) comprises a shaped, solid metal object having a radial surface (11; 21; 31; 41; 51; 61; 71; 81; 91; 101; 112; 121; 131; 141; 4002) terminated by a first end (12; 22; 32; 42; 52; 62; 72; 82; 92; 103; 113; 123; 132; 143; 4003) and a second end (13; 23; 35; 47; 55; 65; 75; 85; 95; 106; 116; 126; 135; 146; 4004), and a rotational axis (14; 24; 36; 48; 56; 68; 78; 88; 98; 109; 119; 129; 138; 149; 4001), in which each of said ends is defined by a surface and said object is axially symmetrical, whereby diameter, width, and thickness are selected for a desired frequency so that said horn (10; 20; 30; 40; 50; 60; 70; 80; 90; 100; 110; 120; 130; 140; 4000), upon being excited by ultrasonic energy at such frequency which is input at the rotational axis (14; 24; 36; 48; 56; 68; 78; 88; 98; 109; 119; 129; 138; 149; 4001) at, and substantially perpendicular to, one or both ends, is adapted to resonate in a manner such that:
(1) the excited end moves substantially in phase with the movement of the source of excitation;
(2) the opposing end, whether or not it is actively excited, moves substantially out of phase with the movement of the excited end;
(3) said radial work-contacting surface also moves substantially out of phase with the movement of the excited end; and
(4) said horn (10; 20; 30; 40; 50; 60; 70; 80; 90; 100; 110; 120; 130; 140; 4000) exhibits a single nodal point at its geometric center,
the rotary horn (10; 20; 30; 40; 50; 60; 70; 80; 90; 100; 110; 120; 130; 140; 4000) having a diameter that is greater than the width of the horn (10; 20; 30; 40; 50; 60; 70; 80; 90; 100; 110; 120; 130; 140; 4000), characterized by:
(A) the diameter of said horn (10; 20; 30; 40; 50; 60; 70; 80; 90; 100; 110; 120; 130; 140; 4000) being in the range of from about 4 cm to about 19 cm;
(B) the width of said horn (10; 20; 30; 40; 50; 60; 70; 80; 90; 100; 110; 120; 130; 140; 4000) at said radial surface (11; 21; 31; 41; 51; 61; 71; 81; 91; 101; 112; 121; 131; 141; 4002) being from about 0.6 cm to about 13 cm;
(C) the thickness of said horn (10; 20; 30; 40; 50; 60; 70; 80; 90; 100; 110; 120; 130; 140; 4000) at the rotational axis (14; 24; 36; 48; 56; 68; 78; 88; 98; 109; 119; 129; 138; 149; 4001) thereof being from about 0.6 cm to about 15 cm and being independent of the width of said horn (10; 20; 30; 40; 50; 60; 70; 80; 90; 100; 110; 120; 130; 140; 4000) at said radial surface (11; 21; 31; 41; 51; 61; 71; 81; 91; 101; 112; 121; 131; 141; 4002);
(D) said horn (10; 20; 30; 40; 50; 60; 70; 80; 90; 100; 110; 120; 130; 140; 4000) having a mass in the range of from about 0.06 kg to about 30 kg;
(E) the diameter, width and thickness being selected so that the horn (10; 20; 30; 40; 50; 60; 70; 80; 90; 100; 110; 120; 130; 140; 4000) has a substantial disk-like shape; and
(F) the width of said horn (10; 20; 30; 40; 50; 60; 70; 80; 90; 100; 110; 120; 130; 140; 4000) at the radial surface (11; 21; 31; 41; 51; 61; 71; 81; 91; 101; 112; 121; 131; 141; 4002) and the thickness of said horn (10; 20; 30; 40; 50; 60; 70; 80; 90; 100; 110; 120; 130; 140; 4000) being such that the amplitude profile is essentially flat over the width of said radial surface (11; 21; 31; 41; 51; 61; 71; 81; 91; 101; 112; 121; 131; 141; 4002),
whereby a horn having a thickness greater than or the same as the diameter of said horn is excluded.

3. The ultrasonic rotary horn (30; 40; 50; 60; 70; 80; 90; 100; 110; 120; 130; 140; 4000) of claim 1 or 2, in which said first (32; 42; 52; 62; 72; 82; 92; 103; 113; 123; 132; 143; 4003) and/or second end (65; 75; 85; 95; 106; 116; 126; 135; 146; 4004) have a substantial concave configuration.

4. The ultrasonic rotary horn (10; 20; 50; 60; 70; 80; 90; 100; 110; 120; 130; 140; 4000) of one of claims 1 to 3, in which at least one end (12,13; 22,23; 52; 62,65; 72,75; 82,85; 92,95; 103,106; 113,116; 123,126; 132,135; 143,146) of said horn (10; 20; 50; 60; 70; 80; 90; 100; 110; 120; 130; 140) has a hub (17,18; 25,26; 53; 63,66; 73,76; 83,86; 93,96; 104,107; 114,117; 124,127; 133,136; 144,147).

5. The ultrasonic rotary horn (10; 20; 50; 60; 70; 80; 90; 100; 110; 120; 130; 140) of claim 4, in which said hub (17,18; 25,26; 53; 63,66; 73,76; 83,86; 93,96; 104,107; 114,117; 124,127; 133,136; 144,147) extends outwardly from said end (12,13; 22,23; 52; 62,65; 72,75; 82,85; 92,95; 103,106; 113,116; 123,126; 132,135; 143,146).

6. The ultrasonic rotary horn (20; 50; 60; 70; 80; 90; 100; 110; 120; 130; 140) of claim 4 or 5, in which said hub (25,26; 53; 63,66; 73,76; 83,86; 93,96; 104,107; 114,117; 124,127; 133,136; 144,147) is an integral part of said horn (20; 50; 60; 70; 80; 90; 100; 110; 120; 130; 140).

7. The ultrasonic rotary horn (10; 20; 50; 70; 80; 90; 100; 110; 120; 130; 140) of one of claims 4 to 6, in which said hub (17,18; 25,26; 53; 73,76; 83,86; 93,96; 104,107; 114,117; 124,127; 133,136; 144,147) extends beyond an edge (54; 64,67; 74,77; 84,87; 94,97; 105,108; 115,118; 125,128; 134,137; 145,148) of said radial surface (11; 21; 51; 71; 81; 91; 101; 112; 121; 131; 141) of said horn (10; 20; 50; 70; 80; 90; 100; 110; 120; 130; 140).

8. The ultrasonic rotary horn (10; 20; 70; 80) of one of the preceding claims, in which a stud (15A,16A; 27A,28A; 73B,76B; 83C,86C) protrudes from and is concentric with said end and/or said hub (17,18; 25; 73,76; 83,86).

9. The ultrasonic rotary horn (10; 20; 70; 80) of claim 8, in which said stud (15A,16A; 27A,28A; 73B,76B; 83C,86C) is threaded.

10. The ultrasonic rotary horn (10; 20; 70; 80) of claim 8 or 9, in which said stud (15A,16A; 27A,28A; 73B,76B; 83C,86C) is an integral part of said horn (10; 20; 70; 80).

11. The ultrasonic rotary horn (10; 20; 30; 40; 50; 60; 70; 80; 90; 4000) of one of the preceding claims, in which said radial surface (11; 21; 31; 41; 51; 61; 71; 81; 91; 4002) has a linear profile.

12. The ultrasonic rotary horn (100; 110; 120; 130; 140) of one of claims 1 to 10, in which said radial surface (101; 112; 121; 131; 141) has a nonlinear profile.

13. The ultrasonic rotary horn (100) of claim 12, in which said radial surface (101) has a centrally located raised land (102).

14. The ultrasonic rotary horn (110) of claim 12, in which said radial surface (112) has a raised land (111) located at one edge (118) thereof.

15. The ultrasonic rotary horn (10; 20; 30; 40; 50; 60; 70; 80; 90; 100; 110; 120; 130; 140; 4000) of one of the preceding claims, in which said horn diameter, width, and thickness, and the configuration of the end surfaces, are selected so that the average ratio of radial amplitude across said work-contacting surface to longitudinal amplitude is at least about 1 and the average value of radial amplitude across said radial work-contacting surface per watt of excitation power is at least about 0.14 µm.

16. The ultrasonic rotary horn (4000) of one of the preceding claims, in which said first end (4003) and said second end (4004) have a substantially concave configuration which comprises a central, circular, flat portion (4005) which is concentric with said rotational axis (4001) and a generally convex portion (4006) from said flat portion (4005) to said radial surface (4002), in which:
(a) the diameter of said flat portion (4005) is at least about 20 percent of the diameter of the horn (4000);
(b) said generally convex portion (4006) is a curved surface having axial symmetry and a curvilinear profile in cross-section through said rotational axis (4001) which lies in the triangular area defined by (i) a straight line leading from the outer boundary (4012) of said flat portion (4005) to the edge (4013) of said radial surface (4002); (ii) a straight line parallel with the rotational axis (4001) which begins at the outer boundary (4012) of the flat portion (4005) and extends outwardly away from the horn (4000); and (iii) a straight line which is perpendicular to the rotational axis (4001) and which extends from the edge (4013) of said radial surface (4002) to said straight line parallel with the rotational axis (4001);
(c) said horn (4000) has a variance of no more than about 20 percent across said radial surface (4002); and
(d) the ratio of the average radial amplitude to the longitudinal amplitude is at least 1.

17. The ultrasonic rotary horn (4000) of claim 16, in which the width of said horn (4000) at said radial surface (4002) is from 5 to 13 cm.

18. Use of the ultrasonic rotary horn (10; 20; 30; 40; 50; 60; 70; 80; 90; 100; 110; 120; 130; 140; 4000) of one of the preceding claims, for ultrasonically bonding two or more articles together or otherwise treating a material.

19. The use of the ultrasonic rotary horn (10; 20; 30; 40; 50; 60; 70; 80; 90; 100; 110; 120; 130; 140; 4000) of claim 18, in which vibrator means (1800) for providing a source of longitudinal mechanical vibration is coupled to one or both ends (12,13; 22,23; 32,35; 42,47; 52,55; 62,65; 72,75; 82,85; 92,95; 103,106; 113,116; 123,126; 132,135; 143,146; 4003,4004) of the horn (10; 20; 30; 40; 50; 60; 70; 80; 90; 100; 110; 120; 130; 140; 4000), optionally through an elongated waveguide, drive means rotate said ultrasonic rotary horn and/or a rotary anvil is provided in close proximity to said horn (10; 20; 30; 40; 50; 60; 70; 80; 90; 100; 110; 120; 130; 140; 4000).

20. An apparatus for ultrasonically bonding two or more materials together, or otherwise ultrasonically processing a material, which apparatus comprises an ultrasonic rotary horn (10; 20; 30; 40; 50; 60; 70; 80; 90; 100; 110; 120; 130; 140; 4000), a vibrator means (1800) for providing a source of longitudinal mechanical vibration coupled to one or both ends (12,13; 22,23; 32,35; 42,47; 52,55; 62,65; 72,75; 82,85; 92,95; 103,106; 113,116; 123,126; 132,135; 143,146; 4003,4004) of said horn (10; 20; 30; 40; 50; 60; 70; 80; 90; 100; 110; 120; 130; 140; 4000), optionally through an elongated waveguide, support means for said ultrasonic rotary horn, drive means for rotating said ultrasonic rotary horn, and a rotatable anvil in close proximity to said ultrasonic rotary horn, characterized in that the ultrasonic rotary horn is a horn according to any one of claims 1-17.

## Patentansprüche

1. Drehbares Ultraschallhorn (10; 20; 30; 40; 50; 60; 70; 80; 90; 100; 110; 120; 130; 140; 4000), das mit einer Frequenz von etwa 18 bis etwa 60 kHz zu erregen ist, wobei das Horn (10; 20; 30; 40; 50; 60; 70; 80; 90; 100; 110; 120; 130; 140; 4000) ein geformtes massives Metallobjekt umfaßt, das eine von einem ersten Ende (12; 22; 32; 42; 52; 62; 72; 82; 92; 103; 113; 123; 132; 143; 4003) und einem zweiten Ende (13; 23; 35; 47; 55; 65; 75; 85; 95; 106; 116; 126; 135; 146; 4004) begrenzte radiale Oberfläche (11; 21; 31; 41; 51; 61; 71; 81; 91; 101; 112; 121; 131; 141; 4002) aufweist, sowie eine Rotationsachse (14; 24; 36; 48; 56; 68; 78; 88; 98; 109; 119; 129; 138; 149; 4001), wobei jedes der Enden durch eine Oberfläche festgelegt ist und das Objekt axial symmetrisch ist, wobei Durchmesser, Breite und Dicke für eine gewünschte Frequenz gewählt sind, so daß das Horn (10; 20; 30; 40; 50; 60; 70; 80; 90; 100; 110; 120; 130; 140; 4000) bei Erregung mittels Ultraschallenergie mit einer derartigen Frequenz, die an der Rotationsachse (14; 24; 36; 48; 56; 68; 78; 88; 98; 109; 119; 129; 138; 149; 4001) an und im wesentlichen senkrecht zu einem oder beiden Enden angelegt wird, in der Lage ist, derart in Resonanz zu treten, daß
(1) das erregte Ende sich im wesentlichen phasengleich mit der Bewegung der Erregerquelle bewegt;
(2) das entgegengesetzte Ende, unabhängig davon, ob es aktiv erregt worden ist oder nicht, sich im wesentlichen phasenungleich mit der Bewegung des erregten Endes bewegt;
(3) die das Werkstuck berührende radiale Oberfläche sich ebenfalls phasenungleich mit der Bewegung des erregten Endes bewegt; und
(4) das Horn (10; 20; 30; 40; 50; 60; 70; 80; 90; 100; 110; 120; 130; 140; 4000) einen einzigen Knotenpunkt in seinem geometrischen Mittelpunkt aufweist,
wobei das drehbare Horn (10; 20; 30; 40; 50; 60; 70; 80; 90; 100; 110; 120; 130; 140; 4000) einen Durchmesser aufweist, der größer ist als die Breite des Horns (10; 20; 30; 40; 50; 60; 70; 80; 90; 100; 110; 120; 130; 140; 4000), dadurch gekennzeichnet, daß
(A) der Durchmesser des Horns (10; 20; 30; 40; 50; 60; 70; 80; 90; 100; 110; 120; 130; 140; 4000) im Bereich von etwa 4 cm bis etwa 19 cm liegt;
(B) die Breite des Horns (10; 20; 30; 40; 50; 60; 70; 80; 90; 100; 110; 120; 130; 140; 4000) an der radialen Oberfläche (11; 21; 31; 41; 51; 61; 71; 81; 91; 101; 112; 121; 131; 141; 4002) etwa 0,6 cm bis etwa 13 cm beträgt;
(C) die Dicke des Horns (10; 20; 30; 40; 50; 60; 70; 80; 90; 100; 110; 120; 130; 140; 4000) an der Rotationsachse (14; 24; 36; 48; 56; 68; 78; 88; 98; 109; 119; 129; 138; 149; 4001) davon etwa 0,6 cm bis etwa 15 cm beträgt und unabhängig von der Breite des Horns (10; 20; 30; 40; 50; 60; 70; 80; 90; 100; 110; 120; 130; 140; 4000) an der radialen Oberfläche (11; 21; 31; 41; 51; 61; 71; 81; 91; 101; 112; 121; 131; 141; 4002) ist;
(D) das Horn (10; 20; 30; 40; 50; 60; 70; 80; 90; 100; 110; 120; 130; 140; 4000) eine Masse im Bereich von etwa 0,06 kg bis etwa 30 kg aufweist;
(E) das Horn (10; 20; 30; 40; 50; 60; 70; 80; 90; 100; 110; 120; 130; 140; 4000) einen geraden kreisförmigen zylindrischen Querschnitt aufweist;
(F) der Durchmesser, die Breite und die Dicke derart gewählt sind, daß das Horn (10; 20; 30; 40; 50; 60; 70; 80; 90; 100; 110; 120; 130; 140; 4000) eine im wesentlichen plattenartige Form aufweist; und
(G) die Breite des Horns (10; 20; 30; 40; 50; 60; 70; 80; 90; 100; 110; 120; 130; 140; 4000) an der radialen Oberfläche (11; 21; 31; 41; 51; 61; 71; 81; 91; 101; 112; 121; 131; 141; 4002) und die Dicke des Horns (10; 20; 30; 40; 50; 60; 70; 80; 90; 100; 110; 120; 130; 140; 4000) derart sind, daß das Amplitudenprofil im wesentlichen flach über die Breite der radialen Oberfläche (11; 21; 31; 41; 51; 61; 71; 81; 91; 101; 112; 121; 131; 141; 4002) ist;
wobei ein Horn mit einer Dicke, die größer ist als der Durchmesser des Horns oder dieser entspricht, ausgeschlossen ist.

2. Drehbares Ultraschallhorn (10; 20; 30; 40; 50; 60; 70; 80; 90; 100; 110; 120; 130; 140; 4000), das die Form eines Kegelstumpfs mit einer krummlinigen Oberfläche aufweist und mit einer Frequenz von etwa 18 bis etwa 60 kHz zu erregen ist, wobei das Horn (10; 20; 30; 40; 50; 60; 70; 80; 90; 100; 110; 120; 130; 140; 4000) ein geformtes massives Metallobjekt umfaßt, das eine von einem ersten Ende (12; 22; 32; 42; 52; 62; 72; 82; 92; 103; 113; 123; 132; 143; 4003) und einem zweiten Ende (13; 23; 35; 47; 55; 65; 75; 85; 95; 106; 116; 126; 135; 146; 4004) begrenzte radiale Oberfläche (11; 21; 31; 41; 51; 61; 71; 81; 91; 101; 112; 121; 131; 141; 4002) aufweist, sowie eine Rotationsachse (14; 24; 36; 48; 56; 68; 78; 88; 98; 109; 119; 129; 138; 149; 4001), wobei jedes der Enden durch eine Oberfläche festgelegt ist und das Objekt axial symmetrisch ist, wobei Durchmesser, Breite und Dicke für eine gewünschte Frequenz gewählt sind, so daß das Horn (10; 20; 30; 40; 50; 60; 70; 80; 90; 100; 110; 120; 130; 140; 4000) bei Erregung mittels Ultraschallenergie mit einer derartigen Frequenz, die an der Rotationsachse (14; 24; 36; 48; 56; 68; 78; 88; 98; 109; 119; 129; 138; 149; 4001) an und im wesentlichen senkrecht zu einem oder beiden Enden angelegt wird, in der Lage ist, derart in Resonanz zu treten, daß
(1) das erregte Ende sich im wesentlichen phasengleich mit der Bewegung der Erregungsquelle bewegt;
(2) das entgegengesetzte Ende, ob es aktiv erregt worden ist oder nicht, sich im wesentlichen phasenungleich mit der Bewegung des erregten Endes bewegt; und
(3) die das Werkstück berührende radiale Oberfläche sich ebenfalls phasenungleich mit der Bewegung des erregten Endes bewegt,
(4) das Horn (10; 20; 30; 40; 50; 60; 70; 80; 90; 100; 110; 120; 130; 140; 4000) einen einzigen Knotenpunkt in seinem geometrischen Mittelpunkt aufweist,
wobei das Horn (10; 20; 30; 40; 50; 60; 70; 80; 90; 100; 110; 120; 130; 140; 4000) einen Durchmesser aufweist, der größer ist als die Breite des Horns (10; 20; 30; 40; 50; 60; 70; 80; 90; 100; 110; 120; 130; 140; 4000), dadurch gekennzeichnet, daß
(A) der Durchmesser des Horns (10; 20; 30; 40; 50; 60; 70; 80; 90; 100; 110; 120; 130; 140; 4000) im Bereich von etwa 4 cm bis etwa 19 cm liegt;
(B) die Breite des Horns (10; 20; 30; 40; 50; 60; 70; 80; 90; 100; 110; 120; 130; 140; 4000) an der radialen Oberfläche (11; 21; 31; 41; 51; 61; 71; 81; 91; 101; 112; 121; 131; 141; 4002) etwa 0,6 cm bis etwa 13 cm beträgt;
(C) die Dicke des Horns (10; 20; 30; 40; 50; 60; 70; 80; 90; 100; 110; 120; 130; 140; 4000) an der Rotationsachse (14; 24; 36; 48; 56; 68; 78; 88; 98; 109; 119; 129; 138; 149; 4001) davon etwa 0,6 cm bis etwa 15 cm beträgt und unabhängig von der Breite des Horns (10; 20; 30; 40; 50; 60; 70; 80; 90; 100; 110; 120; 130; 140; 4000) an der radialen Oberfläche (11; 21; 31; 41; 51; 61; 71; 81; 91; 101; 112; 121; 131; 141; 4002) ist;
(D) das Horn (10; 20; 30; 40; 50; 60; 70; 80; 90; 100; 110; 120; 130; 140; 4000) eine Masse im Bereich von etwa 0,06 kg bis etwa 30 kg aufweist;
(E) der Durchmesser, die Breite und die Dicke derart gewählt sind, daß das Horn (10; 20; 30; 40; 50; 60; 70; 80; 90; 100; 110; 120; 130; 140; 4000) eine im wesentlichen plattenartige Form aufweist; und
(F) die Breite des Horns (10; 20; 30; 40; 50; 60; 70; 80; 90; 100; 110; 120; 130; 140; 4000) an der radialen Oberfläche (11; 21; 31; 41; 51; 61; 71; 81; 91; 101; 112; 121; 131; 141; 4002) und die Dicke des Horns (10; 20; 30; 40; 50; 60; 70; 80; 90; 100; 110; 120; 130; 140; 4000) derart sind, daß das Amplitudenprofil im wesentlichen flach über die Breite der radialen Oberfläche (11; 21; 31; 41; 51; 61; 71; 81; 91; 101; 112; 121; 131; 141; 4002) ist;
wobei ein Horn mit einer Dicke, die größer ist als der Durchmesser des Horns oder dieser entspricht, ausgeschlossen ist.

3. Drehbares Ultraschallhorn (30; 40; 50; 60; 70; 80; 90; 100; 110; 120; 130; 140; 4000) gemäß Anspruch 1 oder 2, bei dem das erste Ende (32; 42; 52; 62; 72; 82; 92; 103; 113; 123; 132; 143; 4003) und/oder das zweite Ende (65; 75; 85; 95; 106; 116; 126; 135; 146; 4004) eine im wesentlichen konkave Konfiguration aufweisen.

4. Drehbares Ultraschallhorn (10; 20; 50; 60; 70; 80; 90; 100; 110; 120; 130; 140; 4000) gemäß einem der Ansprüche 1 bis 3, bei dem wenigstens ein Ende (12,13; 22,23; 52; 62,65; 72,75; 82,85; 92,95; 103,106; 113,116; 123,126; 132,135; 143,146) des Horns (10; 20; 50; 60; 70; 80; 90; 100; 110; 120; 130; 140) eine Nabe (17,18; 25,26; 53; 63;66; 73,76; 83,86; 93,96; 104,107; 114,117; 124,127; 133,136; 144,147) aufweist.

5. Drehbares Ultraschallhorn (10; 20; 50; 60; 70; 80; 90; 100; 110; 120; 130; 140) gemäß Anspruch 4, bei dem die Nabe (17,18; 25,26; 53; 63;66; 73,76; 83,86; 93,96; 104,107; 114,117; 124,127; 133,136; 144,147) sich nach außen von dem Ende (12,13; 22,23; 52; 62,65; 72,75; 82,85; 92,95; 103,106; 113,116; 123,126; 132,135; 143,146) erstreckt.

6. Drehbares Ultraschallhorn (20; 50; 60; 70; 80; 90; 100; 110; 120; 130; 140) gemäß Anspruch 4 oder 5, bei dem die Nabe (25,26; 53; 63;66; 73,76; 83,86; 93,96; 104,107; 114, 117; 124,127; 133,136; 144,147) ein integraler Bestandteil des Horns (20; 50; 60; 70; 80; 90; 100; 110; 120; 130; 140) ist.

7. Drehbares Ultraschallhorn (10; 20; 50; 70; 80; 90; 100; 110; 120; 130; 140) gemäß einem der Ansprüche 4 bis 6, bei dem die Nabe (17,18; 25,26; 53; 73,76; 83,86; 93,96; 104,107; 114,117; 124,127; 133,136; 144,147) sich über eine Kante (54; 64,67; 74,77; 84,87; 94,97; 105,108; 115,118; 125,128; 134,137; 145,148) der radialen Oberfläche (11; 21; 51; 71; 81; 91; 101; 112; 121; 131; 141) des Horns (10; 20; 50; 70; 80; 90; 100; 110; 120; 130; 140) erstreckt.

8. Drehbares Ultraschallhorn (10; 20; 70; 80) gemäß einem der vorhergehenden Ansprüche, bei dem ein Ansatz (15A,16A; 27A,28A; 73B,76B; 83C,86C) aus dem Ende und/oder der Nabe (17,18; 25; 73,76; 83,86) hervorsteht und konzentrisch mit diesem bzw. dieser ist.

9. Drehbares Ultraschallhorn (10; 20; 70; 80) gemäß Anspruch 8, bei dem der Ansatz (15A,16A; 27A,28A; 73B,76B; 83C,86C) mit einem Gewinde versehen ist.

10. Drehbares Ultraschallhorn (10; 20; 70; 80) gemäß Anspruch 8 oder 9, bei dem der Ansatz (15A,16A; 27A,28A; 73B,76B; 83C,86C) ein integraler Bestandteil des Horns (10; 20; 70; 80) ist.

11. Drehbares Ultraschallhorn (10; 20; 30; 40; 50; 60; 70; 80; 90; 4000) gemäß einem der vorhergehenden Ansprüche, bei dem die radiale Oberfläche (11; 21; 31; 41; 51; 61; 71; 81; 91; 4002) ein lineares Profil aufweist.

12. Drehbares Ultraschallhorn (100; 110; 120; 130; 140) gemäß einem der Ansprüche 1 bis 10, bei dem die radiale Oberfläche (101; 112; 121; 131; 141) ein nicht lineares Profil aufweist.

13. Drehbares Ultraschallhorn (100) gemäß Anspruch 12, bei dem die radiale Oberfläche (101) einen zentral angeordneten erhöhten Steg (102) aufweist.

14. Drehbares Ultraschallhorn (110) gemäß Anspruch 12, bei dem die radiale Oberfläche (112) einen erhöhten Steg (111) an einer Kante (118) davon aufweist.

15. Drehbares Ultraschallhorn (10; 20; 30; 40; 50; 60; 70; 80; 90; 100; 110; 120; 130; 140; 4000) gemäß einem der vorhergehenden Ansprüche, bei dem der Durchmesser, die Breite und die Dicke des Horns und die Konfiguration der Endoberflächen derart gewählt sind, daß das durchschnittliche Verhältnis der radialen Amplitude über die das Werkstück berührende Oberfläche zu der longitudinalen Amplitude wenigstens etwa 1 beträgt und der Durchschnittswert der radialen Amplitude über die das Werkstück berührende Oberfläche pro Watt Erregungsenergie wenigstens etwa 0,14 µm beträgt.

16. Drehbares Ultraschallhorn (4000) gemäß einem der vorhergehenden Ansprüche, bei dem das erste Ende (4003) und das zweite Ende (4004) eine im wesentlichen konkave Konfiguration aufweisen, die einen zentralen, kreisförmigen flachen Bereich (4005) aufweist, der mit der Drehachse (4001) konzentrisch ist, sowie einen im allgemeinen konvexen Bereich (4006), der sich von dem flachen Bereich (4005) zu der radialen Oberfläche (4002) erstreckt, wobei:
(a) der Durchmesser des flachen Bereichs (4005) wenigstens 20 % des Durchmessers des Horns (4000) beträgt;
(b) der im allgemeinen konvexe Bereich (4006) eine gekrümmte Oberfläche ist, die eine axiale Symmetrie und ein krummliniges Profil im Querschnitt durch die Rotationsachse (4001) aufweist, das in der Dreiecksfläche liegt, die festgelegt ist durch (i) eine von der äußeren Begrenzung (4012) des flachen Bereichs (4005) zu der Kante (4013) der radialen Oberfläche (4002) führende gerade Linie; (ii) eine sich parallel zur Drehachse (4001) erstreckende gerade Linie, die an der äußeren Begrenzung (4012) des flachen Bereichs (4005) beginnt und sich nach außen weg von dem Horn (4004) erstreckt; und (iii) eine gerade Linie, die sich senkrecht zu der Rotationsachse (4001) und von der Kante (4013) der radialen Oberfläche (4002) zu der sich parallel zu der Rotationsachse (4001) erstreckenden geraden Linie erstreckt;
(c) das Horn (4000) eine Varianz von nicht mehr als etwa 20 % über die radiale Oberfläche (4002) aufweist; und
(d) das Verhältnis der durchschnittlichen radialen Amplitude zu der longitudinalen Amplitude wenigstens 1 ist.

17. Drehbares Ultraschallhorn (4000) gemäß Anspruch 16, bei dem die Breite des Horns (4000) an der radialen Oberfläche (4002) 5 bis 13 cm beträgt.

18. Verwendung des Ultraschallhorns (10; 20; 30; 40; 50; 60; 70; 80; 90; 100; 110; 120; 130; 140; 4000) gemäß einem der vorhergehenden Ansprüche zum Verbinden von zwei oder mehr Artikel miteinander oder anderweitiger Behandlung eines Materials mittels Ultraschall.

19. Verwendung des Ultraschallhorns (10; 20; 30; 40; 50; 60; 70; 80; 90; 100; 110; 120; 130; 140; 4000) gemäß Anspruch 18, bei der ein Vibrationsmittel (1800) zur Bereitstellung einer Quelle für eine mechanische Vibration in Längsrichtung mit einem oder beiden Enden (12,13; 22,23; 32,33; 42,47; 52,55; 52; 62,65; 72,75; 82,85; 92,95; 103,106; 113,116; 123,126; 132,135; 143,146; 4003,4004) des Horns (10; 20; 30; 40; 50; 60; 70; 80; 90; 100; 110; 120; 130; 140; 4000), wahlweise mittels einer länglichen Wellenführung, gekoppelt ist, Antriebsmittel das Ultraschallhorn drehen und/oder ein drehbarer Amboß nahe des Horns (10; 20; 30; 40; 50; 60; 70; 80; 90; 100; 110; 120; 130; 140; 4000) angeordnet ist.

20. Vorrichtung zum Verbinden von zwei oder mehr Materialien mittels Ultraschall oder zur anderweitigen Verarbeitung eines Materials mittels Ultraschall, wobei die Vorrichtung ein drehbares Ultraschallhorn (10; 20; 30; 40; 50; 60; 70; 80; 90; 100; 110; 120; 130; 140; 4000), ein Vibrationsmittel (1800) zur Bereitstellung einer Quelle für eine mechanische Vibration in Längsrichtung, das mit einem oder beiden Enden (12,13; 22,23; 32,35; 42,47; 52,55; 62,65; 72,75; 82,85; 92,95; 103,106; 113,116; 123,126; 132,135; 143,146; 4003,4004) des Horns (10; 20; 30; 40; 50; 60; 70; 80; 90; 100; 110; 120; 130; 140; 4000), wahlweise mittels einer länglichen Wellenführung, gekoppelt ist, ein Unterstützungsmittel für das drehbare Ultraschallhorn, Antriebsmittel zum Drehen des drehbaren Ultraschallhorns und einen drehbaren Amboß nahe des drehbaren Ultraschallhorns aufweist, dadurch gekennzeichnet, daß das drehbare Ultraschallhorn ein Horn gemäß einem der Ansprüche 1-17 ist.

## Revendications

1. Sonotrode rotative (10; 20; 30; 40; 50; 60; 70; 80; 90; 100; 110; 120; 130; 140; 4000) destinée à être excitée à une fréquence d'environ 18 à environ 60 kHz, laquelle sonotrode (10; 20; 30; 40; 50; 60; 70; 80; 90; 100; 110; 120; 130; 140; 4000) est constituée d'un objet métallique plein conformé ayant une surface radiale (11; 21; 31; 41; 51; 61; 71; 81; 91; 101; 112; 121; 131; 141; 4002) terminée par une première extrémité (12; 22; 32; 42; 52; 62; 72; 82; 92; 103; 113; 123; 132; 143; 4003) et une seconde extrémité (13; 23; 35; 47; 55; 65; 75; 85; 95; 106; 116; 126; 135; 146; 4004), et un axe de rotation (14; 24; 36; 48; 56; 68; 78; 88; 98; 109; 119; 129; 138; 149; 4001), objet dans lequel chacune desdites extrémités est définie par une surface et qui est axialement symétrique, le diamètre, la largeur et l'épaisseur étant sélectionnés pour une fréquence voulue de telle sorte que ladite sonotrode (10; 20; 30; 40; 50; 60; 70; 80; 90; 100; 110; 120; 130; 140; 4000), lorsqu'elle est excitée par de l'énergie ultrasonique à une telle fréquence qui est appliquée au niveau de l'axe de rotation (14; 24; 36; 48; 56; 68; 78; 88; 98; 109; 119; 129; 138; 149; 4001) à l'une ou aux deux extrémités, et sensiblement perpendiculaire à celles-ci, est adaptée à résonner d'une manière telle que :
(1) l'extrémité excitée se déplace sensiblement en phase avec le mouvement de la source d'excitation ;
(2) l'extrémité opposée, qu'elle soit ou non activement excitée, se déplace sensiblement hors de phase avec le mouvement de l'extrémité excitée ;
(3) ladite surface radiale au contact du matériau à travailler se déplace également hors de phase avec le mouvement de l'extrémité excitée ; et
(4) ladite sonotrode (10; 20; 30; 40; 50; 60; 70; 80; 90; 100; 110; 120; 130; 140; 4000) présente un unique point nodal au niveau de son centre géométrique,
la sonotrode rotative (10; 20; 30; 40; 50; 60; 70; 80; 90; 100; 110; 120; 130; 140; 4000) ayant un diamètre qui est supérieur à la largeur de la sonotrode (10; 20; 30; 40; 50; 60; 70; 80; 90; 100; 110; 120; 130; 140; 4000), caractérisée en ce que :
(A) le diamètre de ladite sonotrode (10; 20; 30; 40; 50; 60; 70; 80; 90; 100; 110; 120; 130; 140; 4000) est compris dans la gamme allant d'environ 4 cm à environ 19 cm ;
(B) la largeur de ladite sonotrode (10; 20; 30; 40; 50; 60; 70; 80; 90; 100; 110; 120; 130; 140; 4000) au niveau de ladite surface radiale (11; 21; 31; 41; 51; 61; 71; 81; 91; 101; 112; 121; 131; 141; 4002) est comprise entre environ 0,6 cm et environ 13 cm ;
(C) l'épaisseur de ladite sonotrode (10; 20; 30; 40; 50; 60; 70; 80; 90; 100; 110; 120; 130; 140; 4000) au niveau de son axe de rotation (14; 24; 36; 48; 56; 68; 78; 88; 98; 109; 119; 129; 138; 149; 4001) est comprise entre environ 0,6 cm et environ 15 cm et est indépendante de la largeur de ladite sonotrode (10; 20; 30; 40; 50; 60; 70; 80; 90; 100; 110; 120; 130; 140; 4000) au niveau de ladite surface radiale (11; 21; 31; 41; 51; 61; 71; 81; 91; 101; 112; 121; 131; 141; 4002) ;
(D) ladite sonotrode (10; 20; 30; 40; 50; 60; 70; 80; 90; 100; 110; 120; 130; 140; 4000) a une masse comprise dans la gamme allant d'environ 0,06 kg à environ 30 kg ;
(E) ladite sonotrode (10; 20; 30; 40; 50; 60; 70; 80; 90; 100; 110; 120; 130; 140; 4000) a une forme en section droite de cylindre circulaire ;
(F) le diamètre, la largeur et l'épaisseur sont choisis de telle sorte que la sonotrode (10; 20; 30; 40; 50; 60; 70; 80; 90; 100; 110; 120; 130; 140; 4000) a sensiblement la forme d'un disque ; et
(G) la largeur de la ladite sonotrode (10; 20; 30; 40; 50; 60; 70; 80; 90; 100; 110; 120; 130; 140; 4000) au niveau de la surface radiale (11; 21; 31; 41; 51; 61; 71; 81; 91; 101; 112; 121; 131; 141; 4002) et l'épaisseur de ladite sonotrode (10; 20; 30; 40; 50; 60; 70; 80; 90; 100; 110; 120; 130; 140; 4000) sont telles que le profil d'amplitude est essentiellement plat sur la largeur de ladite surface radiale (11; 21; 31; 41; 51; 61; 71; 81; 91; 101; 112; 121; 131; 141; 4002) ;
de sorte qu'une sonotrode ayant une épaisseur supérieure ou égale au diamètre de ladite sonotrode est exclue.

2. Sonotrode rotative (10; 20; 30; 40; 50; 60; 70; 80; 90; 100; 110; 120; 130; 140; 4000) ayant une forme tronconique avec une surface curviligne destinée à être excitée à une fréquence d'environ 18 à environ 60 kHz, laquelle sonotrode (10; 20; 30; 40; 50; 60; 70; 80; 90; 100; 110; 120; 130; 140; 4000) est constituée d'un objet métallique conformé plein ayant une surface radiale (11; 21; 31; 41; 51; 61; 71; 81; 91; 101; 112; 121; 131; 141; 4002) se terminant par une première extrémité (12; 22; 32; 42; 52; 62; 72; 82; 92; 103; 113; 123; 132; 143; 4003) et une seconde extrémité (13; 23; 35; 47; 55; 65; 75; 85; 95; 106; 116; 126; 135; 146; 4004), et un axe de rotation (14; 24; 36; 48; 56; 68; 78; 88; 98; 109; 119; 129; 138; 149; 4001), objet dans lequel chacune desdites extrémités est définie par une surface et qui est axialement symétrique, le diamètre, la largeur et l'épaisseur étant sélectionnés pour une fréquence voulue de telle sorte que ladite sonotrode (10; 20; 30; 40; 50; 60; 70; 80; 90; 100; 110; 120; 130; 140; 4000), lorsqu'elle est excitée par de l'énergie ultrasonique à une telle fréquence qui est appliquée au niveau de l'axe de rotation (14; 24; 36; 48; 56; 68; 78; 88; 98; 109; 119; 129; 138; 149; 4001) au niveau de l'une ou de ses deux extrémités, et sensiblement perpendiculaire à celles-ci, est adaptée à résonner d'une manière telle que :
(1) l'extrémité excitée se déplace sensiblement en phase avec le mouvement de la source d'excitation ;
(2) l'extrémité opposée, qu'elle soit ou non activement excitée, se déplace sensiblement hors de phase avec le mouvement de l'extrémité excitée ;
(3) ladite surface radiale au contact du matériau à travailler se déplace également hors de phase avec le mouvement de l'extrémité excitée ; et
(4) ladite sonotrode (10; 20; 30; 40; 50; 60; 70; 80; 90; 100; 110; 120; 130; 140; 4000) présente un unique point nodal au niveau de son centre géométrique,
la sonotrode rotative (10; 20; 30; 40; 50; 60; 70; 80; 90; 100; 110; 120; 130; 140; 4000) ayant un diamètre qui est supérieur à la largeur de la sonotrode (10; 20; 30; 40; 50; 60; 70; 80; 90; 100; 110; 120; 130; 140; 4000), caractérisée en ce que :
(A) le diamètre de ladite sonotrode (10; 20; 30; 40; 50; 60; 70; 80; 90; 100; 110; 120; 130; 140; 4000) est compris dans la gamme allant d'environ 4 cm à environ 19 cm ;
(B) la largeur de ladite sonotrode (10; 20; 30; 40; 50; 60; 70; 80; 90; 100; 110; 120; 130; 140; 4000) au niveau de ladite surface radiale (11; 21; 31; 41; 51; 61; 71; 81; 91; 101; 112; 121; 131; 141; 4002) est comprise entre environ 0,6 cm et environ 13 cm ;
(C) l'épaisseur de ladite sonotrode (10; 20; 30; 40; 50; 60; 70; 80; 90; 100; 110; 120; 130; 140; 4000) au niveau de son axe de rotation (14; 24; 36; 48; 56; 68; 78; 88; 98; 109; 119; 129; 138; 149; 4001) est comprise entre environ 0,6 cm et environ 15 cm et est indépendante de la largeur de ladite sonotrode (10; 20; 30; 40; 50; 60; 70; 80; 90; 100; 110; 120; 130; 140; 4000) au niveau de ladite surface radiale (11; 21; 31; 41; 51; 61; 71; 81; 91; 101; 112; 121; 131; 141; 4002) ;
(D) ladite sonotrode (10; 20; 30; 40; 50; 60; 70; 80; 90; 100; 110; 120; 130; 140; 4000) a une masse comprise dans la gamme allant d'environ 0,06 kg à environ 30 kg ;
(E) le diamètre, la largeur et l'épaisseur sont choisis de telle sorte que la sonotrode (10; 20; 30; 40; 50; 60; 70; 80; 90; 100; 110; 120; 130; 140; 4000) a sensiblement la forme d'un disque ; et
(F) la largeur de ladite sonotrode (10; 20; 30; 40; 50; 60; 70; 80; 90; 100; 110; 120; 130; 140; 4000) au niveau de la surface radiale (11; 21; 31; 41; 51; 61; 71; 81; 91; 101; 112; 121; 131; 141; 4002) et l'épaisseur de ladite sonotrode (10; 20; 30; 40; 50; 60; 70; 80; 90; 100; 110; 120; 130; 140; 4000) sont telles que le profil d'amplitude est essentiellement plat sur la largeur de ladite surface radiale (11; 21; 31; 41; 51; 61; 71; 81; 91; 101; 112; 121; 131; 141; 4002),
une sonotrode ayant une épaisseur supérieure ou égale au diamètre de ladite sonotrode étant exclue.

3. Sonotrode rotative (30; 40; 50; 60; 70; 80; 90; 100; 110; 120; 130; 140; 4000) selon la revendication 1 ou 2, dans laquelle ladite première extrémité (32; 42; 52; 62; 72; 82; 92; 103; 113; 123; 132; 143; 4003) et/ou la seconde extrémité (65; 75; 85; 95; 106; 116; 126; 135; 146; 4004) ont une configuration sensiblement concave.

4. Sonotrode rotative (10; 20; 50; 60; 70; 80; 90; 100; 110; 120; 130; 140; 4000) selon l'une des revendications 1 à 3, dans laquelle l'une au moins des extrémités (12,13; 22,23; 52; 62,65; 72,75; 82,85; 92,95; 103,106; 113,116; 123,126; 132,135; 143,146) de ladite sonotrode (10; 20; 50; 60; 70; 80; 90; 100; 110; 120; 130; 140) comporte un moyeu (17,18; 25,26; 53; 63,66; 73,76; 83,86; 93,96; 104,107; 114,117; 124,127; 133,136; 144,147).

5. Sonotrode rotative (10; 20; 50; 60; 70; 80; 90; 100; 110; 120; 130; 140) selon la revendication 4, dans laquelle ledit moyeu (17,18; 25,26; 53; 63,66; 73,76; 83,86; 93,96; 104,107; 114,117; 124,127; 133,136; 144,147) s'étend vers l'extérieur à partir de ladite extrémité (12,13; 22,23; 52; 62,65; 72,75; 82,85; 92,95; 103,106; 113,116; 123,126; 132,135; 143,146).

6. Sonotrode rotative (20; 50; 60; 70; 80; 90; 100; 110; 120; 130; 140) selon la revendication 4 ou 5, dans laquelle ledit moyeu (25,26; 53; 63,66; 73,76; 83,86; 93,96; 104,107; 114,117; 124,127; 133,136; 144,147) fait partie intégrante de ladite sonotrode (20; 50; 60; 70; 80; 90; 100; 110; 120; 130; 140).

7. Sonotrode rotative (10; 20; 50; 70; 80; 90; 100; 110; 120; 130; 140) selon l'une des revendication 4 à 6, dans laquelle ledit moyeu (17,18; 25,26; 53; 73,76; 83,86; 93,96; 104,107; 114,117; 124,127; 133,136; 144,147) s'étend au-delà d'un bord (54; 64,67; 74,77; 84,87; 94,97; 105,108; 115,118; 125,128; 134,137; 145,148) de ladite surface radiale (11; 21; 51; 71; 81; 91; 101; 112; 121; 131; 141) de ladite sonotrode (10; 20; 50; 70; 80; 90; 100; 110; 120; 130; 140).

8. Sonotrode rotative (10; 20; 70; 80) selon l'une des revendications précédentes, dans laquelle un goujon (15A,16A; 27A,28A; 73B,76B; 83C, 86C) se projette depuis, et est concentrique avec, ladite extrémité et/ou ledit moyeu (17,18; 25; 73,76; 83,86).

9. Sonotrode rotative (10; 20; 70; 80) selon la revendication 8, dans laquelle ledit goujon (15A,16A; 27A,28A; 73B,76B; 83C,86C) est fileté.

10. Sonotrode rotative (10; 20; 70; 80) selon la revendication 8 ou 9, dans laquelle ledit goujon (15A,16A; 27A,28A; 73B,76B; 83C,86C) est d'une seule pièce avec ladite sonotrode (10; 20; 70; 80).

11. Sonotrode rotative (10; 20; 30; 40; 50; 60; 70; 80; 90; 4000) selon l'une des revendications précédentes, dans laquelle ladite surface radiale (11; 21; 31; 41; 51; 61; 71; 81; 91; 4002) a un profil linéaire.

12. Sonotrode rotative (100; 110; 120; 130; 140) selon l'une des revendications 1 à 10, dans laquelle ladite surface radiale (101; 112; 121; 131; 141) a un profil non linéaire.

13. Sonotrode rotative (100) selon la revendication 12, dans laquelle ladite surface radiale (101) a un plateau central surélevé (102).

14. Sonotrode rotative (110) selon la revendication 12, dans laquelle ladite surface radiale (112) a un plateau surélevé (111) situé au niveau de l'une de ses extrémités (118).

15. Sonotrode rotative (10; 20; 30; 40; 50; 60; 70; 80; 90; 100; 110; 120; 130; 140; 4000) selon l'une des revendications précédentes, dans laquelle lesdits diamètre, largeur et épaisseur de la sonotrode et la configuration des surfaces d'extrémité sont choisis de telle sorte que le rapport moyen de l'amplitude radiale d'un côté à l'autre de la surface au contact du matériau à travailler à l'amplitude longitudinale est d'au moins environ 1 et la valeur moyenne de l'amplitude radiale d'un côté à l'autre de la surface radiale en contact du matériau à travailler par watt de puissance d'excitation est d'au moins environ 0,14 µm.

16. Sonotrode rotative (4000) selon l'une des revendications précédentes, dans laquelle ladite première extrémité (4003) et ladite seconde extrémité (4004) ont une configuration sensiblement concave qui comprend une portion plate circulaire centrale (4005) concentrique audit axe de rotation (4001) et une portion généralement convexe (4006) allant de ladite portion plate (4005) vers ladite surface radiale (4002), et dans laquelle :
(a) le diamètre de ladite portion plate (4005) est d'au moins environ 20 % du diamètre de la sonotrode (4000) ;
(b) ladite portion généralement convexe (4006) est une surface courbe ayant une symétrie axiale et un profil curviligne en coupe transversale prise au travers dudit axe de rotation (4001), profil qui s'étend dans une zone triangulaire définie par (i) une ligne droite conduisant de la limite extérieure (4012) de ladite portion plate (4005) vers le bord (4013) de ladite surface radiale (4002) ; (ii) une ligne droite parallèle à l'axe de rotation (4001) qui commence au niveau de la limite extérieure (4012) de la portion plate (4005) et s'étend vers l'extérieur à l'écart de la sonotrode (4000) ; et (iii) une ligne droite qui est perpendiculaire à l'axe de rotation (4001) et qui s'étend depuis le bord (4013) de ladite surface radiale (4002) vers ladite ligne droite parallèle à l'axe de rotation (4001) ;
(c) ladite sonotrode (4000) a une variance qui n'excède pas environ 20 % d'un côté à l'autre de ladite surface radiale (4002) ; et
(d) le rapport de l'amplitude radiale moyenne a l'amplitude longitudinale est d'au moins 1.

17. Sonotrode rotative (4000) selon la revendication 16, dans laquelle la largeur de ladite sonotrode (4000) au niveau de ladite surface radiale (4002) est comprise entre 5 et 13 cm.

18. Utilisation de la sonotrode rotative (10; 20; 30; 40; 50; 60; 70; 80; 90; 100; 110; 120; 130; 140; 4000) selon l'une des revendications précédentes, pour la liaison ultrasonique de deux ou plusieurs articles ensemble ou pour traiter autrement un matériau.

19. Utilisation de la sonotrode rotative (10; 20; 30; 40; 50; 60; 70; 80; 90; 100; 110; 120; 130; 140; 4000) selon la revendication 18, dans laquelle un moyen vibrateur (1800) prévu pour fournir une source de vibrations mécaniques longitudinales est couplé à l'une ou aux deux extrémités (12,13; 22,23; 32,35; 42,47; 52,55; 62,65; 72,75; 82,85; 92,95; 103,106; 113,116; 123,126; 132,135; 143,146; 4003,4004) de la sonotrode (10; 20; 30; 40; 50; 60; 70; 80; 90; 100; 110; 120; 130; 140; 4000), facultativement via un guide d'onde allongé, un moyen d'entraînement pour faire tourner ladite sonotrode rotative et/ou une enclume rotative étant prévue à proximité immédiate de ladite sonotrode (10; 20; 30; 40; 50; 60; 70; 80; 90; 100; 110; 120; 130; 140; 4000).

20. Appareil pour lier par ultrasons deux ou plusieurs matériaux ensemble, ou pour traiter un matériau d'une autre manière par ultrasons, lequel appareil comprend une sonotrode rotative (10; 20; 30; 40; 50; 60; 70; 80; 90; 100; 110; 120; 130; 140; 4000), un moyen vibrateur (1800) pour fournir une source de vibrations mécaniques longitudinales couplé à une ou aux deux extrémités (12,13; 22,23; 32,35; 42,47; 52,55; 62,65; 72,75; 82,85; 92,95; 103,106; 113,116; 123,126; 132,135; 143,146, 4003,4004) de ladite sonotrode (10; 20; 30; 40; 50; 60; 70; 80; 90; 100; 110; 120; 130; 140; 4000), éventuellement via un guide d'onde allongé, un moyen support pour ladite sonotrode rotative, un moyen d'entraînement pour faire tourner ladite sonotrode rotative, et une enclume rotative à proximité immédiate de ladite sonotrode rotative, caractérisé en ce que la sonotrode rotative est une sonotrode selon l'une quelconque des revendications 1 à 17.
